(19) Europäisches Patentamt
European Patent Office
Office européen des brevets

(11) EP 4 509 887 A1

(12) **EUROPEAN PATENT APPLICATION**
published in accordance with Art. 153(4) EPC

(43) Date of publication:
**19.02.2025 Bulletin 2025/08**

(21) Application number: **23788435.8**

(22) Date of filing: **17.04.2023**

(51) International Patent Classification (IPC):
***G02B 1/14*** (2015.01) ***B32B 7/023*** (2019.01)
***B32B 23/08*** (2006.01) ***B32B 27/00*** (2006.01)
***B60J 1/00*** (2006.01) ***B60J 1/02*** (2006.01)
***C03C 17/32*** (2006.01) ***C03C 27/12*** (2006.01)
***G02B 5/08*** (2006.01) ***G02B 5/26*** (2006.01)
***G02B 5/30*** (2006.01)

(52) Cooperative Patent Classification (CPC):
**B32B 7/023; B32B 17/00; B32B 23/08; B32B 27/00; B60J 1/00; B60J 1/02; C03C 17/32; G02B 1/14; G02B 5/08; G02B 5/26; G02B 5/30**

(86) International application number:
**PCT/JP2023/015360**

(87) International publication number:
**WO 2023/200018 (19.10.2023 Gazette 2023/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.04.2022 JP 2022067813**
**02.09.2022 JP 2022140136**
**10.01.2023 JP 2023001774**

(71) Applicant: **FUJIFILM Corporation**
**Tokyo 106-8620 (JP)**

(72) Inventors:
- **UEKI Keigo**
  **Minamiashigara-shi, Kanagawa 250-0193 (JP)**
- **ANZAI Akihiro**
  **Minamiashigara-shi, Kanagawa 250-0193 (JP)**
- **WATANABE Shinya**
  **Minamiashigara-shi, Kanagawa 250-0193 (JP)**

(74) Representative: **Klunker IP**
**Patentanwälte PartG mbB**
**Destouchesstraße 68**
**80796 München (DE)**

(54) **REFLECTIVE FILM, MULTILAYER BODY, WINDSHIELD GLASS, AND IMAGE DISPLAY SYSTEM**

(57) The present invention provides a reflection film which has excellent curved surface followability during bonding to an object to be bonded, exhibits excellent abrasion resistance after bonding, and further has excellent reflection characteristics; a windshield glass; a laminate; and an image display system. The reflection film of the present invention includes, in the following order, a pressure-sensitive adhesive layer, a reflective layer reflecting light in a wavelength-selective manner, and a hardcoat layer.

FIG. 1

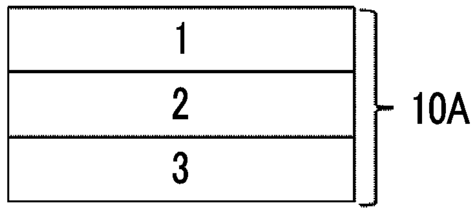


EP 4 509 887 A1

## Description

## BACKGROUND OF THE INVENTION

1. Field of the Invention

The present invention relates to a reflection film, a laminate, a windshield glass, and an image display system.

2. Description of the Related Art

By incorporating a reflection film into laminated glass used for a windshield of an automobile or the like, the reflection film (laminated glass) can be used as a member for displaying a projection image of a head-up display system.

For example, WO2016/052367A1 discloses that a reflection film including a retardation layer and a plurality of cholesteric liquid crystal layers is used as a member for displaying a projection image of a head-up display system. In general, laminated glass for an automobile has an interlayer film between two glass plates. WO2016/052367A1 discloses that the reflection film is provided in the interlayer film of a windshield glass having a laminated glass structure.

## SUMMARY OF THE INVENTION

In a configuration in which the reflection film is provided in the interlayer film, as disclosed in WO2016/052367A1, there is a problem of double images being generated due to reflection from a surface of the glass plate and reflection from a surface of the reflection film.

On the other hand, the above-described problem can be solved by providing the reflection film to the outside of the laminated glass, but since the reflection film itself is located on the outside of the laminated glass, the reflection film itself is required to have excellent abrasion resistance.

In addition, it is required that the reflection film can conform to shapes such as a curved surface in a case of providing the reflection film. Hereinafter, a property of following the curved surface as described above is referred to as curved surface followability.

Furthermore, from the viewpoint of function as the member for displaying a projection image, the reflection film itself is required to have excellent reflection characteristics.

An object of the present invention is to provide a reflection film which has excellent curved surface followability during bonding to an object to be bonded, exhibits excellent abrasion resistance after bonding, and further has excellent reflection characteristics.

Another object of the present invention is to provide a windshield glass, a laminate, and an image display system.

The present invention provides the following.

(1) A reflection film comprising, in the following order:

a pressure-sensitive adhesive layer;
a reflective layer reflecting light in a wavelength-selective manner; and
a hardcoat layer.

(2) The reflection film according to (1),
in which a thickness of the pressure-sensitive adhesive layer is 1 to 30 μm.
(3) The reflection film according to (1) or (2),
in which a thickness of the hardcoat layer is 1 μm or more.
(4) The reflection film according to any one of (1) to (3),

in which the hardcoat layer is a layer formed of a curable composition for forming a hardcoat layer, containing a cationically polymerizable compound, and
a content of the cationically polymerizable compound is 5% by mass or more with respect to a total solid content of the curable composition for forming a hardcoat layer.

(5) The reflection film according to any one of (1) to (4),

in which the hardcoat layer is a layer formed of a curable composition for forming a hardcoat layer, containing inorganic particles, and
a content of the inorganic particles is 0.5% by mass or more with respect to a total solid content of the curable

composition for forming a hardcoat layer.

(6) The reflection film according to (5),
in which an average primary particle diameter of the inorganic particles is 40 nm or more.
(7) The reflection film according to (5) or (6),
in which an average primary particle diameter of the inorganic particles is 40 nm or more and less than 200 nm.
(8) The reflection film according to any one of (1) to (7),
in which a surface roughness Sa1 of a component with a wavelength of 2.5 μm or less on a surface of the hardcoat layer on a side opposite to the reflective layer is 0.30 nm or more.
(9) The reflection film according to any one of (1) to (8),
in which a surface roughness Sa2 of a component with a wavelength of 10 μm or more on a surface of the hardcoat layer on a side opposite to the reflective layer is 2.0 nm or less.
(10) The reflection film according to any one of (1) to (9), further comprising:
a transparent substrate.
(11) The reflection film according to (10),
in which the transparent substrate is a cellulose acylate film.
(12) The reflection film according to any one of (1) to (11), further comprising:
a retardation layer.
(13) The reflection film according to (12), further comprising:

a polarization conversion layer,
in which the retardation layer, the reflective layer, and the polarization conversion layer are arranged in this order.

(14) The reflection film according to any one of (1) to (13), further comprising:
a matte layer between the pressure-sensitive adhesive layer and the reflective layer.
(15) The reflection film according to (14),
in which a surface roughness Sa1 of a component with a wavelength of 2.5 μm or less on a surface of the matte layer on a side opposite to the reflective layer is 0.30 nm or more.
(16) A laminate comprising:

the reflection film according to any one of (1) to (15); and
a protective film laminated on a surface of the pressure-sensitive adhesive layer in the reflection film on a side opposite to the reflective layer.

(17) The laminate according to (16),
in which a difference in thermal contraction rate between the reflection film and the protective film at 140°C is less than 1.5%.
(18) A windshield glass comprising:

a glass plate; and
the reflection film according to any one of (1) to (15),
in which the glass plate and the reflection film are bonded to each other through the pressure-sensitive adhesive layer.

(19) An image display system comprising:

the windshield glass according to (18); and
a projector irradiating a projection image light onto the windshield glass on a side of the reflection film.

(20) A reflection film comprising, in the following order:

a hardcoat layer;
a reflective layer reflecting light in a wavelength-selective manner; and
a heat seal layer laminated on one side of the reflective layer,
in which the reflective layer is formed of a composition containing a polymerizable liquid crystal compound, and the heat seal layer contains a thermoplastic resin or an elastomer.

(21) The reflection film according to (20),

in which the heat seal layer is a layer formed of a composition containing a polymerization initiator.
(22) The reflection film according to (21),
in which the composition further contains a polymerizable compound.
(23) The reflection film according to (22),

in which the polymerizable liquid crystal compound has an ethylenically unsaturated polymerizable group, and the polymerizable compound has an ethylenically unsaturated polymerizable group.

(24) A reflection film comprising, in the following order:

a hardcoat layer;
a reflective layer reflecting light in a wavelength-selective manner;
a polarization conversion layer; and
a heat seal layer laminated on one side of the polarization conversion layer,
in which the polarization conversion layer is formed of a composition containing a polymerizable liquid crystal compound, and
the heat seal layer contains a thermoplastic resin or an elastomer.

(25) The reflection film according to (24),
in which the heat seal layer is a layer formed of a composition containing a polymerization initiator.
(26) The reflection film according to (25),
in which the composition further contains a polymerizable compound.
(27) The reflection film according to any one of (22), (23), and (26),
in which a content of the polymerizable compound is 5% to 80% by mass with respect to a solid content of the composition.
(28) The reflection film according to any one of (22), (23), and (26),
in which an I/O ratio of the polymerizable compound is 0.4 or more.
(29) The reflection film according to any one of (20) to (28),
in which a moisture content of the heat seal layer at 25°C and 60 %RH is 2.0% or less.
(30) A windshield glass comprising:

a glass plate; and
the reflection film according to any one of (20) to (28),
in which the glass plate and the reflection film are bonded to each other through the heat seal layer.

(31) An image display system comprising:

the windshield glass according to (30); and
a projector irradiating a projection image light onto the windshield glass on a side of the reflection film.

According to the present invention, it is possible to provide a reflection film which has excellent curved surface followability during bonding to an object to be bonded, exhibits excellent abrasion resistance after bonding, and further has excellent reflection characteristics.
In addition, according to the present invention, it is possible to provide a windshield glass, a laminate, and an image display system.

## BRIEF DESCRIPTION OF THE DRAWINGS

Fig. 1 is a schematic diagram showing an example of a reflection film according to an embodiment of the present invention.
Fig. 2 is a schematic diagram showing an example of the reflection film according to the embodiment of the present invention.
Fig. 3 is a schematic diagram showing an example of the reflection film according to the embodiment of the present invention.
Fig. 4 is a schematic diagram showing an example of the reflection film according to the embodiment of the present invention.

Fig. 5 is a schematic diagram showing an example of a windshield glass including the reflection film according to the embodiment of the present invention.

Fig. 6 is a schematic diagram showing an example of the reflection film according to the embodiment of the present invention.

Fig. 7 is a schematic diagram showing an example of the reflection film according to the embodiment of the present invention.

Fig. 8 is a schematic diagram showing an example of a windshield glass including the reflection film according to the embodiment of the present invention.

## DESCRIPTION OF THE PREFERRED EMBODIMENTS

Hereinafter, the reflection film including a pressure-sensitive adhesive layer, a reflective layer, and a hardcoat layer (HC layer) in this order, the windshield glass, the laminate, and the image display system according to the present invention will be described in detail based on suitable embodiments shown in the accompanying drawings.

The drawings described below are exemplary for explaining the present invention, and the present invention is not limited to the drawings illustrated below.

In the following, "to" indicating the numerical range includes numerical values described on both sides. For example, in a case where $\varepsilon_1$ is a numerical value $\alpha_1$ to a numerical value $\beta_1$, the range of $\varepsilon_1$ is a range including the numerical value $\alpha_1$ and the numerical value $\beta_1$, and it is expressed as $\alpha_1 \leq \varepsilon_1 \leq \beta 1$ in mathematical symbols.

Unless specified otherwise, the meaning of an angle such as "an angle represented by a specific numerical value", "parallel", "perpendicular", or "orthogonal" includes a case where an error range is generally allowable in the technical field. More specifically, in the present specification, parallel, vertical, and orthogonal mean a range of parallel $\pm$ 5°, a range of vertical $\pm$ 5°, and a range of orthogonal $\pm$ 5°, respectively.

In addition, "same" includes an error range generally tolerated in the art, and "entire surface" and the like also include error ranges generally tolerated in the art.

In a case where "selective" is used regarding circular polarization, the light amount of any one of a dextrorotatory circularly polarized light component or a levorotatory circularly polarized light component is more than the light amount of the other circularly polarized light component. Specifically, in the case of "selective", the circular polarization degree of light is preferably 0.3 or more, more preferably 0.6 or more, and still more preferably 0.8 or more. It is even more preferable that the circular polarization degree of light is substantially 1.0. Here, in a case where the intensity of a dextrorotatory circularly polarized light component of light is denoted by $I_R$ and the intensity of a levorotatory circularly polarized light component of light is denoted by $I_L$, a circular polarization degree is a value represented by $|I_R - I_L|/(I_R + I_L)$.

"sense" regarding the circularly polarized light means dextrorotatory circularly polarized light or levorotatory circularly polarized light. The sense of circularly polarized light is defined such that, in a case where light is viewed as it proceeds toward a viewer, the sense is dextrorotatory circularly polarized light in a case where the distal end of the electric field vector rotates clockwise as time increases, and the sense is levorotatory circularly polarized light in a case where it rotates counterclockwise.

"sense" may be used for a twisted direction of a helix of a cholesteric liquid crystal. In a case where a twisted direction (sense) of a helix of a cholesteric liquid crystal is right, the cholesteric liquid crystal reflects dextrorotatory circularly polarized light and transmits levorotatory circularly polarized light; and in a case where the sense is left, the cholesteric liquid crystal reflects levorotatory circularly polarized light and transmits dextrorotatory circularly polarized light.

"light" means light of visible light and natural light (non-polarized light), unless otherwise specified. The visible light is light at a wavelength which is visible to the human eyes, among electromagnetic waves, and is normally light in a wavelength range of 380 to 780 nm. Invisible light is light in a wavelength range of less than 380 nm or in a wavelength range of more than 780 nm.

Although light is not limited to this, among the visible light, the light in a wavelength range of 420 to 490 nm is blue (B) light, the light in a wavelength range of 495 to 570 nm is green (G) light, and the light in a wavelength range of 620 to 750 nm is red (R) light.

"visible light transmittance" is a visible light transmittance of an A light source defined in JIS (Japanese Industrial Standards) R 3212:2015 (Test methods of safety glazing materials for road vehicles). That is, the transmittance is obtained by measuring a transmittance of each wavelength in a range of 380 to 780 nm with a spectrophotometer using the A light source, multiplying a wavelength distribution of International Commission on Illumination (CIE) photopic spectral luminous efficiency function and pre-calculated weighting functions obtained from an interval wavelength by the transmittance at each wavelength, and performing a weighted average.

In a case of simply referring to "reflected light" or "transmitted light", the "reflected light" and "transmitted light" include meanings of "scattered light" and "diffracted light", respectively.

A polarization state of light at each wavelength can be measured with a spectral radiance meter or a spectrometer

on which a circular polarization plate is mounted. In this case, the intensity of light measured through a dextrorotatory circular polarization plate corresponds to $I_R$, and the intensity of light measured through a levorotatory circular polarization plate corresponds to $I_L$. In addition, the polarization state can also be measured by attaching the circular polarization plate to an illuminance meter or an optical spectrometer. The amount of dextrorotatory circularly polarized light is measured by attaching a dextrorotatory circular polarization transmission plate thereto, the amount of levorotatory circularly polarized light is measured by attaching a levorotatory circular polarization transmission plate thereto, and thus, a ratio therebetween can be measured.

"p-polarized light" means polarized light that vibrates in a direction parallel to a surface into which light is incident. The incident surface means a surface that is perpendicular to a reflecting surface (such as a surface of windshield glass) and that includes incident rays and reflected rays. A vibration surface of an electric field vector of the p-polarized light is parallel to the incident surface.

A front phase difference is a value measured with AxoScan manufactured by Axometrics, Inc. Unless otherwise specified, a measurement wavelength is set to 550 nm. Light having wavelengths in a visible light wavelength range is allowed to be incident into the normal direction of a film and measured to obtain a value by using KOBRA 21ADH or WR (manufactured by Oji Scientific Instruments), and the value can also be used as the front phase difference. In a case of selecting a measurement wavelength, a wavelength selective filter can be manually exchanged, or a measurement value can be converted using a program or the like to perform the measurement.

"projection image" means an image based on projection of light from a projector to be used, which is not a scenery viewed from the driver's position such as the driver's field. The projection image is observed as a virtual image which is observed by an observer as the projection image is floated over a projection image display portion of a windshield glass. "screen image" means an image displayed on a drawing device of the projector or an image drawn on an intermediate image screen or the like by the drawing device. In contrast to a virtual image, the screen image is a real image.

Both the screen image and the projection image may be monochrome images, may be multicolor images with two or more colors, or may be full color images.

The reflection film according to the embodiment of the present invention includes a pressure-sensitive adhesive layer, a reflective layer reflecting light in a wavelength-selective manner (hereinafter, also simply referred to as "reflective layer"), and a hardcoat layer.

In addition, another configuration of the reflection film according to the embodiment of the present invention is characterized in that the reflection film includes a hardcoat layer, a reflective layer reflecting light in a wavelength-selective manner, and a heat seal layer laminated on one side of the reflective layer in this order.

In addition, still another configuration of the reflection film according to the embodiment of the present invention is characterized in that the reflection film includes a hardcoat layer, a reflective layer reflecting light in a wavelength-selective manner, a polarization conversion layer, and a heat seal layer laminated on one side of the polarization conversion layer in this order.

Fig. 1 shows an example of the reflection film according to the embodiment of the present invention. A reflection film 10A shown in Fig. 1 includes a pressure-sensitive adhesive layer 1, a reflective layer 2, and a hardcoat layer (hereinafter, also referred to as an HC layer) 3 in this order.

Fig. 6 shows another example of the reflection film according to the embodiment of the present invention. A reflection film 10E shown in Fig. 6 includes a heat seal layer 12, a reflective layer 2, and an HC layer 3 in this order.

Fig. 7 shows still another example of the reflection film according to the embodiment of the present invention. A reflection film 10F shown in Fig. 7 includes a heat seal layer 12, a polarization conversion layer 5, a reflective layer 2, and an HC layer 3 in this order.

The reflection film 10F may include a retardation layer and a transparent substrate, which will be described later.

In a case where such a reflection film 10F is incorporated into a windshield glass, as shown in Fig. 8 as an example, the polarization conversion layer 5 is disposed on a side of an in-vehicle side glass plate 11.

A windshield glass shown in Fig. 8 includes the in-vehicle side glass plate 11, a heat seal layer 12, a polarization conversion layer 5, a reflective layer 2, a retardation layer 6, a transparent substrate 7, and an HC layer 3 in this order.

Hereinafter, each layer used in the reflection film according to the embodiment of the present invention will be described.

<Pressure-sensitive adhesive layer>

The reflection film according to the embodiment of the present invention includes a pressure-sensitive adhesive layer for attaching the film to the outside of the laminated glass. The reflection film can be bonded to the windshield by the pressure-sensitive adhesive layer.

A material of the pressure-sensitive adhesive layer is not particularly limited as long as, in a case where the reflection film according to the embodiment of the present invention is applied to a windshield, the material has transparency which ensures visibility of a display content and can adhere the reflection film to the windshield, and the

material may be made of a resin or an elastomer (including oil-extended rubber).

Examples of the above-described resin include a 1,2-polybutadiene resin, an ethylene-vinyl acetate copolymer (abbreviated as "EVA"; typically containing 3% by mass or more of a vinyl acetate constitutional unit), polyolefin resins such as polyethylene, a polyvinyl chloride resin, a polystyrene resin, a vinyl ester resin (excluding EVA), a saturated polyester resin, a polyamide resin, a fluororesin (such as polyvinylidene fluoride), a polycarbonate resin, a polyacetal resin, a urethane resin, an epoxy resin, a (meth)acrylate resin (also known as (meth)acrylic resin, referring to a (meth)acrylic acid ester resin and the like), an unsaturated polyester resin, a silicone resin, and modified resins of these resins.

Examples of the urethane resin include a urethane-modified polyester resin and a urethane resin.

Examples of the elastomer include a conjugated diene block (co)polymer, an acrylic-based block (co)polymer, a styrene-based block (co)polymer, a block copolymer of an aromatic vinyl compound and a conjugated diene, a hydrogenated product of a conjugated diene block (co)polymer, a hydrogenated product of a block copolymer of an aromatic vinyl compound and a conjugated diene, an ethylene-$\alpha$-olefin-based copolymer, a polar group-modified olefin-based copolymer, an elastomer of a polar group-modified olefin-based copolymer and a metal ion and/or a metal compound, nitrile-based rubber (for example, acrylonitrile-butadiene rubber), butyl rubber, acrylic rubber, a thermoplastic polyolefin elastomer (TPO), a thermoplastic polyurethane elastomer (TPU), a thermoplastic polyester elastomer (TPEE), a thermoplastic polyamide elastomer (TPAE), a diene-based elastomer (1,2-polybutadiene and the like), a silicone-based elastomer, and a fluorine-based elastomer.

From the viewpoint of balance between solubility in a solvent and storage elastic modulus, a weight-average molecular weight of the resin or the elastomer is preferably 10,000 to 1,000,000 and more preferably 50,000 to 500,000.

In a case where the pressure-sensitive adhesive layer contains these resins or elastomers, only these resins or elastomers can be used as a constituent material of the pressure-sensitive adhesive layer. In addition, additives such as a plasticizer, a softening agent, a lubricant, a crosslinking agent, a crosslinking aid, a photosensitizer, an antioxidant, an anti-aging agent, a heat stabilizer, a flame retardant, an antibacterial agent, an antifungal agent, a weathering agent, an ultraviolet absorber, a viscosity imparting agent, a nucleating agent, a pigment, a dye, an organic filler, an inorganic filler, a silane coupling agent, and a titanium coupling agent, polymerizable group-containing compounds, or other polymers may also be contained as a constituent material of the pressure-sensitive adhesive layer. That is, the pressure-sensitive adhesive layer may be formed of a resin composition or a composition containing an elastomer.

The pressure sensitive adhesive may be a commercially available pressure-sensitive adhesive, and examples thereof include SK Dyne 2057, SK Dyne 2094, SK Dyne 2147, SK Dyne 1811L, SK Dyne 1478, SK Dyne 1442, SK Dyne 1435, and SK Dyne 1415 (all of which are manufactured by Soken Chemical & Engineering Co., Ltd.); NCF-N632, NCF-D692, NCF-F619, MO-T015, and MO-5115XV (all of which are manufactured by LINTEC Corporation); TD06, MK64, TI14, ME57, TX48, MJ63, MG70, and MF58 (all of which are manufactured by TOMOEGAWA CORPORATION); PANACLEAN PD-S1 and PANACLEAN PD-R5 (both of which are manufactured by PANAC Corporation); MHM-FWD, MHM-FWV, MHM-UVC, and MHM-SI (all of which are manufactured by NEION Film Coatings Corp.); and OLIVINE EG-655 and OLIVINE BPS5896 (all of which are manufactured by Toyo Ink Co., Ltd.) (all are trade names).

A thickness of the pressure-sensitive adhesive layer is preferably 100 $\mu$m or less, more preferably 50 $\mu$m or less, still more preferably 1 to 30 $\mu$m, and particularly preferably 5 to 20 $\mu$m. In a case where the pressure-sensitive adhesive layer is within the above-described range, the scratch resistance is more excellent, the adhesiveness between the windshield and the reflection film is improved, and the curved surface followability is more excellent.

From the viewpoint of scratch resistance, a storage elastic modulus E' of the pressure-sensitive adhesive layer at 25°C and a frequency of 1 Hz is preferably more than 1 kPa, and from the viewpoint of bondability to the windshield, the storage elastic modulus E' is preferably 4 GPa or less. The above-described storage elastic modulus E' is more preferably more than 1 kPa and 1 GPa or less, and still more preferably more than 1 kPa and 100 MPa or less.

A maximal value of a loss tangent (tan$\delta$) of the pressure-sensitive adhesive layer at a frequency of 1 Hz is preferably in a temperature range of -80°C to 40°C, and more preferably in a temperature range of -60°C to 40°C. By setting tan $\delta$ within the above-described range, both the bondability to the windshield and the durability can be achieved.

In the present invention, the storage elastic modulus of the pressure-sensitive adhesive layer at 25°C and the tan $\delta$ of the pressure-sensitive adhesive layer at a frequency of 1 Hz are determined as follows.

(Sample production method)

The pressure-sensitive adhesive layer is dissolved in a solvent or melted to obtain a coating liquid, and the obtained coating liquid is applied onto a release-treated surface of a release polyethylene terephthalate (PET) sheet such that a thickness after drying is 40 $\mu$m. Thereafter, the coating liquid is dried, and a test piece of the pressure-sensitive adhesive layer is obtained by peeling off the pressure-sensitive adhesive layer from the release PET sheet.

(Measuring method)

Using a dynamic viscoelasticity measurement device (DVA-225 manufactured by IT Measurement and Control Co., Ltd.), the measurement is performed on the above-described test piece, which is preliminarily moisture-conditioned for 2 hours or longer in an atmosphere at a temperature of 25°C and a relative humidity of 60%, in "step temperature rise/frequency dispersion" mode under the following conditions. Thereafter, a master curve of tan δ, a storage elastic modulus, and a loss elastic modulus with respect to a frequency at 25°C are obtained by editing the "master curve". A maximal value of tan δ and a frequency exhibiting the maximum value are obtained from the obtained master curve.

Sample: 5 mm × 20 mm
Grip distance: 20 mm
Setting distortion: 0.10%
Measuring temperature: -100°C to 40°C
Temperature rising condition: 2 °C/min

(Method for forming pressure-sensitive adhesive layer)

A method for forming the pressure-sensitive adhesive layer is not particularly limited, and examples thereof include a coating method, a casting method (a solventless casting method and a solvent casting method), a pressing method, an extrusion method, an injection molding method, a casting method, and an inflation method. Specifically, a liquid product obtained by dissolving or dispersing a constituent material of the above-described pressure-sensitive adhesive layer in a solvent, or a molten liquid of a component constituting the constituent material of the above-described pressure-sensitive adhesive layer is prepared. Next, the liquid product or the molten liquid is applied, and the solvent or the like is removed as necessary, thereby producing the reflection film including the pressure-sensitive adhesive layer.
In addition, a sheet having the pressure-sensitive adhesive layer can be formed by applying a constituent material of the pressure-sensitive adhesive layer to the release-treated surface of the release sheet, which has been subjected to the peeling treatment in the same manner as described above, and drying the release sheet. The pressure-sensitive adhesive layer can be formed on the reflective layer by bonding the pressure-sensitive adhesive layer of the sheet to the reflective layer.
In a case where the reflective layer is disposed on the transparent substrate, the reflection film can be formed by bonding the pressure-sensitive adhesive layer of the above-described sheet to the side of the transparent substrate opposite to the reflective layer.

<Heat seal layer>

The heat seal layer is a layer for physically bonding the reflection film and a glass substrate to each other.
The heat seal layer contains a thermoplastic resin or an elastomer.
As the thermoplastic resin, a resin having favorable affinity and adhesiveness with the glass substrate is preferable and examples thereof include a 1,2-polybutadiene resin, an ethylene-vinyl acetate copolymer (abbreviated as "EVA"; typically containing 3% by mass or more of a vinyl acetate constitutional unit), polyolefin resins such as polyethylene, a polyvinyl chloride resin, a polystyrene resin, a vinyl ester resin (excluding EVA), a saturated polyester resin, a polyamide resin, a fluororesin (such as polyvinylidene fluoride), a polycarbonate resin, a polyacetal resin, a urethane resin, an epoxy resin, a (meth)acrylate resin (also known as (meth)acrylic resin, referring to a (meth)acrylic acid ester resin and the like), an unsaturated polyester resin, a silicone resin, and modified resins of these resins. Examples of the urethane resin include a urethane-modified polyester resin and a urethane resin.
As the thermoplastic resin, polyvinyl butyral or ethylene-vinyl acetate copolymer is preferable.
The polyvinyl butyral can be obtained by acetalizing polyvinyl alcohol with butyl aldehyde.
An acetalization degree of the polyvinyl butyral is not particularly limited, but is preferably 40% or more and more preferably 60% or more. The upper limit thereof is not particularly limited, but is preferably 85% or less and more preferably 75% or less.
The polyvinyl alcohol used in the synthesis of the polyvinyl butyral is usually obtained by saponifying polyvinyl acetate, and polyvinyl alcohol with a saponification degree of 80 to 99.8 mol% is generally used.
In addition, a degree of polymerization of the above-described polyvinyl alcohol is preferably 200 to 3,000.
Examples of the elastomer include a conjugated diene block (co)polymer, an acrylic-based block (co)polymer, a styrene-based block (co)polymer, a block copolymer of an aromatic vinyl compound and a conjugated diene, a hydrogenated product of a conjugated diene block (co)polymer, a hydrogenated product of a block copolymer of an aromatic vinyl compound and a conjugated diene, an ethylene-α-olefin-based copolymer, a polar group-modified olefin-based copolymer, an elastomer of a polar group-modified olefin-based copolymer and a metal ion and/or a metal compound,

acrylonitrile-butadiene rubber such as nitrile-based rubber, butyl rubber, acrylic rubber, a thermoplastic polyolefin elastomer (TPO), a thermoplastic polyurethane elastomer (TPU), a thermoplastic polyester elastomer (TPEE), a thermoplastic polyamide elastomer (TPAE), a diene-based elastomer (1,2-polybutadiene and the like), a silicone-based elastomer, and a fluorine-based elastomer.

The thermoplastic resin or the elastomer may be synthesized by a known method, or a commercially available product thereof may be used. Examples of commercially available elastomers include KURARITY LA1114, KURARITY LA2140, KURARITY LA2250, KURARITY LA2330, KURARITY LA4285, HYBRAR 5127, HYBRAR 7311F, SEPTON 2104, and SEPTON 2063 (manufactured by Kuraray Co., Ltd., trade names). As the elastomer, an acrylic-based block (co) polymer or a styrene-based block (co)polymer is preferable.

From the viewpoint of balance between solubility in a solvent and storage elastic modulus, a weight-average molecular weight of the thermoplastic resin or the elastomer is preferably 10,000 to 1,000,000 and more preferably 50,000 to 500,000.

The heat seal layer is preferably formed of a composition containing a polymerizable compound (composition for forming a heat seal layer) for chemical bonding with the reflective layer or the polarization conversion layer. The polymerizable compound is preferably a compound capable of being chemically bonded to the polymerizable liquid crystal compound used for forming the reflective layer or the polarization conversion layer. For example, in a case where the polymerizable liquid crystal compound has an ethylenically unsaturated polymerizable group, it is preferable that the polymerizable compound also has an ethylenically unsaturated polymerizable group.

Examples of the ethylenically unsaturated polymerizable group-containing compound include the following compounds. However, the present invention is not limited to the following exemplary compounds.

Examples thereof include bifunctional (meth)acrylate compounds such as polyethylene glycol 200 di(meth) acrylate, polyethylene glycol 300 di(meth)acrylate, polyethylene glycol 400 di(meth)acrylate, polyethylene glycol 600 di(meth)acrylate, triethylene glycol di(meth)acrylate, epichlorohydrin-modified ethylene glycol di(meth)acrylate (as a commercially available product, for example, Denacol DA-811 manufactured by Nagase & Co., Ltd.), polypropylene glycol 200 di(meth)acrylate, polypropylene glycol 400 di(meth)acrylate, polypropylene glycol 700 di(meth)acrylate, ethylene oxide (EO)/propylene oxide (PO) block polyether di(meth)acrylate (as a commercially available product, for example, BLEMMER PET series manufactured by NOF CORPORATION), dipropylene glycol di(meth)acrylate, bisphenol A EO-added di(meth)acrylate (as a commercially available product, for example, M-210 manufactured by Toagosei Co., Ltd., NK ESTER A-BPE-20 manufactured by Shin-Nakamura Chemical Co., Ltd., and the like), hydrogenated bisphenol A EO-added di(meth)acrylate (NK ESTER A-HPE-4 manufactured by Shin-Nakamura Chemical Co., Ltd., and the like), bisphenol A PO-added di(meth)acrylate (as a commercially available product, for example, light acrylate BP-4PA manufactured by KYOEISHA CHEMICAL Co., Ltd.), bisphenol A epichlorohydrin-added di(meth)acrylate (as a commercially available product, for example, Evecryl 150 manufactured by Daicel UCB), bisphenol A EO/PO-added di(meth) acrylate (as a commercially available product, for example, BP-023-PE manufactured by Toho Chemical Industry Co., Ltd.), bisphenol F EO-added di(meth)acrylate (as a commercially available product, for example, Aronix M-208 manufactured by Toagosei Co., Ltd.), 1,6-hexanediol di(meth)acrylate and epichlorohydrin-modified products thereof, neopentyl glycol di(meth)acrylate, hydroxypivalic acid neopentyl glycol di(meth)acrylate, and caprolactone-modified products thereof, 1,4-butanediol di(meth)acrylate, 1,9-nonanediol di(meth)acrylate, trimethylolpropane di(meth)acrylate, tricyclodecane dimethanol di(meth)acrylate, pentaerythritol di(meth)acrylate monostearate, trimethylolpropane acrylic acid/-benzoic acid ester, and isocyanuric acid EO-modified di(meth)acrylate (as a commercially available product, for example, Aronix M-215 manufactured by Toagosei Co., Ltd.).

In addition, examples thereof also include trifunctional (meth)acrylate compounds such as trimethylolpropane tri(meth)acrylate (as a commercially available product, for example, TPMTA manufactured by Nippon Kayaku Co., Ltd.) and EO, PO or epichlorohydrin-modified products thereof, pentaerythritol tri(meth)acrylate, glycerol tri(meth)acrylate, and EO, PO or epichlorohydrin-modified products thereof, isocyanuric acid EO-modified tri(meth)acrylate (as a commercially available product, for example, Aronix M-315 manufactured by Toagosei Co., Ltd., and the like), tris(meth)acryloyloxyethyl phosphate, hydrogen phthalate-(2,2,2-tri-(meth)acryloyloxymethyl)ethyl, and glycerol tri(meth)acrylate and EO, PO or epichlorohydrin-modified products thereof; tetrafunctional (meth)acrylate compounds such as pentaerythritol tetra(meth) acrylate (as a commercially available product, for example, TPMTA manufactured by Shin-Nakamura Chemical Co., Ltd.) and EO, PO or epichlorohydrin-modified products thereof, and ditrimethylolpropane tetra(meth)acrylate; pentafunctional (meth)acrylate compounds such as dipentaerythritol penta(meth)acrylate and EO, PO, epichlorohydrin, fatty acid, or alkyl-modified products thereof; and hexafunctional (meth)acrylates such as dipentaerythritol hexa(meth)acrylate and EO, PO, epichlorohydrin, fatty acid, or alkyl-modified products thereof, and sorbitol hexa(meth)acrylate and EO, PO, epichlorohydrin, fatty acid, or alkyl-modified products thereof.

Two or more kinds of the ethylenically unsaturated polymerizable group-containing compounds may be used in combination. In this case, a mixture "DPHA" (manufactured by Nippon Kayaku Co., Ltd.) of dipentaerythritol pentaacrylate and dipentaerythritol hexaacrylate can be preferably used.

In addition, as the ethylenically unsaturated polymerizable group-containing compound, a polyester (meth)acrylate having a weight-average molecular weight of 200 or more and less than 1,000, or an epoxy (meth)acrylate is also preferable. Examples of a commercially available product thereof include, as polyester (meth)acrylate, BEAMSET 700 (hexafunctional), BEAMSET 710 (tetrafunctional), BEAMSET 720 (trifunctional), and the like of BEAMSET 700 series (trade name) manufactured by ARAKAWA CHEMICAL INDUSTRIES, LTD. In addition, examples of the epoxy (meth) acrylate include trade name SP series manufactured by Showa Highpolymer Co., Ltd., such as SP-1506, 500, SP-1507, and 480 ; VR series manufactured by Showa Highpolymer Co., Ltd., such as VR-77; and trade name EA-1010/ECA, EA-11020, EA-1025, EA-6310/ECA and the like manufactured by Shin-Nakamura Chemical Co., Ltd.

From the viewpoint of adhesiveness with the glass substrate, an I/O ratio (ratio of an inorganicity value (I value) and an organicity value (O value)) of the polymerizable compound (particularly, the ethylenically unsaturated polymerizable group-containing compound) is preferably 0.40 or more, more preferably 0.60 or more, and still more preferably 1.2 or more. The upper limit of the I/O ratio is not particularly limited, but from the viewpoint of compatibility with the thermoplastic resin, it is preferably less than 3.0.

The I/O ratio is calculated by a calculation method with an organic conceptual diagram. The organic conceptual diagram is proposed by Fujita et al. and is an effective method for predicting various physicochemical properties from the chemical structure of an organic compound (see Yoshio Koda, Organic Concept Map - Basic and Application -, San-kyo Publishing Co., Ltd.(1984)). Since the polarity of the organic compound is influenced by the number of carbon atoms and the substituent, the inorganicity value and the organicity value of the organic compound are determined based on setting an organicity value of a methylene group to 20 and an inorganicity value of a hydroxyl group to 100, and the inorganicity value and the organicity value of the organic compound are calculated. An organic compound with a high inorganicity value has high polarity, while an organic compound with a high organicity value has low polarity.

Specific calculation methods of the I value, O value, and I/O ratio described above are disclosed by Honma et al., who are co-authors of "New Edition of Organic Concept Diagram: Basics and Applications," as an organic concept diagram calculation sheet for Excel (http://www.ecosci.jp/sheet/orgs_help.html); and the I value, O value, and I/O ratio described above can be calculated using the disclosed calculation sheet.

In a case where the composition used for forming the heat seal layer contains a polymerizable compound, a content of the polymerizable compound is preferably 5% to 80% by mass, more preferably 10% to 60% by mass, and still more preferably 15% to 50% by mass with respect to the solid content in the composition. By setting the polymerizable compound contained in the composition used for forming the heat seal layer within the above-described range, it is possible to achieve both adhesion to the glass substrate and adhesion to the reflective layer or the polarization conversion layer.

The solid content in the composition means components other than a solvent in the composition. Even in a case where a component is liquid, it is calculated as the solid content.

From the viewpoint of adhesion to glass, it is preferable that the composition used for forming the heat seal layer (composition for forming a heat seal layer) contains a polymerization initiator.

Examples of the polymerization initiator include a photopolymerization initiator.

The photopolymerization initiator may be any photopolymerization initiator as long as it can generate a radical as an active species by light irradiation; and known photopolymerization initiators can be used without any limitation. Specific examples thereof include acetophenones such as diethoxyacetophenone, 2-hydroxy-2-methyl-1-phenylpropan-1-one, benzyldimethylketal, 4-(2-hydroxyethoxy)phenyl-(2-hydroxy-2-propyl)ketone, 1-hydroxycyclohexylphenyl ketone, 2-methyl-2-morpholino(4-thiomethylphenyl)propan-1-one, 2-benzyl-2-dimethylamino-1-(4-morpholinophenyl)butanone, 2-hydroxy-2-methyl-1-[4-(1 -methylvinyl)phenyl]propanone oligomer, and 2-hydroxy-1-{4-[4-(2-hydroxy-2-methyl-propionyl)-benzyl]phenyl}-2-methyl-propan-1-one; oxime esters such as 1,2-octanedione, 1-[4-(phenylthio)-,2-(O-benzoyloxime)], and ethanone,1-[9-ethyl-6-(2-methylbenzoyl)-9H-carbazol-3-yl]-,1-(0-acetyloxime); benzoins such as benzoin, benzoin methyl ether, benzoin ethyl ether, benzoin isopropyl ether, and benzoin isobutyl ether; benzophenones such as benzophenone, ortho-benzoyl methyl benzoate, 4-phenylbenzophenone, 4-benzoyl-4'-methyl-diphenyl sulfide, 3,3',4,4'-tetra(t-butylperoxycarbonyl)benzophenone, 2,4,6-trimethylbenzophenone, 4-benzoyl-N,N-dimethyl-N-[2-(1-oxo-2-propenyloxy)ethyl]benzenemethanaminium bromide, and (4-benzoylbenzyl)trimethylammonium chloride; thioxanthones such as 2-isopropylthioxanthone, 4-isopropylthioxanthone, 2,4-diethylthioxanthone, 2,4-dichlorothioxanthone, 1-chloro-4-propoxythioxanthone, and 2-(3-dimethylamino-2-hydroxy)-3,4-dimethyl-9H-thioxanthone-9-one mesochloride; and acylphosphine oxides such as 2,4,6-trimethylbenzoyl-diphenylphosphine oxide, bis(2,6-dimethoxybenzoyl)-2,4,4-trimethyl-pentylphosphine oxide, and bis(2,4,6-trimethylbenzoyl)-phenylphosphine oxide. In addition, as an auxiliary agent of the polymerization initiator, triethanolamine, triisopropanolamine, 4,4'-dimethylaminobenzophenone (Michler's ketone), 4,4'-diethylaminobenzophenone, 2-dimethylaminoethylbenzoic acid, ethyl 4-dimethylaminobenzoate, (n-butoxy)ethyl 4-dimethylaminobenzoate, isoamyl 4-dimethylaminobenzoate, 2-ethylhexyl 4-dimethylaminobenzoate, 2,4-diethylthioxanthone, 2,4-diisopropylthioxanthone, and the like may be used in combination.

The above-described polymerization initiator and auxiliary agent can be synthesized by known methods, and are available as commercially available products. Examples of commercially available radical photopolymerization initiators include IRGACURE (127, 651, 184, 819, 907, 1870 (CGI-403/Irg 184 = 7/3 mixing initiator), 500, 369, 1173, 2959, 4265,

4263, and OXE 01), and the like manufactured by BASF; KAYACURE (DETX-S, BP-100, BDMK, CTX, BMS, 2-EAQ, ABQ, CPTX, EPD, ITX, QTX, BTC, MCA, and the like) manufactured by Nippon Kayaku Co., Ltd.; and Esacure (KIP100F, KB1, EB3, BP, X33, KT046, KT37, KIP150, and TZT) manufactured by Sartomer Arkema Inc.

A content of the polymerization initiator contained in the above-described composition used for forming the heat seal layer may be appropriately adjusted within a range in which a polymerization reaction of the polymerizable compound proceeds well, and is not particularly limited. In a case where the composition used for forming the heat seal layer contains a polymerization initiator, a content of the polymerization initiator is preferably 0.1 to 20 parts by mass, more preferably 0.5 to 10 parts by mass, and still more preferably 1 to 10 parts by mass with respect to 100 parts by mass of the polymerizable compound contained in the above-described composition.

The heat seal layer may contain inorganic particles. In a case where the heat seal layer contains inorganic particles, unevenness is formed on a surface of the heat seal layer, and in a case where the heat seal layer and the HC layer are rolled in a state in which the heat seal layer and the HC layer are in direct contact with each other, friction between the heat seal layer and the HC layer can be reduced, and this allows the heat seal layer and the HC layer to be rolled without wrinkles, which is preferable.

As the inorganic particles contained in the heat seal layer, inorganic oxide particles are preferable; and silica (silicon dioxide) particles, aluminum oxide particles, titanium dioxide particles, or zirconium oxide particles are more preferable; and silica particles are still more preferable.

It is preferable that the inorganic particles consist of primary particles, and form secondary particles obtained by aggregation of the primary particles.

An average primary particle diameter of the inorganic particles is not particularly limited, but is preferably 5 to 50 nm and more preferably 5 to 15 nm.

An average secondary particle diameter of the inorganic particles is not particularly limited, but is preferably 100 to 500 nm.

A content of the inorganic particles in the heat seal layer is not particularly limited, but is preferably 1% by mass or more and more preferably 9% by mass or more with respect to the total mass of the heat seal layer. The upper limit thereof is not particularly limited, but is preferably 40% by mass or less and more preferably 30% by mass or less.

The average primary particle diameter of the inorganic particles is measured by transmission electron microscope observation. Specifically, for 50 primary particles optionally selected, a diameter of a circle circumscribed about each primary particle is obtained, and an arithmetic average of these diameters is defined as the average primary particle diameter. An observation magnification of the transmission electron microscope is set to any magnification at which a primary particle diameter in a range of 500,000 times to 5,000,000 times can be discriminated.

The above-described average secondary particle diameter is a value measured by fitting of a perfectly spherical shape (refractive index: 1.46) using a laser diffraction and scattering-type particle size distribution analyzer. As the analyzer, for example, MicroTrac MT3000 manufactured by MicroTrac Co., Ltd. can be used.

The heat seal layer may contain a leveling agent. In a case where the heat seal layer contains a leveling agent, the surface of the heat seal layer is further smoothed, and visibility in a case of being integrated with the glass substrate can be improved.

As the leveling agent, a known leveling agent can be used, and examples thereof include surfactants, in which a fluorine-based surfactant or a silicone-based surfactant is preferable.

A fluorine content in the fluorine-based surfactant is preferably 3% to 40% by mass, more preferably 5% to 30% by mass, and still more preferably 7% to 25% by mass. The fluorine-based surfactant in which the fluorine content is within the above-described range is effective in terms of the evenness of the thickness of the coating film or liquid saving property.

A content of the leveling agent in the heat seal layer is not particularly limited, but is preferably 0.005% to 0.5% by mass and more preferably 0.01% to 0.1% by mass with respect to the total mass of the heat seal layer.

A water contact angle of the surface of the heat seal layer on a side opposite to the reflective layer or the polarization conversion layer is not particularly limited, but from the viewpoint of more excellent adhesiveness with the glass substrate, it is preferably 100° or less, more preferably 90° or less, and still more preferably 70° or less. The lower limit thereof is not particularly limited, but is 10° or more in many cases and 30° or more in more cases.

The measuring method of the above-described water contact angle is as follows.

First, for three different locations on the surface of the heat seal layer in the reflection film, a contact angle meter CA-X (manufactured by Kyowa Interface Science Co., Ltd.) is used for producing a liquid droplet with a diameter of 1.0 mm on a needle tip using pure water in an environment of 20°C and 65% RH, and the liquid droplet is brought into contact with the surface of the heat seal layer. At a point where the surface of the heat seal layer and the pure water are in contact 25 seconds after the initial contact, the angle between a tangent line to the surface of the pure water and the surface of the heat seal layer is measured, and an average of these measurement values is defined as the water contact angle of the heat seal layer.

The heat seal layer is preferably formed by applying the composition for forming the heat seal layer.

The composition for forming the heat seal layer contains the above-described components, and is used for

forming the heat seal layer.

From the viewpoint of coating properties, the composition for forming the heat seal layer preferably contains a solvent.

The type of the solvent is not particularly limited, and examples thereof include water and organic solvents, in which an organic solvent is preferable. Examples of the organic solvent include a ketone, an alkyl halide, an amide, a sulfoxide, a heterocyclic compound, a hydrocarbon, an ester, and an ether.

A method of applying the composition for forming the heat seal layer is not particularly limited, and examples thereof include a wire bar coating method, a curtain coating method, an extrusion coating method, a direct gravure coating method, a reverse gravure coating method, a die-coating method, a spin coating method, a dip coating method, a spray coating method, and a slide coating method.

A coating film obtained by the coating may be subjected to a drying treatment as necessary.

Examples of the drying treatment include a heating treatment. A heating temperature in the heating treatment is not particularly limited, but is preferably 50°C to 150°C and more preferably 60°C to 140°C. A heating time is not particularly limited, but is preferably 0.5 to 20 minutes and more preferably 0.5 to 10 minutes.

A surface treatment may be performed on the surface of the formed heat seal layer (surface on a side opposite to the reflective layer or the polarization conversion layer) as necessary.

For example, in order to reduce the water contact angle of the surface of the heat seal layer, a hydrophilic treatment may be performed on the surface of the heat seal layer. Examples of the hydrophilic treatment include plasma treatment, ultraviolet irradiation treatment, corona treatment, and electron beam irradiation treatment, in which corona treatment is preferable.

Conditions of the hydrophilic treatment are appropriately selected according to the type of treatment to be performed, and are preferably adjusted to be within the range of the water contact angle of the surface of the heat seal layer described above.

From the viewpoint of adhesion with the glass substrate, the reflective layer, or the polarization conversion layer, an average thickness of the heat seal layer is preferably 0.2 μm or more, more preferably 0.4 μm or more, and still more preferably 0.8 μm or more. The upper limit thereof is not particularly limited, but from the viewpoint of thinning, it is preferably 20 μm or less and more preferably 10 or μm or less.

As a method for measuring the above-described average thickness, the heat seal layer is cut with a microtome to take out a cross section, the cross section is observed with a scanning electron microscope (SEM), thicknesses at three different positions of the heat seal layer are measured, and an average value (arithmetic average value) of the measured values is calculated to obtain the average thickness.

The heat seal layer may have a monolayer structure or a multilayer structure of two or more layers.

In a case where the heat seal layer has a multilayer structure, the average value of the total thickness of the heat seal layers may be within the above-described range.

From the viewpoint of moisture-heat resistance, a moisture content of the heat seal layer (moisture content at 25°C and 60 %RH) is preferably 2.0% or less, more preferably 1.0% or less, and still more preferably 0.5% or less. The lower limit thereof is not particularly limited, and may be, for example, 0%.

The moisture content of the heat seal layer is measured by a Karl Fischer method using a moisture measuring device and sample drying devices "CA-03" and "VA-05" (both manufactured by Mitsubishi Chemical Corporation). The sample, collected by scraping the heat seal layer, is moisture-conditioned in an environment of 25°C and 60 %RH for 24 hours or more, and the moisture content is calculated by dividing the amount of moisture (g) by the mass of the sample (g; including the amount of moisture).

<Reflective layer reflecting light in wavelength-selective manner>

The reflection film according to the embodiment of the present invention includes a reflective layer reflecting light in a wavelength-selective manner.

It is preferable that the reflective layer of the present invention includes a cholesteric liquid crystal layer having a selective reflection center wavelength in a red wavelength range, a cholesteric liquid crystal layer having a selective reflection center wavelength in a green wavelength range, and a cholesteric liquid crystal layer having a selective reflection center wavelength in a blue wavelength range. The three cholesteric liquid crystal layers have different selective reflection center wavelengths. Each cholesteric liquid crystal layer may be in direct contact with any other cholesteric liquid crystal layer.

As is well known, the cholesteric liquid crystal layer is a layer composed of a liquid crystal compound in an alignment state of a helical structure in which a cholesteric liquid crystalline phase is immobilized, reflects light having a selective reflection center wavelength corresponding to a pitch of the helical structure, and transmits light in another wavelength range. In addition, the cholesteric liquid crystal layer exhibits selectively reflecting properties with respect to levorotatory or dextrorotatory circular polarization at a specific wavelength.

Here, from the viewpoint of visibility, it is preferable that the reflective layer satisfies the following requirements (i) to (iii).

(i) in a wavelength range of 400 nm or more and less than 500 nm, the maximum value of the natural light reflectivity is more than 7% (preferably more than 20%), a difference between the greatest maximum value and the smallest minimum value of the natural light reflectivity is 3% or more, and the total value of wavelength bandwidths of the region higher than the average value of the maximum value and the minimum value of the natural light reflectivity is 20 to 80 nm.

(ii) in a wavelength range of 500 nm or more and less than 600 nm, the maximum value of the natural light reflectivity is more than 7% (preferably more than 20%), a difference between the greatest maximum value and the smallest minimum value of the natural light reflectivity is 3% or more, and the total value of wavelength bandwidths of the region higher than the average value of the maximum value and the minimum value of the natural light reflectivity is 20 to 80 nm.

(iii) in a wavelength range of 600 to 800 nm, the maximum value of the natural light reflectivity is more than 7% (preferably 20% or more), and the total value of wavelength bandwidths of the region higher than the average value of the maximum value and the minimum value of the natural light reflectivity is 120 nm or more.

In the reflective layer including the cholesteric liquid crystal layer, the reflected wavelength and the reflectivity can be adjusted by the selective reflection center wavelength and the thickness (helical pitch number) of the cholesteric liquid crystal layer. Mainly, the requirement (i) can be satisfied by the cholesteric liquid crystal layer reflecting light in the blue wavelength range, the requirement (ii) can be satisfied by the cholesteric liquid crystal layer reflecting light in the green wavelength range, and the requirement (iii) can be satisfied by the cholesteric liquid crystal layer reflecting light in the red wavelength range.

From the viewpoint that the transmittance can be increased while improving the reflection tint, the maximum value of the natural light reflectivity in the range of 400 nm or more and less than 500 nm is preferably more than 7%, and more preferably 20% or more. The upper limit thereof is not particularly limited, and may be, for example, 35% or less.

Similarly, from the viewpoint that the transmittance can be increased while improving the reflection tint, the maximum value of the natural light reflectivity in the range of 500 nm or more and less than 600 nm is preferably more than 7%, and more preferably 20% or more. The upper limit thereof is not particularly limited, and may be, for example, 35% or less.

From the viewpoint that the brightness of the display image can be increased while improving the reflection tint, the maximum value of the natural light reflectivity in the range of 600 to 800 nm is preferably more than 7%, and more preferably 20% or more. The upper limit thereof is not particularly limited, and may be, for example, 35% or less.

From the viewpoint that the transmittance can be increased while improving the reflection tint, the difference between the greatest maximum value and the smallest minimum value of the natural light reflectivity in the range of 400 nm or more and less than 500 nm is preferably 4% to 20%, and more preferably 4% to 12%.

Similarly, from the viewpoint that the transmittance can be increased while improving the reflection tint, the difference between the greatest maximum value and the smallest minimum value of the natural light reflectivity in the range of 500 nm or more and less than 600 nm is preferably 4% to 20%, and more preferably 4% to 12%.

From the viewpoint that the transmittance can be increased while improving the reflection tint, the wavelength bandwidth of the region having a higher reflectivity than the average value of the maximum value and the minimum value of the reflectivity in the range of 400 nm or more and less than 500 nm is preferably 30 to 78 nm, and more preferably 35 to 75 nm.

Similarly, from the viewpoint that the transmittance can be increased while improving the reflection tint, the wavelength bandwidth of the region having a higher reflectivity than the average value of the maximum value and the minimum value of the reflectivity in the range of 500 nm or more and less than 600 nm is preferably 30 to 78 nm, and more preferably 35 to 75 nm.

In the wavelength bandwidth in the range of 400 nm or more and less than 500 nm, and the wavelength bandwidth in the range of 500 nm or more and less than 600 nm, it is advantageous for the transmittance as the width is narrower. However, the reflection tint may be deteriorated in a case where the wavelength bandwidth in the range of 400 nm or more and less than 500 nm and/or the wavelength bandwidth in the range of 500 nm or more and less than 600 nm is too narrow because the wavelength bandwidth in the range of 600 to 800 nm is wide. From this reason, the wavelength bandwidth in the range of 400 nm or more and less than 500 nm and the wavelength bandwidth in the range of 500 nm or more and less than 600 nm are preferably within the above-described ranges.

In addition, the wavelength bandwidth in the range of 500 nm or more and less than 600 nm has a large influence on the transmittance.

From the viewpoint of improving the front brightness of the display image while improving the reflection tint, the wavelength bandwidth of the region having a higher reflectivity than the average value of the maximum value and the

minimum value of the reflectivity in the range of 600 to 800 nm is preferably 120 to 200 nm.

It is preferable that the reflective layer has two or more cholesteric liquid crystal layers with different selective reflection center wavelengths. In addition, it is preferable that each cholesteric liquid crystal layer is in direct contact with any other cholesteric liquid crystal layer.

In a case where the cholesteric liquid crystal layers are spaced from each other, a film thickness between the layers is thick, and it is difficult to obtain the effect of interference of light reflected by each cholesteric liquid crystal layer. On the other hand, by adopting a configuration in which the cholesteric liquid crystal layers are in contact with each other, the wavelength bandwidth can be narrowed because of the effect of interference of light reflected by each cholesteric liquid crystal layer, which is preferable. In particular, in a case where a film thickness of each cholesteric liquid crystal layer is thinner than a wavelength of light (visible light of 380 nm to 780 nm), the effect of interference is more remarkable, which is preferable.

In the present invention, in a case where the reflective layer has two or more cholesteric liquid crystal layers, the cholesteric liquid crystal layers are not limited to a configuration in which the individual cholesteric liquid crystal layers are in direct contact with each other, and the cholesteric liquid crystal layers may be configured to be laminated through an adhesive layer or the like.

Here, each cholesteric liquid crystal layer may have at least one selective reflection center wavelength, but at least one cholesteric liquid crystal layer may have two or more selective reflection center wavelengths. A cholesteric liquid crystal layer having two or more selective reflection center wavelengths is obtained by adopting a helical structure in which a helical pitch changes in a thickness direction.

The total thickness of the reflective layer is preferably 0.4 to 2.0 μm, more preferably 0.6 to 1.8 μm, and still more preferably 0.8 to 1.4 μm.

In a case where the total thickness of the reflective layer is within the above-described range, the natural light reflectivity by the reflective layer is increased, the brightness of the display image can be increased, and the transmittance is increased.

(Production method of cholesteric liquid crystal layer)

Hereinafter, production materials and a production method of the cholesteric liquid crystal layer will be described.

Examples of the material used for forming the above-described cholesteric liquid crystal layer include a liquid crystal composition containing a polymerizable liquid crystal compound and a chiral agent (an optically active compound). The liquid crystal composition may further contain a surfactant, a polymerization initiator, a solvent, and the like, as necessary.

The cholesteric liquid crystal layer can be formed by applying the above-described liquid crystal composition onto a support, an alignment layer, a cholesteric liquid crystal layer as an underlayer, or the like, aging cholesteric alignment, and then fixing the cholesteric alignment by curing the liquid crystal composition.

(Polymerizable liquid crystal compound)

The polymerizable liquid crystal compound may be a rod-like liquid crystal compound or a disk-like liquid crystal compound, but a rod-like liquid crystal compound is preferable.

Examples of the rod-like polymerizable liquid crystal compound forming the cholesteric liquid crystal layer include a rod-like nematic liquid crystal compound. As the rod-like nematic liquid crystal compound, azomethines, azoxys, cyano biphenyls, cyanophenyl esters, benzoic acid esters, cyclohexane carboxylic acid phenyl esters, cyanophenyl cyclohexanes, cyano-substituted phenyl pyrimidines, alkoxy-substituted phenyl pyrimidines, phenyl dioxanes, tolanes, or alkenylcyclohexylbenzonitriles are preferably used. High-molecular-weight liquid crystal compounds can also be used as well as low-molecular-weight liquid crystal compounds.

The polymerizable liquid crystal compound is obtained by introducing a polymerizable group into the liquid crystal compound. Examples of the polymerizable group include an unsaturated polymerizable group, an epoxy group, and an aziridinyl group; and an unsaturated polymerizable group is preferable and an ethylenically unsaturated polymerizable group is more preferable. The polymerizable group can be introduced into the molecule of the liquid crystal compound by various methods. The number of polymerizable groups included in one molecule of the polymerizable liquid crystal compound is preferably 1 to 6 and more preferably 1 to 3.

Examples of the polymerizable liquid crystal compound include compounds described in Makromol. Chem., vol. 190, pp. 2255 (1989), Advanced Materials, vol. 5, pp. 107 (1993), US4683327A, US5622648A, US5770107A, WO95/022586A, WO95/024455A, WO97/00600A, WO98/023580A, WO98/052905A, JP1989-272551A (JP-H1-272551A), JP1994-016616A (JP-H6-016616A), JP1995-110469A (JP-H7-110469A), JP1999-080081A (JP-H11-080081A), JP2001-328973A, and the like. Two or more kinds of polymerizable liquid crystal compounds may be used in combination. In a case where two or more kinds of polymerizable liquid crystal compounds are used in

combination, an alignment temperature can be decreased.

In addition, specific examples of the polymerizable liquid crystal compound include the following mixture 1.

・Mixture 1

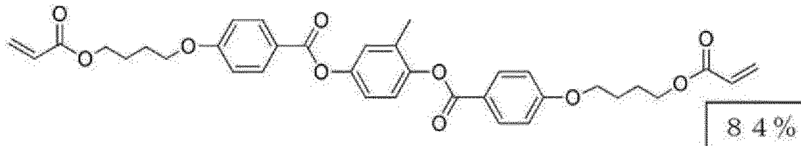

84%

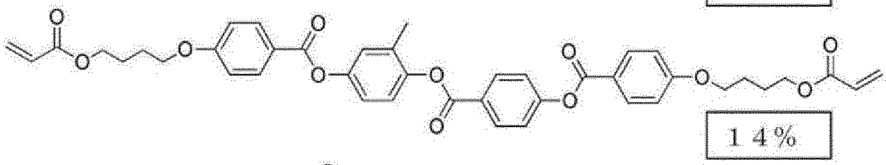

14%

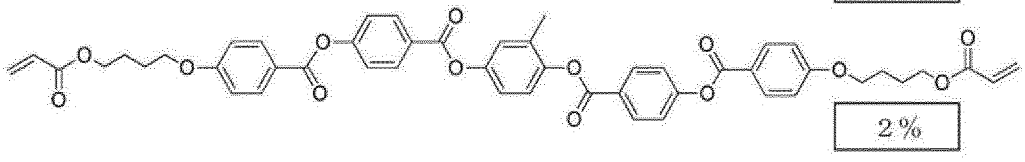

2%

Numerical values are % by mass.

In addition, a content of the polymerizable liquid crystal compound in the liquid crystal composition is preferably 80% to 99.9% by mass, more preferably 85% to 99.5% by mass, and still more preferably 90% to 99% by mass with respect to the mass of solid contents (mass excluding a solvent) of the liquid crystal composition.

In order to improve the visible light transmittance, the cholesteric liquid crystal layer may have a low Δn. The cholesteric liquid crystal layer having a low Δn can be formed of a low-Δn polymerizable liquid crystal compound. Hereafter, the low-Δn polymerizable liquid crystal compound will be specifically described.

(Low-Δn polymerizable liquid crystal compound)

A cholesteric liquid crystalline phase is formed by using the low-Δn polymerizable liquid crystal compound, and fixed to form a film, whereby a narrow-band reflective layer can be obtained. Examples of the low-Δn polymerizable liquid crystal compound include compounds described in WO2015/115390A, WO2015/147243A, WO2016/035873A, JP2015-163596A, and JP2016-053149A. For the liquid crystal composition which provides a reflective layer with a small half-width, the description in WO2016/047648A can also be referred to.

It is also preferable that the liquid crystal compound is a polymerizable compound represented by Formula (I) described in WO2016/047648A.

$$Q^1-Sp^1-\left[A-L\right]_{m-1}-A-Sp^2-Q^2 \qquad (I)$$

In Formula (I), A represents a phenylene group which may have a substituent or a trans-1,4-cyclohexylene group which may have a substituent; L represents a single bond or a linking group selected from the group consisting of $-CH_2O-$, $-OCH_2-$, $-(CH_2)_2OC(=O)-$, $-C(=O)O(CH_2)_2-$, -C(=O)O-, -OC(=O)-, -OC(=O)O-, -CH=CH-C(=O)O-, and -OC(=O)-CH=CH-; m represents an integer of 3 to 12; $Sp^1$ and $Sp^2$ each independently represent a single bond, a linear or branched alkylene group having 1 to 20 carbon atoms, or a linking group selected from the group consisting of a group in which one or two or more $-CH_2-$'s in a linear or branched alkylene group having 1 to 20 carbon atoms are substituted with -O-, -S-, -NH-, $-N(CH_3)-$, -C(=O)-, -OC(=O)-, or -C(=O)O-; and $Q^1$ and $Q^2$ each independently represent a hydrogen atom or a polymerizable group selected from the group consisting of groups represented by Formulae Q-1 to Q-5, where any one of $Q^1$ or $Q^2$ represents the polymerizable group.

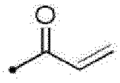
Q-1

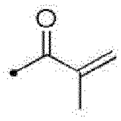
Q-2

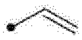
Q-3

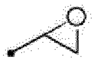
Q-4

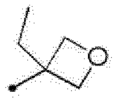
Q-5

In Formula (I), the phenylene group is preferably a 1,4-phenylene group. Regarding the phenylene group and the trans-1,4-cyclohexylene group, the substituent in a case of "may have a substituent" is not particularly limited, and examples thereof include an alkyl group, a cycloalkyl group, an alkoxy group, an alkyl ether group, an amide group, an amino group, a halogen atom, and a substituent selected from the group consisting of a group formed by combining two or more of the substituents. In addition, examples of the above-described substituent include a substituent represented by $-C(=O)-X^3-Sp^3-Q^3$ described later. The phenylene group and the trans-1,4-cyclohexylene group may have 1 to 4 substituents. In a case of having two or more substituents, the two or more substituents may be the same or different from each other.

The alkyl group may be linear or branched. The number of carbon atoms in the alkyl group is preferably 1 to 30, more preferably 1 to 10, and still more preferably 1 to 6. Examples of the alkyl group include a methyl group, an ethyl group, an n-propyl group, an isopropyl group, an n-butyl group, an isobutyl group, a sec-butyl group, a tert-butyl group, an n-pentyl group, an isopentyl group, a neopentyl group, a 1,1-dimethylpropyl group, an n-hexyl group, an isohexyl group, a linear or branched heptyl group, an octyl group, a nonyl group, a decyl group, an undecyl group, and a dodecyl group. The above description regarding the alkyl group is also applied to an alkoxy group including an alkyl group. In addition, specific examples of the alkylene group in a case of being referred to as an alkylene group include a divalent group obtained by removing one arbitrary hydrogen atom from each of the alkyl groups described above. Examples of the halogen atom include a fluorine atom, a chlorine atom, a bromine atom, and an iodine atom.

The number of carbon atoms in the cycloalkyl group is preferably 3 to 20, more preferably 5 or more, and preferably 10 or less, more preferably 8 or less, and still more preferably 6 or less. Examples of the cycloalkyl group include a cyclopropyl group, a cyclobutyl group, a cyclopentyl group, a cyclohexyl group, a cycloheptyl group, and a cyclooctyl group.

As the substituent which may be included in the phenylene group or the trans-1,4-cyclohexylene group, an alkyl group, an alkoxy group, or a substituent selected from the group consisting of $-C(=O)-X^3-Sp^3-Q^3$ is preferable. Here, $X^3$ represents a single bond, -O-, -S-, $-N(Sp^4-Q^4)-$, or a nitrogen atom forming a ring structure with $Q^3$ and $Sp^3$. $Sp^3$ and $Sp^4$ each independently represent a single bond, a linear or branched alkylene group having 1 to 20 carbon atoms, or a linking group selected from the group consisting of a group in which one or two or more $-CH_2-$'s in a linear or branched alkylene group having 1 to 20 carbon atoms are substituted with -O-, -S-, -NH-, $-N(CH_3)-$, -C(=O)-, -OC(=O)-, or -C(=O)O-.

$Q^3$ and $Q^4$ each independently represent a hydrogen atom, a cycloalkyl group, a group in which one or two or more $-CH_2-$'s are substituted with -O-, -S-, -NH-, $-N(CH_3)-$, -C(=O)-, -OC(=O)-, or C(=O)O-, or any polymerizable group selected from the group consisting of the groups represented by Formulae Q-1 to Q-5.

Specific examples of the cycloalkyl group in which one or two or more $-CH_2-$'s are substituted with -O-, -S-, -NH-, $-N(CH_3)-$, -C(=O)-, -OC(=O)-, or C(=O)O- include a tetrahydrofuranyl group, a pyrrolidinyl group, an imidazolidinyl group, a pyrazolidinyl group, a piperidyl group, a piperazinyl group, and a morphornyl group. The substitution position is not particularly limited. Among these, a tetrahydrofuranyl group is preferable, and a 2-tetrahydrofuranyl group is more preferable.

In Formula (I), L represents a single bond or a linking group selected from the group consisting of $-CH_2O-$, $-OCH_2-$, $-(CH_2)_2OC(=O)-$, $-C(=O)O(CH_2)_2-$, -C(=O)O-, -OC(=O)-, -OC(=O)O-, -CH=CH-C(=O)O-, and -OC(=O)-CH=CH-. L is preferably -C(=O)O- or -OC(=O)-. (m-1) pieces of L's may be the same or different from each other.

$Sp^1$ and $Sp^2$ each independently represent a single bond, a linear or branched alkylene group having 1 to 20 carbon atoms, or a linking group selected from the group consisting of a group in which one or two or more $-CH_2-$'s in a linear or branched alkylene group having 1 to 20 carbon atoms are substituted with -O-, -S-, -NH-, $-N(CH_3)-$, -C(=O)-, -OC(=O)-, or -C(=O)O-.

It is preferable that $Sp^1$ and $Sp^2$ are each independently a linear alkylene group having 1 to 10 carbon atoms, in which linking groups selected from the group consisting of -O-, -OC(=O)-, and -C(=O)O- are respectively bonded to both terminals, -OC(=O)-, -C(=O)O-, -O-, and a linking group composed of one or a combination of two or more groups selected from the group consisting of linear alkylene groups having 1 to 10 carbon atoms; and it is preferable that $Sp^1$ and $Sp^2$ are each independently a linear alkylene group having 1 to 10 carbon atoms, in which -O-'s are respectively bonded to both terminals.

$Q^1$ and $Q^2$ each independently represent a hydrogen atom or a polymerizable group selected from the group consisting of the groups represented by Formulae Q-1 to Q-5 described above, in which any one of $Q^1$ or $Q^2$ represents the polymerizable group.

As the polymerizable group, an acryloyl group (Formula Q-1) or a methacryloyl group (Formula Q-2) is preferable.

In Formula (I), m represents an integer of 3 to 12. m is preferably an integer of 3 to 9, more preferably an integer of 3 to 7, and still more preferably an integer of 3 to 5.

The polymerizable compound represented by Formula (I) preferably includes, as A, at least one phenylene group which may have a substituent and at least one trans-1,4-cyclohexylene group which may have a substituent. The polymerizable compound represented by Formula (I) preferably includes, as A, 1 to 4 trans-1,4-cyclohexylene groups which may have a substituent, more preferably includes 1 to 3 trans-1,4-cyclohexylene groups which may have a substituent, and still more preferably includes 2 or 3 trans-1,4-cyclohexylene groups which may have a substituent. In addition, the polymerizable compound represented by Formula (I) preferably includes, as A, one or more phenylene groups which may have a substituent, more preferably includes 1 to 4 phenylene groups which may have a substituent, still more preferably includes 1 to 3 phenylene groups which may have a substituent, and particularly preferably includes 2 or 3 phenylene groups which may have a substituent.

In Formula (I), in a case where a number obtained by dividing the number of trans-1,4-cyclohexylene groups represented by A by m is determined as mc, mc preferably satisfies $0.1 < mc < 0.9$, more preferably satisfies $0.3 < mc < 0.8$, and still more preferably satisfies $0.5 < mc < 0.7$. The liquid crystal composition preferably contains the polymerizable compound represented by Formula (I), in which $0.5 < mc < 0.7$, and the polymerizable compound represented by Formula (I), in which $0.1 < mc < 0.3$.

Specific examples of the polymerizable compound represented by Formula (I) include compounds described in paragraphs 0051 to 0058 of WO2016/047648A, and compounds described in JP2013-112631A, JP2010-070543A, JP4725516B, WO2015/115390A, WO2015/147243A, WO2016/035873A, JP2015-163596A, JP2016-053149A, and the like.

(Chiral agent: optically active compound)

The chiral agent has a function of inducing the helical structure of the cholesteric liquid crystalline phase. The chiral compound may be selected according to the purpose since the helical sense or the helical pitch of the induced helix varies depending on the compound.

The chiral agent is not particularly limited, and known compounds can be used. Examples of the chiral agent include compounds described in Liquid Crystal Device Handbooks (Chapter 3, 4-3, Chiral Agents for TN and STN, p. 199, edited by Japan Society for the Promotion of Science, 142 Committee, 1989), JP2003-287623A, JP2002-302487A, JP2002-080478A, JP2002-080851A, JP2010-181852, JP2014-034581A, or the like.

The chiral agent generally includes an asymmetric carbon atom, but an axially asymmetric compound or a planar asymmetric compound, including no asymmetric carbon atom, can also be used as the chiral agent. Examples of the axially asymmetric compound or the planar asymmetric compound include binaphthyl, helicene, paracyclophane, and derivatives thereof.

The chiral agent may also have a polymerizable group. In a case where both the chiral agent and the liquid crystal compound have a polymerizable group, a polymer having a repeating unit induced from the polymerizable liquid crystal compound and a repeating unit induced from the chiral agent can be formed by a polymerization reaction between the polymerizable chiral agent and the polymerizable liquid crystal compound. In this aspect, the polymerizable group in the polymerizable chiral agent is preferably the same group as the polymerizable group in the polymerizable liquid crystal compound. Therefore, the polymerizable group of the chiral agent is preferably an unsaturated polymerizable group, an epoxy group, or an aziridinyl group, more preferably an unsaturated polymerizable group, and still more preferably an ethylenically unsaturated polymerizable group.

In addition, the chiral agent may be a liquid crystal compound.

As the chiral agent, an isosorbide derivative, an isomannide derivative, or a binaphthyl derivative is preferable. As the isosorbide derivative, a commercially available product such as LC756 manufactured by BASF may be used.

A content of the chiral agent in the liquid crystal composition is preferably 0.01 to 200 mol% and more preferably 1 to 30 mol% with respect to the total molar amount of the polymerizable liquid crystal compound. The content of the chiral agent in the liquid crystal composition refers to a concentration (% by mass) of the chiral agent with respect to the total solid content in the composition.

In addition, as described above, the cholesteric liquid crystal layer of the reflective layer included in the reflection film according to the embodiment of the present invention may have two or more selective reflection center wavelengths. A cholesteric liquid crystal layer having two or more selective reflection center wavelengths is obtained by causing pitches of the helical structure to be changed in a thickness direction. The cholesteric liquid crystal layer in which the pitches of the helical structure change in the thickness direction can be produced by chaining the irradiation amount of light using a chiral agent with helical twisting power (HTP) changing upon irradiation with light.

In addition, examples of the chiral agent with the HTP changing upon irradiation with light include a chiral agent

which causes return isomerization, dimerization, isomerization and dimerization, and the like upon the irradiation with light.

In a case where the chiral agent has a photoisomerization group, the photoisomerization group is preferably an isomerization moiety, an azo group, an azoxy group, or a cinnamoyl group of a compound exhibiting photochromic properties. Specific examples of the compound include compounds described in JP2002-080478A, JP2002-080851A, JP2002-179668A, JP2002-179669A, JP2002-179670A, JP2002-179681A, JP2002-179682A, JP2002-338575A, JP2002-338668A, JP2003-313189A, JP2003-313292A, and the like.

(Polymerization initiator)

It is preferable that the liquid crystal composition contains a polymerization initiator. In the aspect in which the polymerization reaction is caused to proceed by ultraviolet irradiation, the polymerization initiator to be used is preferably a photopolymerization initiator capable of initiating the polymerization reaction by ultraviolet irradiation.

Examples of the photopolymerization initiator include α-carbonyl compounds (described in each specification of US2367661A and US2367670A), acyloin ethers (described in US2448828A), α-hydrocarbon-substituted aromatic acyloin compounds (described in US2722512A), polynuclear quinone compounds (described in US3046127A and US2951758A), combinations of a triarylimidazole dimer and a p-aminophenylketone (described in US3549367A), acridine and phenazine compounds (described in JP1985-105667A (JP-S60-105667A), US4239850A), acylphosphine oxide compounds (described in JP1988-040799B (JP-S63-040799B), JP1993-029234B (JP-H5-029234B), JP1998-095788A (JP-H10-095788A), JP1998-029997A (JP-H10-029997A), JP2001-233842A, JP2000-080068A, JP2006-342166A, JP2013-114249A, JP2014-137466A, JP4223071B, JP2010-262028A, JP2014-500852), oxime compounds (described in JP2000-066385A and JP4454067B), and oxadiazole compounds (described in US4212970A). For example, the description of paragraphs 0500 to 0547 of JP2012-208494A can also be referred to.

As the polymerization initiator contained in the liquid crystal composition, it is also preferable to use an acylphosphine oxide compound or an oxime compound.

Examples of the acylphosphine oxide compound include IRGACURE 810 (compound name: bis(2,4,6-trimethylbenzoyl)-phenylphosphine oxide) which is a commercially available product manufactured by BASF Japan Ltd. Examples of the oxime compound include commercially available products such as IRGACURE OXE 01 (manufactured by BASF), IRGACURE OXE 02 (manufactured by BASF), TR-PBG-304 (manufactured by Changzhou Tronly Advanced Electronic Materials Co., Ltd.), ADEKA ARKLS NCI-831, ADEKA ARKLS NCI-930 (manufactured by ADEKA CORPORATION), and ADEKA ARKLS NCI-831 (manufactured by ADEKA CORPORATION).

The polymerization initiator may be used alone or in combination of two or more kinds thereof.

A content of the photopolymerization initiator in the liquid crystal composition is preferably 0.1% to 20% by mass and more preferably 0.5% to 5% by mass with respect to the content of the polymerizable liquid crystal compound.

(Crosslinking agent)

The liquid crystal composition may optionally contain a crosslinking agent in order to improve film hardness after curing and to improve durability. As the crosslinking agent, a crosslinking agent which cures the liquid crystal composition with ultraviolet rays, heat, humidity, and the like can be suitably used.

The crosslinking agent is not particularly limited, and can be appropriately selected according to the purpose. Examples of the crosslinking agent include polyfunctional acrylate compounds such as trimethylolpropane tri(meth)acrylate and pentaerythritol tri(meth)acrylate; epoxy compounds such as glycidyl (meth)acrylate and ethylene glycol diglycidyl ether; aziridine compounds such as 2,2-bishydroxymethylbutanol-tris[3-(1-aziridinyl)propionate] and 4,4-bis(ethyleneiminocarbonylamino)diphenylmethane; isocyanate compounds such as hexamethylene diisocyanate and biuret-type isocyanate; polyoxazoline compounds having an oxazoline group in the side chain; and alkoxysilane compounds such as vinyltrimethoxysilane and N-(2-aminoethyl) 3-aminopropyltrimethoxysilane. In addition, a known catalyst can be used depending on reactivity of the crosslinking agent, and in addition to improving the film hardness and durability, productivity can be improved. Among these, one kind may be used alone, or two or more kinds may be used in combination.

A content of the crosslinking agent is preferably 3% to 20% by mass and more preferably 5% to 15% by mass with respect to the total solid content of the liquid crystal composition. By setting the content of the crosslinking agent to 3% by mass or more, the effect of improving a crosslinking density can be obtained, and by setting the content of the crosslinking agent to 20% by mass or less, a reduction in stability of the cholesteric liquid crystal layer can be prevented.
"(meth)acrylate" is used in the meanings of "either one of or both of acrylate and methacrylate".

(Alignment control agent)

An alignment control agent which contributes to stably or rapidly forming a cholesteric liquid crystal layer having

planar alignment may be contained in the liquid crystal composition. Examples of the alignment control agent include fluorine (meth)acrylate polymers described in paragraphs 0018 to 0043 of JP2007-272185A, compounds represented by Formulae (I) to (IV) described in paragraphs 0031 to 0034 of JP2012-203237A, and compounds described in JP2013-113913A.

As the alignment control agent, one kind may be used alone, or two or more kinds may be used in combination.

In addition, specific examples of compounds which can be used as the alignment control agent include the following alignment control agent 1 and the following alignment control agent 2.

Alignment control agent 1

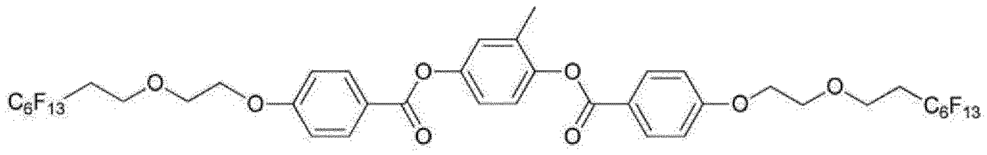

Alignment control agent 2

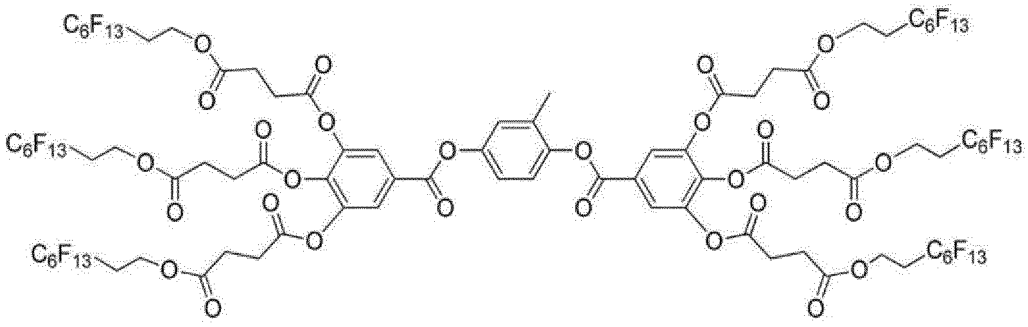

A content of the alignment control agent in the liquid crystal composition is preferably 0.01% to 10% by mass, more preferably 0.01% to 5% by mass, and still more preferably 0.02% to 1% by mass with respect to the total mass of the polymerizable liquid crystal compound.

(Other additives)

In addition, the liquid crystal composition may contain at least one selected from various additives such as a surfactant for adjusting a surface tension of the coating film to make a thickness uniform, and a polymerizable monomer. In addition, as necessary, a polymerization inhibitor, an antioxidant, an ultraviolet absorber, a light stabilizer, a coloring material, metal oxide fine particles, and the like can be further added to the liquid crystal composition as long as optical performance is not degraded.

Regarding the cholesteric liquid crystal layer, a cholesteric liquid crystal layer having fixed cholesteric regularity can be formed by applying a liquid crystal composition, which is obtained by dissolving a polymerizable liquid crystal compound, a polymerization initiator, and as necessary, a chiral agent, a surfactant, or the like in a solvent, onto a transparent substrate, a retardation layer, an alignment layer, or a cholesteric liquid crystal layer which is produced in advance, drying the liquid crystal composition to obtain a coating film, and irradiating the coating film with actinic ray to polymerize the cholesteric liquid crystalline composition.

A laminated film composed of a plurality of cholesteric liquid crystal layers can be formed by repeating the manufacturing process of the cholesteric liquid crystal layer described above.

(Solvent)

The solvent used for preparing the liquid crystal composition is not particularly limited and can be appropriately selected according to the purpose, but an organic solvent is preferably used.

The organic solvent is not particularly limited and can be appropriately selected according to the purpose, and examples thereof include ketones, alkyl halides, amides, sulfoxides, heterocyclic compounds, hydrocarbons, esters, and ethers. Among these, one kind may be used alone, or two or more kinds may be used in combination. Among these, in

consideration of environmental load, ketones are preferable.

(Coating, alignment, and polymerization)

A method of applying the liquid crystal composition to the transparent substrate, the alignment layer, or the cholesteric liquid crystal layer as an underlayer is not particularly limited and can be appropriately selected according to the purpose.
Examples of the coating method include a wire bar coating method, a curtain coating method, an extrusion coating method, a direct gravure coating method, a reverse gravure coating method, a die-coating method, a spin coating method, a dip coating method, a spray coating method, and a slide coating method. In addition, the coating method can be performed by transferring the liquid crystal composition which has been separately applied onto a support.
By heating the applied liquid crystal composition, liquid crystal molecules are aligned. A heating temperature is preferably 200°C or lower and more preferably 130°C or lower. By the alignment treatment, an optical thin film in which the polymerizable liquid crystal compound is twist-aligned so as to have a helical axis in a direction substantially perpendicular to a film surface is obtained.
The liquid crystal composition can be cured by further polymerizing the aligned liquid crystal compound. The polymerization may be thermal polymerization or photopolymerization by light irradiation, but photopolymerization is preferable. It is preferable to use ultraviolet rays for the light irradiation. An irradiation energy is preferably 20 $mJ/cm^2$ to 50 $J/cm^2$ and more preferably 100 to 1,500 $mJ/cm^2$.
In order to promote the photopolymerization reaction, the light irradiation may be performed under heating conditions or in a nitrogen atmosphere. A wavelength of the irradiated ultraviolet rays is preferably 350 to 430 nm. From the viewpoint of stability, a high polymerization reaction rate is preferable, and it is preferably 70% or more and more preferably 80% or more. The polymerization reaction rate can be determined by measuring the consumption rate of polymerizable functional groups using an infrared absorption spectrum.

<Hardcoat layer (HC layer)>

The reflection film according to the embodiment of the present invention includes a hardcoat layer (HC layer). The HC layer provides abrasion resistance which is less likely to be scratched even in a case of being rubbed against hard materials, scratch resistance which prevents damage even in a case of being pressed by hard materials, antifouling property which allows easy removal of dirt even in a case where the dirt adheres to the layer, and the like.
It is preferable that the HC layer in the present invention is obtained by polymerizing and curing at least one compound selected from the group consisting of a polysiloxane-containing compound having a polymerizable group in the molecule and a fluorine-containing compound having a polymerizable group in the molecule, and a polymerizable compound having a polymerizable group in the molecule, other than these compounds, which will be described later; and it is more preferable that the polymerizable groups are radically polymerizable groups. As a result, in the HC layer, the compound selected from the group consisting of the polysiloxane-containing compound and the fluorine-containing compound and the polymerizable compound forming the HC layer are present in a bonded state, thereby imparting more excellent antifouling property. In a case where the compound selected from the group consisting of the polysiloxane-containing compound and the fluorine-containing compound has a polymerizable group, the polymerizable group in the compound selected from the group consisting of the polysiloxane-containing compound and the fluorine-containing compound, which will be described later, reacts to form a bond and is present in the HC layer in a bonded state.
In a case where the HC layer has a laminated structure of two or more layers as will be described later, the compound selected from the group consisting of the polysiloxane-containing compound and the fluorine-containing compound is preferably contained in at least HC layer farthest from the pressure-sensitive adhesive layer, and more preferably contained only in the HC layer farthest from the pressure-sensitive adhesive layer. In a case where at least one compound selected from the group consisting of a polysiloxane-containing compound having a polymerizable group in the molecule and a fluorine-containing compound having a polymerizable group in the molecule is used, it is preferable that at least the HC layer farthest from the pressure-sensitive adhesive layer is a cured film of the compound, and it is more preferable that only the HC layer farthest from the pressure-sensitive adhesive layer is a cured film of the compound.
Hereinafter, specific aspects of the HC layer will be described, but the present invention is not limited to the following aspects.

(Fluorine-containing compound)

The fluorine-containing compound in the present invention is not particularly limited as long as it can impart the rub resistance or the antifouling property to the HC layer, and a compound having a fluorine atom in the molecule can be used. As the fluorine-containing compound, a fluorine-containing antifouling agent having properties of an antifouling

agent is preferably used.

In the present invention, the fluorine-containing compound may be a monomer, an oligomer, or a polymer. The fluorine-containing compound preferably has a substituent which contributes to formation of a bond with other components (for example, the polysiloxane-containing compound, a polymerizable monomer which is a constituent component of the resin, and a resin) or compatibility with the other components in the HC layer. These substituents may be the same or different from each other, and it is preferable that the compound have a plurality of substituents.

The substituent is preferably a polymerizable group, and may be a polymerizable reactive group exhibiting any of radical polymerization properties, polycondensation properties, cationic polymerization properties, anionic polymerization properties, or addition polymerization properties. Preferred examples of the substituent include an acryloyl group, a methacryloyl group, a vinyl group, an allyl group, a cinnamoyl group, an epoxy group, an oxetanyl group, a hydroxyl group, a polyoxyalkylene group, a carboxyl group, and an amino group. Among these, a radically polymerizable group is preferable, and an acryloyl group or a methacryloyl group is more preferable.

The fluorine-containing compound may be a polymer or an oligomer with a compound not containing a fluorine atom.

As the above-described fluorine-containing antifouling agent, a fluorine-based compound represented by General Formula (F) is preferable.

General Formula (F): $(R^f)\text{-}[(W)\text{-}(R^A)_n]_m$

(in the formula, $R^f$ represents a (per)fluoroalkyl group or a (per)fluoropolyether group; W represents a single bond or a linking group; $R^A$ represents a polymerizable unsaturated group; n represents an integer of 1 to 3; and m represents an integer of 1 to 3)

In General Formula (F), $R^A$ represents a polymerizable unsaturated group. The polymerizable unsaturated group is preferably a group having an unsaturated bond capable of causing a radical polymerization reaction by being irradiated with active energy rays such as ultraviolet rays and electron beams (that is, a radically polymerizable group). Examples thereof include a (meth)acryloyl group, a (meth)acryloyloxy group, a vinyl group, and an allyl group, and among these, a (meth)acryloyl group, a (meth)acryloyloxy group, or a group obtained by substituting any hydrogen atom in these groups with a fluorine atom is preferably used.

In General Formula (F), $R^f$ represents a (per)fluoroalkyl group or a (per)fluoropolyether group.

Here, the (per)fluoroalkyl group represents at least one of a fluoroalkyl group or a perfluoroalkyl group, and the (per)fluoropolyether group represents at least one of a fluoroether group or a perfluoropolyether group. From the viewpoint of antifouling property, it is preferable that a fluorine content in $R^f$ is high.

The number of carbon atoms in the (per)fluoroalkyl group is preferably 1 to 20 and more preferably 1 to 10. The (per)fluoroalkyl group may be a linear structure (for example, $-CF_2CF_3$, $-CH_2(CF_2)_4H$, $-CH_2(CF_2)_8CF_3$, and $-CH_2CH_2(CF_2)_4H$), a branched structure (for example, $-CH(CF_3)_2$, $-CH_2CF(CF_3)_2$, $-CH(CH_3)CF_2CF_3$, and $-CH(CH_3)(CF_2)_5CF_2H$), or an alicyclic structure (preferably a 5- or 6-membered ring; for example, a perfluorocyclohexyl group, a perfluorocyclopentyl group, and an alkyl group substituted with these groups).

The (per)fluoropolyether group refers to a (per)fluoroalkyl group having an ether bond, and may be a monovalent group or a di- or higher valent group. Examples of the fluoropolyether group include $-CH_2OCH_2CF_2CF_3$, $-CH_2CH_2OCH_2C_4F_8H$, $-CH_2CH_2OCH_2CH_2C_8F_{17}$, $-CH_2CH_2OCF_2CF_2OCF_2CF_2H$, and a fluorocycloalkyl group having 4 to 20 carbon atoms with 4 or more fluorine atoms. In addition, examples of the perfluoropolyether group include $-(CF_2O)_p-(CF_2CF_2O)_q-$, $-[CF(CF_3)CF_2O]_p-[CF(CF_3)]_q-$, $-(CF_2CF_2CF_2O)_p-$, and $-(CF_2CF_2O)_p-$.

p and q each independently represent an integer of 0 to 20. Here, p + q is an integer of 1 or more.

The total of p and q is preferably 1 to 83, more preferably 1 to 43, and still more preferably 5 to 23.

From the viewpoint of excellent antifouling property, the above-described fluorine-containing antifouling agent preferably has a perfluoropolyether group represented by $-(CF_2O)_p-(CF_2CF_2O)_q-$.

In the present invention, the fluorine-containing antifouling agent preferably has a perfluoropolyether group and a plurality of polymerizable unsaturated groups in one molecule.

In General Formula (F), W represents a single bond or a linking group. Examples of W include an alkylene group, an arylene group, a heteroalkylene group, and a linking group obtained by combining these groups. These linking groups may further have an oxy group, a carbonyl group, a carbonyloxy group, a carbonylimino group, a sulfonamide group, or a functional group obtained by combining these groups.

W is preferably an ethylene group, and more preferably an ethylene group bonded to a carbonylimino group.

A fluorine atom content of the fluorine-containing antifouling agent is not particularly limited, but is preferably 20% by mass or more, more preferably 30% to 70% by mass, and still more preferably 40% to 70% by mass.

Preferred examples of the fluorine-containing antifouling agent include R-2020, M-2020, R-3833, M-3833, and OPTOOL DAC (all trade names) which are manufactured by DAIKIN INDUSTRIES, Ltd.; and MEGAFAC F-171, F-172, F-179A, RS-78, and RS-90, and Defencer MCF-300 and MCF-323 (all are trade names) manufactured by Dainippon Ink

and Chemicals Inc.

From the viewpoint of rub resistance, a product of n and m (n × m) in General Formula (F) is preferably 2 or more, and more preferably 4 or more.

In General Formula (F), preferred specific examples of an aspect in which n and m are both 1 include compounds represented by General Formulae (F-1) to (F-3).

General Formula (F-1): $R^{f2}(CF_2CF_2)_pR^{22}CH_2CH_2R^{21}OCOCR^{11}=CH_2$

(in the formula, $R^{f2}$ represents a fluorine atom or a fluoroalkyl group having 1 to 10 carbon atoms; $R^{11}$ represents a hydrogen atom or a methyl group; $R^{21}$ represents a single bond or an alkylene group; $R^{22}$ represents a single bond or a divalent linking group; and p is an integer indicating a degree of polymerization, where the degree p of polymerization is k (k is an integer of 3 or more) or more)

In a case where $R^{22}$ represents a divalent linking group, examples of the divalent linking group include the same as those for W described above.

Examples of a telomer-type (meth)acrylate containing a fluorine atom in General Formula (F-1) include partially or fully fluorinated alkyl ester derivatives of (meth)acrylic acid.

In a case where telomerization is used in the synthesis, depending on telomerization conditions and separation conditions of a reaction mixture, the compound represented by General Formula (F-1) may contain a plurality of fluorine-containing (meth)acrylic acid esters, in which p's of $R^{f2}(CF_2CF_2)_pR^{22}CH_2CH_2R^{21}O$- which is the group represented by General Formula (F-1) are respectively k, k+1, k+2, ..., and the like.

General Formula (F-2): $F(CF_2)_q$-$CH_2$-CHX-$CH_2Y$

(in the formula, q represents an integer of 1 to 20; X and Y represent a (meth)acryloyloxy group or a hydroxyl group; and at least one of X or Y represents a (meth)acryloyloxy group)

The fluorine-containing (meth)acrylic acid ester represented by General Formula (F-2) has a fluoroalkyl group having 1 to 20 carbon atoms and having a trifluoromethyl group (-$CF_3$) at a terminal, and trifluoromethyl groups are effectively aligned on a surface even with a small amount of the fluorine-containing (meth)acrylic acid ester.

From the viewpoint of rub resistance and ease of producing the compound, q is preferably 6 to 20 and more preferably 8 to 10. The fluorine-containing (meth)acrylic acid ester having a fluoroalkyl group with 8 to 10 carbon atoms exhibits an excellent reduction effect on the friction coefficient and has excellent rub resistance, compared to fluorine-containing (meth)acrylic acid esters with a fluoroalkyl group of other chain lengths.

Specific examples of the fluorine-containing (meth)acrylic acid ester represented by General Formula (F-2) include 1-(meth)acryloyloxy-2-hydroxy-4,4,5,5,6,6,7,7,8,8,9,9,10,10,11,11,12,12,13,13,13-heneicosafl uorotridecane, 2-(meth)acryloyloxy-1-hydroxy-4,4,5,5,6,6,7,7,8,8,9,9,10,10,11,11,12,12,13,13,13-heneicosafl uorotridecane, and 1,2-bis(meth)acryloyloxy-4,4,5,5,6,6,7,7,8,8,9,9,10,10,11,11,12,12,13,13,13-heneicosafluorotr idecane. Among these, 1-acryloyloxy-2-hydroxy-4,4,5,5,6,6,7,7,8,8,9,9,10,10,11,11,12,12,13,13,13-heneicosafluorotri decane is preferable.

General Formula (F-3): $F(CF_2)_rO(CF_2CF_2O)_sCF_2CH_2OCOCR^3=CH_2$

(in the formula, $R^3$ represents a hydrogen atom or a methyl group; s represents an integer of 1 to 20, and r represents an integer of 1 to 4)

The fluorine atom-containing monofunctional (meth)acrylate represented by General Formula (F-3) described above can be obtained by reacting a fluorine atom-containing alcohol compound represented by General Formula (FG-3) with a (meth)acrylic acid halide.

General Formula (FG-3): $F(CF_2)_rO(CF_2CF_2O)_sCF_2CH_2OH$

(in General Formula (FG-3), s represents an integer of 1 to 20; and r represents an integer of 1 to 4)

Specific examples of the fluorine atom-containing alcohol compound represented by General Formula (FG-3) described above include 1H,1H-perfluoro-3,6-dioxaheptan-1-ol, 1H,1H-perfluoro-3,6-dioxaoctan-1-ol, 1H,1H-perfluoro-3,6-dioxadecan-1-ol, 1H,1H-perfluoro-3,6,9-trioxadecan-1-ol, 1H,1H-perfluoro-3,6,9-trioxaundecan-1-ol, 1H,1H-perfluoro-3,6,9-trioxatridecan-1-ol, 1H,1H-perfluoro-3,6,9,12-tetraoxatridecan-1-ol, 1H,1H-perfluoro-3,6,9,12-tetraoxatetradecan-1-ol, 1H,1H-perfluoro-3,6,9,12-tetraoxahexadecan-1-ol, 1H,1H-perfluoro-3,6,9,12,15-pentaoxahexadecan-1-ol, 1H,1H-perfluoro-3,6,9,12,15 -pentaoxaheptadecan-1-ol, 1H,1H-perfluoro-3,6,9,12,15-pentaoxanonadecan-1-ol, 1H,1H-perfluoro-3,6,9,12,15,18-hexaoxaicosan-1-ol, 1H,1H-perfluoro-3,6,9,12,15,18-hexaoxadocosan-1-ol, 1H,1H-perfluoro-3,6,9,12,15,18,21-heptaoxatricosan-1-ol, and 1H,1H-perfluoro-3,6,9,12,15,18,21-heptaoxapentacosan-1-ol.

These compounds can be obtained as a commercially available product, and specific examples thereof include 1H,1H-perfluoro-3,6-dioxaheptan-1-ol (trade name "C5GOL" manufactured by Exfloor), 1H,1H-perfluoro-3,6,9-trioxadecan-1-ol (trade name "C7GOL" manufactured by Exfloor), 1H,1H-perfluoro-3,6-dioxadecan-1-ol (trade name "C8GOL" manufactured by Exfloor), 1H,1H-perfluoro-3,6,9-trioxatridecan-1-ol (trade name "C10GOL" manufactured by Exfloor), and 1H,1H-perfluoro-3,6,9,12-tetraoxahexadecane-1-ol (trade name "C12GOL" manufactured by Exfloor).
Among these, 1H,1H-perfluoro-3,6,9,12-tetraoxatridecan-1-ol is preferable.
In addition, examples of the (meth)acrylic acid halide which is reacted with the fluorine atom-containing alcohol compound represented by General Formula (FG-3) described include (meth)acrylic acid fluoride, (meth)acrylic acid chloride, (meth)acrylic acid bromide, and (meth)acrylic acid iodide. From the viewpoint of ease of obtaining, (meth)acrylic acid chloride is preferable.
Preferred specific examples of the compound represented by General Formula (F-3) are shown below, but the compound is not limited thereto. Preferred specific examples represented by General Formula (F-3) are also described in JP2007-264221A.

(b-1): $F_9C_4OC_2F_4OC_2F_4OCF_2CH_2OCOCH{=}CH_2$
(b-2): $F_9C_4OC_2F_4OC_2F_4OCF_2CH_2OCOC(CH_3){=}CH_2$

In addition to the compound represented by General Formula (F-3), a compound represented by General Formula (F-3)' is also preferable.

General Formula (F-3)': $R^{f3}\text{-}[(O)_c(O{=}C)_b(CX^4X^5)_a\text{-}CX^3{=}CX^1X^2]$

(in the formula, $X^1$ and $X^2$ represent H or F; $X^3$ represents H, F, $CH_3$, or $CF_3$; $X^4$ and $X^5$ represent H, F, or $CF_3$; a, b, and c represent 0 or 1; and $R^{f3}$ represents a fluorine-containing organic group having 18 to 200 carbon atoms with an ether bond)
The compound represented by General Formula (F-3)' is a fluorine-containing unsaturated compound having 6 or more repeating units of General Formula (FG-3)': $-(CX^6{}_2CF_2CF_2O)-$ (in the formula, $X^6$ is F or H) in the $R^{f3}$ group.
Examples of the fluorine-containing polyether compound represented by General Formula (F-3)' include:

General Formula (c-1) $R^{f3}\text{-}[(O)(O{=}C)_b\text{-}CX^3{=}CX^1X^2]$;

General Formula (c-2) $R^{f3}\text{-}[(O)(O{=}C)\text{-}CX^3{=}CX^1X^2]$;

and

General Formula (c-3) $R^{f3}\text{-}[(O)_c(O{=}C)\text{-}CF{=}CH_2]$,

(the definition of each symbol in General Formulae (c-1) to (c-3) has the same meaning as that of General Formula (FG-3)').
As the polymerizable unsaturated group of the above-described fluorine-containing polyether compound, those having the following structures can be preferably used.
In addition, the above-described fluorine-containing polyether compound represented by General Formula (F-3)' may have a plurality of polymerizable unsaturated groups.
In the present invention, it is preferable that a compound having a structure of $-O(C{=}O)CF{=}CH_2$ has particularly high polymerization (curing) reactivity, and a cured substance can be obtained efficiently.
It is important that the above-described fluorine-containing polyether compound represented by General Formula (F-3)' includes 6 or more repeating units of the fluorine-containing polyether chain represented by General Formula (FG-3)' in the $R^{f3}$ group, and it is possible to impart the rub resistance.
More specifically, the compound may be a mixture containing a compound having 6 or more repeating units of the fluorine-containing polyether chain, and in a case of being used in the form of a mixture, it is preferable to use a mixture having the highest proportion of fluorine-containing unsaturated compounds having 6 or more repeating units of polyether chains, in the distribution of a fluorine-containing unsaturated compound having less than 6 repeating units and a fluorine-containing unsaturated compound having 6 or more repeating units.
The number of repeating units of the fluorine-containing polyether chain represented by General Formula (FG-3)' is preferably 6 or more, more preferably 10 or more, still more preferably 18 or more, and particularly preferably 20 or more. Accordingly, a dynamic friction coefficient can be reduced, and the rub resistance can be improved. Furthermore, the fluorine-containing polyether chain may be present at the terminal of the $R^{f3}$ group or may be present in the chain.
Specifically, the $R^{f3}$ group is preferably a group represented by General Formula (c-4): $R^4\text{-}(CX^6{}_2CF_2CF_2O)_t\text{-}(R^5)_e\text{-}$ (in the formula, $X^6$ has the same meaning as $X^6$ in the fluorine-containing polyether chain

represented by Formula (FG-3)'; $R^4$ represents a hydrogen atom, a halogen atom, an alkyl group, a fluorine-containing alkyl group, an alkyl group including an ether bond, or a fluorine-containing alkyl group including an ether bond; $R^5$ represents a di- or higher valent organic group; t represents an integer of 6 to 66; and e represents 0 or 1).

That is, the $R^{f3}$ group is a fluorine-containing organic group which is bonded to a reactive carbon-carbon double bond through a di- or higher valent organic group $R^5$ and further has $R^4$ at the terminal.

$R^5$ may be any organic group as long as it can bond the fluorine-containing polyether chain represented by General Formula (FG-3)' to the reactive carbon-carbon double bond. Examples thereof include an alkylene group, a fluorine-containing alkylene group, an alkylene group including an ether bond, and a fluorine-containing alkylene group including an ether bond. Among these, from the viewpoint of transparency and low refractive index, a fluorine-containing alkylene group or a fluorine-containing alkylene group including an ether bond is preferable.

As specific examples of the fluorine-containing polyether compound represented by General Formula (F-3)', compounds described in WO2003/022906A are preferably used.

In the present invention, $CH_2$=CF-COO-$CH_2CF_2CF_2$-($OCF_2CF_2CF_2$)$_7$-$OC_3F_7$ is preferable.

In General Formula (F), examples of an aspect in which n and m are not simultaneously 1 include compounds represented by General Formula (F-4) and General Formula (F-5).

General Formula (F-4): $(R^{f1})$-[(W)-$(R^A)_n]_m$

(in General Formula (F-4), $R^{f1}$ represents a (per)fluoroalkyl group or a (per)fluoropolyether group; W represents a linking group; $R^A$ represents a polymerizable unsaturated group; n represents an integer of 1 to 3; and m represents an integer of 1 to 3, where n and m are not simultaneously 1)

From the viewpoint of excellent water and oil repellency and excellent durability of the water and oil repellency (antifouling durability), it is preferable that n is 2 or 3 and m is 1 to 3, it is more preferable that n is 2 or 3 and m is 2 or 3, and it is still more preferable that n is 3 and m is 2 or 3.

$R^{f1}$ can be monovalent to trivalent. In a case where $R^{f1}$ is monovalent, the terminal group is preferably $(C_nF_{2n+1})$-, $(C_nF_{2n+1}O)$-, $(XC_nF_{2n}O)$-, or $(XC_nF_{2n+1})$- (in the formulae, X represents a hydrogen atom, a chlorine atom, or a bromine atom; and n represents an integer of 1 to 10). Specifically, $CF_3O(C_2F_4O)_pCF_2$-, $C_3F_7O(CF_2CF_2CF_2O)_pCF_2CF_2$-, $C_3F_{70}(CF(CF_3)CF_{20})_pCF(CF_3)$-, or $F(CF(CF_3)CF_{20})_pCF(CF_3)$- is preferable.

The average value of p is 0 to 50, preferably 3 to 30, more preferably 3 to 20, and still more preferably 4 to 15.

In a case where $R^{f1}$ is divalent, $-(CF_{20})_q(C_2F_{40})_rCF_2$-, $-(CF_2)_3O(C_4F_8O)_r(CF_2)_3$-, $-CF_2O(C_2F_4O)_rCF_2$-, $-C_2F_4O(C_3F_6O)_rC_2F_4$-, $-CF(CF_3)(OCF_2CF(CF_3))_sOC_tF_{2t}O(CF(CF_3)CF_{20}),CF(CF_3)$-, or $-(CF(CF_3)CF_{20})_pCF(CF_3)$- is preferable.

Here, the average values of p, q, r, and s in the formulae are 0 to 50. Among these, 3 to 30 is preferable, 3 to 20 is more preferable, and 4 to 15 is still more preferable. t is an integer of 2 to 6.

Preferred specific examples and synthesis methods of the compound represented by General Formula (F-4) are described in WO2005/113690A.

Hereinafter, the compound represented by General Formula (F-4) is specifically shown by describing a compound having an average value of p of 6 or 7 in $F(CF(CF_3)CF_2O)_pCF(CF_3)$- as "HFPO-", and by describing a compound having an average value of p of 6 or 7 in $-(CF(CF_3)CF_2O)_pCF(CF_3)$- as "-HFPO-"; but the compound is not limited thereto.

(d-1): HFPO-CONH-C-$(CH_2OCOCH{=}CH_2)_2CH_2CH_3$
(d-2): HFPO-CONH-C-$(CH_2OCOCH{=}CH_2)_2H$
(d-3): 1:1 Michael addition polymerized substance of HFPO-CONH-$C_3H_6NHCH_3$ and trimethylolpropane triacrylate
(d-4): $(CH_2{=}CHCOOCH_2)_2H$-C-CONH-HFPO-CONH-$(CH_2OCOCH{=}CH_2)_2H$
(d-5): $(CH_2{=}CHCOOCH_2)_3$-C-CONH-HFPO-CONH-C-$(CH_2OCOCH{=}CH_2)_3$

Furthermore, as the compound represented by General Formula (F-4), a compound represented by General Formula (F-5) can also be used.

General Formula (F-5): $CH_2{=}CX^1$-COO-CHY-$CH_2$-OCO-$CX^2{=}CH_2$

(in the formula, $X^1$ and $X^2$ represent a hydrogen atom or a methyl group; and Y represents a fluoroalkyl group having 2 to 20 carbon atoms with 3 or more fluorine atoms or a fluorocycloalkyl group having 4 to 20 carbon atoms with 4 or more fluorine atoms)

In the present invention, a compound in which a polymerizable unsaturated group is a (meth)acryloyloxy group may have a plurality of (meth)acryloyloxy groups. In a case where the fluorine-containing antifouling agent has a plurality of (meth)acryloyloxy groups, it has a three-dimensional network structure in a case of being cured, has a high glass transition

temperature, has low transferability of the antifouling agent, and can improve durability against repeated wiping of dirt. Furthermore, an HC layer having excellent heat resistance, weather fastness, and the like can be obtained.

Preferred specific examples of the compound represented by General Formula (F-5) described above include di(meth)acrylic acid-2,2,2-trifluoroethyl ethylene glycol, di(meth)acrylic acid-2,2,3,3,3-pentafluoropropyl ethylene glycol, di(meth)acrylic acid-2,2,3,3,4,4,4-heptafluorobutyl ethylene glycol, di(meth)acrylic acid-2,2,3,3,4,4,5,5,5-nonafluoropentyl ethylene glycol, di(meth)acrylic acid-2,2,3,3,4,4,5,5,6,6,6-undecafluorohexyl ethylene glycol, di(meth)acrylic acid-2,2,3,3,4,4,5,5,6,6,7,7,7-tridecafluoroheptyl ethylene glycol, di(meth)acrylic acid-2,2,3,3,4,4,5,5,6,6,7,7,8,8,8-pentadecafluorooctyl ethylene glycol, di(meth)acrylic acid-3,3,4,4,5,5,6,6,7,7,8,8,8-tridecafluorooctyl ethylene glycol, di(meth)acrylic acid-2,2,3,3,4,4,5,5,6,6,7,7,8,8,9,9,9-heptadecafluorononyl ethylene glycol, di(meth)acrylic acid-2,2,3,3,4,4,5,5,6,6,7,7,8,8,9,9,10,10,10-nonadecafluorodecyl ethylene glycol, di(meth)acrylic acid-3,3,4,4,5,5,6,6,7,7,8,8,9,9,10,10,10-heptadecafluorodecyl ethylene glycol, di(meth)acrylic acid-2-trifluoromethyl-3,3,3-trifluoropropyl ethylene glycol, di(meth)acrylic acid-3-trifluoromethyl-4,4,4-trifluorobutyl ethylene glycol, di(meth)acrylic acid-1-methyl-2,2,3,3,3-pentafluoropropylethylene glycol, and di(meth)acrylic acid-1-methyl-2,2,3,3,4,4,4-heptafluorobutylethylene glycol. In a case of use, one kind thereof can be used alone or a mixture can be used. In preparing such a di(meth)acrylic acid ester, it can be produced by a known method as exemplified in JP1994-306326A (JP-H6-306326A). In the present invention, 2,2,3,3,4,4,5,5,6,6,7,7,8,8,9,9,9-heptadecafluorononylethylene glycol diacrylate is preferably used.

In the present invention, the compound in which the polymerizable unsaturated group is a (meth)acryloyloxy group may be a compound having a plurality of (per)fluoroalkyl groups or a plurality of (per)fluoropolyether groups in one molecule.

A weight-average molecular weight ($M_w$) of the fluorine-containing compound having a polymerizable unsaturated group can be measured by molecular exclusion chromatography, for example, gel permeation chromatography (GPC) or the like.

Mw of the fluorine-containing compound used in the present invention is preferably 400 or more and less than 50,000, more preferably 400 or more and less than 30,000, and still more preferably 400 or more and less than 25,000. In a case of being equal to or more than the above-described lower limit value, surface migratory property of the antifouling agent in the HC layer is high, which is preferable. In addition, in a case of being less than the above-described upper limit value, the surface migratory property of the fluorine-containing compound is not hindered during the step of applying a curable composition for forming the HC layer, which will be described later, and curing the curable composition. Therefore, uneven distribution on the surface of the HC layer is easily obtained, improving the rub resistance and the film hardness, which is preferable. Furthermore, the fluorine-containing compound may be multimodal with regard to the weight-average molecular weight.

In a case where the HC layer is formed as will be described later, it is preferable to use a curable composition for forming the HC layer. The fluorine-containing compound may be contained in the curable composition for forming the HC layer.

A content of the fluorine-containing compound in the curable composition for forming the HC layer is preferably 0.01% to 5% by mass, more preferably 0.1% to 5% by mass, still more preferably 0.5% to 5% by mass, and particularly preferably 0.5% to 2% by mass with respect to the total solid content in the curable composition for forming the HC layer. In a case where the addition amount is equal to or more than the above-described upper limit value, the friction coefficient can be reduced, and the rub resistance is further improved. In addition, in a case where the addition amount is equal to or less than the above-described lower limit value, precipitation of the fluorine-containing compound on the surface, due to insufficient mixing with the polymerizable compound (resin component in a case of forming the HC layer) in the curable composition for forming the HC layer, does not occur, and whitening of the HC layer and formation of white powder on the surface are suppressed, which is preferable.

In a case where the HC layer has a laminated structure of two or more layers as will be described later, the addition amount means an amount of the fluorine-containing compound or the polysiloxane-containing compound contained in the curable composition for forming the HC layer.

The solid content in the curable composition for forming the HC layer means components other than a solvent in the curable composition for forming the HC layer. Even in a case where a component is liquid, it is regarded as the solid content.

(Polysiloxane-containing compound)

The polysiloxane-containing compound in the present invention is not particularly limited, and examples thereof include compounds having a polysiloxane structure in the molecule.

The polysiloxane structure included in the polysiloxane-containing compound may be linear, branched, or cyclic.

As the polysiloxane-containing compound, a polysiloxane antifouling agent having properties of the antifouling agent is preferably used.

Preferred examples of the above-described polysiloxane antifouling agent include a compound represented by General Formula (F-6).

General Formula (F-6): $R_aR^A_bSiO_{(4-a-b)/2}$

(in the formula, R represents a hydrogen atom, a methyl group, an ethyl group, a propyl group, or a phenyl group; $R^A$ represents an organic group containing a polymerizable unsaturated group; and 0 < a, 0 < b, and a + b < 4)

a is preferably 1 to 2.75 and more preferably 1 to 2.5, and is 1 or more for facilitating industrial synthesis of the compound and 2.75 or less for easily achieving both curing properties and antifouling properties.

Examples of the polymerizable unsaturated group in $R^A$ include the same polymerizable unsaturated group as $R^A$ in General Formula (F) described above (that is, the radically polymerizable group); and a (meth)acryloyl group, a (meth)acryloyloxy group, or a group in which any hydrogen atom in these groups is substituted with a fluorine atom is preferable.

Even in the polysiloxane antifouling agent, from the viewpoint of film hardness, it is preferable to have a plurality of polymerizable unsaturated groups in one molecule.

The polysiloxane antifouling agent is preferably a polydimethylsiloxane having a plurality of polymerizable unsaturated groups in one molecule.

Preferred examples of the polysiloxane antifouling agent include a compound in which a compound chain having a plurality of dimethylsilyloxy units as repeating units has a substituent at the terminal and/or the side chain.

The compound chain having dimethylsilyloxy as a repeating unit may include a structural unit other than dimethylsilyloxy. These substituents may be the same or different from each other, and it is preferable that the compound have a plurality of substituents.

The substituent is preferably a polymerizable group, and it is sufficient that the substituent is a polymerizable group exhibiting any of radical polymerization properties, polycondensation properties, cationic polymerization properties, anionic polymerization properties, or addition polymerization properties. Examples of a preferred substituent include groups including a (meth)acryloyl group, a ((meth)acryloyloxy) group, a vinyl group, an allyl group, a cinnamoyl group, an epoxy group, an oxetanyl group, a hydroxyl group, a fluoroalkyl group, a polyoxyalkylene group, a carboxyl group, an amino group, and the like.

Among these, a radically polymerizable group is preferable, and a (meth)acryloyloxy group is particularly preferable from the viewpoint of improving the antifouling property.

In addition, from the viewpoint of achieving both the film hardness and the antifouling property, the number of substituents in the compound described above is, as an equivalent amount of functional group, preferably 100 to 10,000 g/mol, more preferably 100 to 3,000 g/mol, still more preferably 100 to 2,000 g/mol, and particularly preferably 100 to 1,000 g/mol. By setting the equivalent amount of functional group to equal to or more than the above-described lower limit value, the polymerizable compound (resin component in a case of forming the HC layer) in the curable composition for forming the HC layer is not excessively compatible with the compound, and thus the surface migratory property of the antifouling agent in the HC layer is high, which is preferable. By setting the equivalent amount of functional group to equal to or less than the above-described upper limit value, the film hardness can be improved and the antifouling property can be improved, which is preferable.

$R^A$ is preferably an organic group including a (meth)acryloyl group, and from the viewpoint of ease of industrial synthesis, it is more preferable that a bond to a Si atom is an Si-O-C bond. b is preferably 0.4 to 0.8 and more preferably 0.6 to 0.8; and in a case of being equal to or more than the above-described lower limit value, the curing properties are improved, and in a case of being equal to or less than the above-described upper limit value, the antifouling property is improved.

In addition, a + b is preferably 3 to 3.7 and more preferably 3 to 3.5. In a case of being equal to or more than the above-described lower limit value, the uneven distribution of the compound on the surface of the HC layer is likely to occur, and in a case of being equal to or less than the above-described upper limit value, both the curing properties and the antifouling property can be improved.

The polysiloxane antifouling agent preferably has 3 or more Si atoms in one molecule, and more preferably has 3 to 40 Si atoms in one molecule. In a case where the number of Si atoms is 3 or more, the uneven distribution of the compound on the surface of the HC layer is promoted, and a sufficient antifouling property is more easily obtained.

The polysiloxane antifouling agent can be produced by a known method such as the method exemplified in JP2007-145884A.

As an additive having a polysiloxane structure, polysiloxanes (for example, "KF-96-10CS", "KF-100T", "X-22-169AS", "KF-102", "X-22-3701IE", "X-22-164", "X-22-164A", "X-22-164AS", "X-22-164B", "X-22-164C", "X-22-5002", "X-22-173B", "X-22-174D", "X-22-167B", and "X-22-161AS" (trade names), all of which are manufactured by Shin-Etsu Chemical Co., Ltd.; "AK-5", "AK-30", and "AK-32" (trade names), all of which are manufactured by Toa Gosei Co., Ltd.; "SILAPLANE FM0725" and "Silaplane FM0721" (trade names), both of which are manufactured by Chisso

Corporation; "DMS-U22", "RMS-033", and "UMS-182" (trade names), all of which are manufactured by Gelest; "Akrit 8SS-723" (trade name) manufactured by TAISEI FINE CHEMICAL CO,. LTD.; and the like) are preferable. In addition, polysiloxane-based compounds described in Table 2 and Table 3 of JP2003-112383A are also preferable.

A weight-average molecular weight of the polysiloxane-containing compound is preferably 300 or more, more preferably 300 to 100,000, and still more preferably 300 to 30,000. In a case where the weight-average molecular weight of the polysiloxane-containing compound is 300 or more, the uneven distribution of the polysiloxane-containing compound on the surface of the HC layer is promoted, and the rub resistance and the hardness are improved.

A content of the polysiloxane-containing compound in the curable composition for forming the HC layer is preferably 0.01% to 5% by mass, more preferably 0.1% to 5% by mass, still more preferably 0.5% to 5% by mass, and particularly preferably 0.5% to 2% by mass with respect to the total solid content in the curable composition for forming the HC layer. In a case where the addition amount is equal to or more than the above-described lower limit value, the antifouling property can be further improved. In addition, in a case where the addition amount is equal to or less than the above-described upper limit value, precipitation of the polysiloxane-containing compound on the surface, due to insufficient mixing with the polymerizable compound (resin component in a case of forming the HC layer) in the curable composition for forming the HC layer, does not occur, and whitening of the HC layer and formation of white powder on the surface are suppressed, which is preferable.

In a case where the HC layer has a laminated structure of two or more layers as will be described later, the addition amount means an amount of the polysiloxane-containing compound contained in the curable composition for forming the HC layer.

The HC layer used in the present invention can be obtained by irradiating the curable composition for forming the HC layer with active energy rays to cure the composition. In the present specification, the "active energy rays" refers to ionizing radiation, and includes X-rays, ultraviolet rays, visible rays, infrared rays, electron beams, $\alpha$-rays, $\beta$-rays, $\gamma$-rays, and the like.

The curable composition for forming the HC layer, used for forming the HC layer, contains at least one component having a property of being cured by irradiation with the active energy rays (hereinafter, also referred to as "active energy ray-curable component"). The active energy ray-curable component is preferably at least one polymerizable compound selected from a radically polymerizable compound and a cationically polymerizable compound. In the present specification, the "polymerizable compound" is a compound having a polymerizable group in a molecule, and it is sufficient that the number of polymerizable groups is 1 or more in one molecule. The polymerizable group is a group which can participate in a polymerization reaction, and specific examples thereof include groups included in various polymerizable compounds, which will be described later. In addition, examples of the polymerization reaction include various polymerization reactions such as radical polymerization, cationic polymerization, and anionic polymerization.

In addition, it is preferable that the HC layer in the present invention is obtained by irradiating the curable composition for forming the HC layer, which contains at least one compound selected from the group consisting of a fluorine-containing compound having a polymerizable group in the molecule and a polysiloxane-containing compound having a polymerizable group in the molecule, and contains a polymerizable compound having a polymerizable group in a molecule, other than these compounds, with the active energy rays to polymerize and cure the curable composition. In this case, the polymerizable groups included in the polysiloxane-containing compound, the fluorine-containing compound, and the polymerizable compound are more preferably radically polymerizable groups.

The HC layer used in the present invention may have a single-layer structure or a laminated structure of two or more layers, and an HC layer having a single-layer structure or an HC layer having a laminated structure of two or more layers, which will be described in detail below, is preferable.

1) Single-layer structure

Examples of a preferred aspect of the curable composition for forming the HC layer having a single-layer structure include, as a first aspect, a curable composition for forming an HC layer, containing at least one polymerizable compound having two or more ethylenically unsaturated groups in one molecule. The ethylenically unsaturated group refers to a functional group containing an ethylenically unsaturated double bond. In addition, examples thereof also include, as a second aspect, a curable composition for forming an HC layer, containing at least one radically polymerizable compound and at least one cationically polymerizable compound.

Hereinafter, the curable composition for forming the HC layer according to the first aspect will be described.

Examples of the polymerizable compound having two or more ethylenically unsaturated groups in one molecule, contained in the curable composition for forming the HC layer according to the first aspect, include polyfunctional monomers containing two or more polymerizable reactive functional groups, for example, an ester of a polyhydric alcohol and (meth)acrylic acid [such as ethylene glycol di(meth)acrylate, butanediol di(meth)acrylate, hexanediol di(meth)acrylate, 1,4-cyclohexane diacrylate, pentaerythritol tetra(meth)acrylate, pentaerythritol tri(meth)acrylate, trimethylolpropane tri(meth)acrylate, trimethylol ethanetri(meth)acrylate, dipentaerythritol tetra(meth)acrylate, dipentaerythritol

penta(meth)acrylate, dipentaerythritol hexa(meth)acrylate, pentaerythritol hexa(meth)acrylate, 1,2,3-cyclohexane tetramethacrylate, polyurethane polyacrylate, and polyester polyacrylate], ethylene oxide-modified products, polyethylene oxide-modified products, and caprolactone-modified products of the ester, vinylbenzene and derivatives thereof [such as 1,4-divinylbenzene, 4-vinylbenzoic acid-2-acryloylethyl ester, and 1,4-divinylcyclohexanone], vinyl sulfone (such as divinyl sulfone), acrylamide (such as methylene bisacrylamide), and methacrylamide.

The number of ethylenically unsaturated groups included in the above-described polymerizable compound having two or more ethylenically unsaturated groups in one molecule is not particularly limited, but is preferably 2 to 10, more preferably 2 to 6, still more preferably 4 to 6, and particularly preferably 5 or 6.

The polymerization of the polymerizable compound having an ethylenically unsaturated group can be carried out by irradiation with active energy rays in the presence of a radical photopolymerization initiator. As the radical photopolymerization initiator, a radical photopolymerization initiator described later is preferably adopted. In addition, regarding a content ratio of the radical photopolymerization initiator to the polymerizable compound having an ethylenically unsaturated group in the curable composition for forming the HC layer, description of a content ratio of the radical photopolymerization initiator to the radically polymerizable compound, which will be described later, is preferably adopted.

Next, the curable composition for forming the HC layer according to the second aspect will be described.

The curable composition for forming the HC layer according to the second aspect preferably contains at least one radically polymerizable compound and at least one cationically polymerizable compound. Examples of a preferred aspect thereof include a curable composition for forming an HC layer, containing a radically polymerizable compound including, in one molecule, two or more radically polymerizable groups selected from the group consisting of an acryloyl group and a methacryloyl group, and a cationically polymerizable compound.

It is more preferable that the above-described curable composition for forming the HC layer contains a radical photopolymerization initiator and a cationic photopolymerization initiator. Examples of a preferred aspect of the second aspect include a curable composition for forming an HC layer, containing a radically polymerizable compound including, in one molecule, two or more radically polymerizable groups selected from the group consisting of an acryloyl group and a methacryloyl group, a cationically polymerizable compound, a radical photopolymerization initiator, and a cationic photopolymerization initiator.

Hereinafter, the present aspect will be referred to as a second aspect (1).

In the second aspect (1), the above-described radically polymerizable compound preferably includes two or more radically polymerizable groups in one molecule, together with one or more urethane bonds in one molecule.

Examples of another preferred aspect of the second aspect include a curable composition for forming an HC layer, containing a) a cationically polymerizable compound having a molecular weight of 300 or less, which includes an alicyclic epoxy group and an ethylenically unsaturated group, in which the number of alicyclic epoxy groups in one molecule is 1 and the number of ethylenically unsaturated groups in one molecule is 1, b) a radically polymerizable compound including three or more ethylenically unsaturated groups in one molecule, c) a radical polymerization initiator, and d) a cationic polymerization initiator.

Hereinafter, the present aspect will be referred to as a second aspect (2). Preferably, the HC layer obtained by curing the curable composition for forming the HC layer according to the second aspect (2) can contain the structure derived from a) in an amount of 5 to 70% by mass, the structure derived from b) in an amount of 25 to 80% by mass, c) in an amount of 0.1 to 10% by mass, and d) in an amount of 0.1 to 10% by mass, in a case where the total solid content of the HC layer is set to 100% by mass. In addition, in one aspect, in a case where the total solid content of the curable composition for forming the HC layer according to the second aspect (2) is set to 100% by mass, it is preferable that a) is contained in an amount of 15% to 70% by mass. The "alicyclic epoxy group" refers to a monovalent functional group having a cyclic structure, in which an epoxy ring and a saturated hydrocarbon ring are fused.

Hereinafter, various components which can be contained in the curable composition for forming an HC layer according to the second aspect, preferably the second aspect (1) or (2), will be described in more detail.

-Radically polymerizable compound-

The curable composition for forming the HC layer according to the second aspect contains at least one radically polymerizable compound and at least one cationically polymerizable compound. The radically polymerizable compound in the second aspect (1) includes two or more radically polymerizable groups selected from the group consisting of an acryloyl group and a methacryloyl group in one molecule. The above-described radically polymerizable compound can include, for example, preferably 2 to 10, more preferably 2 to 6, still more preferably 4 to 6, and particularly preferably 5 to 6 radically polymerizable groups selected from the group consisting of an acryloyl group and a methacryloyl group in one molecule.

As the above-described radically polymerizable compound, a radically polymerizable compound having a molecular weight of 200 or more and less than 1,000 is preferable. In the present specification, the "molecular weight" refers to a weight-average molecular weight measured by gel permeation chromatography (GPC) in terms of polystyrene

for a polymer. The following measurement conditions can be mentioned as an example of specific measurement conditions for the weight-average molecular weight.

GPC device: HLC-8120 (manufactured by Tosoh Corporation)
Column: TSK gel Multipore HXL-M (manufactured by TOSOH CORPORATION, inner diameter 7.8 mm x column length 30.0 cm)
Eluent: tetrahydrofuran

In addition, the curable composition for forming the HC layer according to the second aspect (1) may further include one or more radically polymerizable compounds other than the radically polymerizable compound including, in one molecule, two or more radically polymerizable groups selected from the group consisting of an acryloyl group and a methacryloyl group.
Examples of the radically polymerizable compound include the following compounds. However, the present invention is not limited to the following exemplary compounds.
Examples thereof include bifunctional (meth)acrylate compounds such as polyethylene glycol 200 di(meth)acrylate, polyethylene glycol 300 di(meth)acrylate, polyethylene glycol 400 di(meth)acrylate, polyethylene glycol 600 di(meth)acrylate, triethylene glycol di(meth)acrylate, epichlorohydrin-modified ethylene glycol di(meth)acrylate (as a commercially available product, for example, Denacol DA-811 manufactured by Nagase & Co., Ltd.), polypropylene glycol 200 di(meth)acrylate, polypropylene glycol 400 di(meth)acrylate, polypropylene glycol 700 di(meth)acrylate, ethylene oxide (EO)/propylene oxide (PO) block polyether di(meth)acrylate (as a commercially available product, for example, BLEMMER PET series manufactured by NOF CORPORATION), dipropylene glycol di(meth)acrylate, bisphenol A EO-added di(meth)acrylate (as a commercially available product, for example, M-210 manufactured by Toagosei Co., Ltd., NK ESTER A-BPE-20 manufactured by Shin-Nakamura Chemical Co., Ltd., and the like), hydrogenated bisphenol A EO-added di(meth)acrylate (NK ESTER A-HPE-4 manufactured by Shin-Nakamura Chemical Co., Ltd., and the like), bisphenol A PO-added di(meth)acrylate (as a commercially available product, for example, light acrylate BP-4PA manufactured by KYOEISHA CHEMICAL Co., Ltd.), bisphenol A epichlorohydrin-added di(meth)acrylate (as a commercially available product, for example, Evecryl 150 manufactured by Daicel UCB), bisphenol A EO/PO-added di(meth)acrylate (as a commercially available product, for example, BP-023-PE manufactured by Toho Chemical Industry Co., Ltd.), bisphenol F EO-added di(meth)acrylate (as a commercially available product, for example, Aronix M-208 manufactured by Toagosei Co., Ltd.), 1,6-hexanediol di(meth)acrylate and epichlorohydrin-modified products thereof, neopentyl glycol di(meth)acrylate, hydroxypivalic acid neopentyl glycol di(meth)acrylate, and caprolactone-modified products thereof, 1,4-butanediol di(meth)acrylate, 1,9-nonanediol di(meth)acrylate, trimethylolpropane di(meth)acrylate, tricyclodecane dimethanol di(meth)acrylate, pentaerythritol di(meth)acrylate monostearate, trimethylolpropane acrylic acid/-benzoic acid ester, and isocyanuric acid EO-modified di(meth)acrylate (as a commercially available product, for example, Aronix M-215 manufactured by Toagosei Co., Ltd.).
In addition, examples thereof also include trifunctional (meth)acrylate compounds such as trimethylolpropane tri(meth)acrylate (as a commercially available product, for example, TPMTA manufactured by Nippon Kayaku Co., Ltd.) and EO, PO or epichlorohydrin-modified products thereof, pentaerythritol tri(meth)acrylate, glycerol tri(meth)acrylate, and EO, PO or epichlorohydrin-modified products thereof, isocyanuric acid EO-modified tri(meth)acrylate (as a commercially available product, for example, Aronix M-315 manufactured by Toagosei Co., Ltd., and the like), tris(meth)acryloyloxyethyl phosphate, hydrogen phthalate-(2,2,2-tri-(meth)acryloyloxymethyl)ethyl, and glycerol tri(meth)acrylate and EO, PO or epichlorohydrin-modified products thereof; tetrafunctional (meth)acrylate compounds such as pentaerythritol tetra(meth)acrylate (as a commercially available product, for example, TPMTA manufactured by Shin-Nakamura Chemical Co., Ltd.) and EO, PO or epichlorohydrin-modified products thereof, and ditrimethylolpropane tetra(meth)acrylate; pentafunctional (meth)acrylate compounds such as dipentaerythritol penta(meth)acrylate and EO, PO, epichlorohydrin, fatty acid, or alkyl-modified products thereof; and hexafunctional (meth)acrylates such as dipentaerythritol hexa(meth)acrylate and EO, PO, epichlorohydrin, fatty acid, or alkyl-modified products thereof, and sorbitol hexa(meth)acrylate and EO, PO, epichlorohydrin, fatty acid, or alkyl-modified products thereof.
Two or more kinds of radically polymerizable compounds may be used in combination. In this case, a mixture "DPHA" (manufactured by Nippon Kayaku Co., Ltd.) of dipentaerythritol pentaacrylate and dipentaerythritol hexaacrylate can be preferably used.
In addition, as the radically polymerizable compound, a polyester (meth)acrylate having a weight-average molecular weight of 200 or more and less than 1,000, or an epoxy (meth)acrylate is also preferable. Examples of a commercially available product thereof include, as polyester (meth)acrylate, BEAMSET 700 (hexafunctional), BEAMSET 710 (tetrafunctional), BEAMSET 720 (trifunctional), and the like of BEAMSET 700 series (trade name) manufactured by ARAKAWA CHEMICAL INDUSTRIES, LTD. In addition, examples of the epoxy (meth)acrylate include trade name SP series manufactured by Showa Highpolymer Co., Ltd., such as SP-1506, 500, SP-1507, and 480; VR series manufactured by Showa Highpolymer Co., Ltd., such as VR-77; and trade name EA-1010/ECA, EA-11020, EA-1025, EA-6310/ECA and

the like manufactured by Shin-Nakamura Chemical Co., Ltd.

The curable composition for forming the HC layer according to the second aspect (2) which is a preferred aspect of the second aspect includes b) the radically polymerizable compound including three or more ethylenically unsaturated groups in one molecule. Hereinafter, the compound b) including three or more ethylenically unsaturated groups in one molecule also referred to as "component b)".

Examples of the component b) include esters of polyhydric alcohol and (meth)acrylic acid, vinylbenzene and derivatives thereof, vinylsulfone, and (meth)acrylamide. Among these, a radically polymerizable compound including three or more radically polymerizable groups selected from the group consisting of an acryloyl group and a methacryloyl group in one molecule is preferable.

Specific examples thereof include compounds which are esters of polyhydric alcohol and (meth)acrylic acid, including three or more ethylenically unsaturated groups in one molecule. More specific examples thereof include (di) pentaerythritol tetra(meth)acrylate, (di)pentaerythritol tri(meth)acrylate, trimethylolpropane tri(meth)acrylate, EO-modified trimethylolpropane tri(meth)acrylate, PO-modified trimethylolpropane tri(meth)acrylate, EO-modified phosphoric acid tri(meth)acrylate, trimethylol ethane tri(meth)acrylate, ditrimethylolpropane tetra(meth)acrylate, dipentaerythritol tetra(meth)acrylate, (di)pentaerythritol penta(meth)acrylate, dipentaerythritol hexa(meth)acrylate, pentaerythritol hexa(meth)acrylate, 1,2,3-cyclohexane tetramethacrylate, polyurethane polyacrylate, polyester polyacrylate, caprolactone-modified tris(acryloxyethyl) isocyanurate, tripentaerythritol triacrylate, tripentaerythritol hexatriacrylate, 1,2,4-cyclohexanetetra(meth)acrylate, and pentaglycerol triacrylate. The above-described "(di)pentaerythritol" means one or both of pentaerythritol and dipentaerythritol.

Furthermore, a resin including three or more radically polymerizable groups selected from the group consisting of an acryloyl group and a methacryloyl group in one molecule is also preferable.

Examples of the resin including three or more radically polymerizable groups selected from the group consisting of an acryloyl group and a methacryloyl group in one molecule include a polyester-based resin, a polyether-based resin, an acrylic resin, an epoxy-based resin, a urethane-based resin, an alkyd-based resin, a spiroacetal-based resin, a polybutadiene-based resin, a polythiol polyene-based resin, and a polymer of a polyfunctional compound such as a polyhydric alcohol.

Specific examples of the radically polymerizable compound including three or more radically polymerizable groups selected from the group consisting of an acryloyl group and a methacryloyl group in one molecule include exemplary compounds described in paragraph 0096 of JP2007-256844A.

Furthermore, specific examples of the radically polymerizable compound including three or more radically polymerizable groups selected from the group consisting of an acryloyl group and a methacryloyl group in one molecule include KAYARAD DPHA, KAYARAD DPHA-2C, KAYARAD PET-30, KAYARAD TMPTA, KAYARAD TPA-320, KAYARAD TPA-330, KAYARAD RP-1040, KAYARAD T-1420, KAYARAD D-310, KAYARAD DPCA-20, KAYARAD DPCA-30, KAYARAD DPCA-60, and KAYARAD GPO-303, all of which are manufactured by Nippon Kayaku Co., Ltd.; and esterified products of (meth)acrylic acid with polyols, such as V#400 and V#36095D, manufactured by OSAKA ORGANIC CHEMICAL INDUSTRY LTD.

In addition, examples thereof also include tri- or higher functional urethane acrylate compounds such as SHIKOH UV-1400B, SHIKOH UV-1700B, SHIKOH UV-6300B, SHIKOH UV-7550B, SHIKOH UV-7600B, SHIKOH UV-7605B, SHIKOH UV-7610B, SHIKOH UV-7620EA, SHIKOH UV-7630B, SHIKOH UV-7640B, SHIKOH UV-6630B, SHIKOH UV-7000B, SHIKOH UV-7510B, SHIKOH UV-7461TE, SHIKOH UV-3000B, SHIKOH UV-3200B, SHIKOH UV-3210EA, SHIKOH UV-3310EA, SHIKOH UV-3310B, SHIKOH UV-3500BA, SHIKOH UV-3520TL, SHIKOH UV-3700B, SHIKOH UV-6100B, SHIKOH UV-6640B, SHIKOH UV-2000B, SHIKOH UV-2010B, SHIKOH UV-2250EA, SHIKOH UV-2750B (manufactured by Nippon Synthetic Chemical Industry Co., Ltd.), UL-503LN (manufactured by Kyoeisha Chemical Co., Ltd.), UNIDIC 17-806, UNIDIC 17-813, UNIDIC V-4030, UNIDIC V-4000BA (manufactured by Dainippon Printing Ink Manufacturing), EB-1290K, EB-220, EB-5129, EB-1830, EB-4358 (manufactured by Daicel-UCB Company, Ltd.), HIGH-COAP AU-2010, HIGH-COAP AU-2020 (manufactured by Tokushiki Co., Ltd.), ARONIX M-1960 (manufactured by Toagosci Co., Ltd.), ART RESIN UN-3320HA, UN-3320HC, UN-3320HS, UN-904, and HDP-4T; tri- or higher functional polyester compounds such as ARONIX M-8100, M-8030, M-9050 (manufactured by Toagosei Co., Ltd.), and KBM-8307 (manufactured by Daicel Cytec Co., Ltd.).

In addition, for the component b), one kind may be used alone, or two or more kinds with different structures may be used in combination.

As described above, the HC layer obtained by curing the curable composition for forming the HC layer according to the second aspect (2) can contain the structure derived from a) in an amount of 5 to 70% by mass, the structure derived from b) in an amount of 25 to 80% by mass, c) in an amount of 0.1 to 10% by mass, and d) in an amount of 0.1 to 10% by mass, in a case where the total solid content of the HC layer is set to 100% by mass. The structure derived from b) is contained in an amount of preferably 40% to 75% by mass and more preferably 60% to 75% by mass in a case where the total solid content of the HC layer is set to 100% by mass. In addition, in a case where the total solid content of the curable composition for forming the HC layer according to the second aspect (2) is set to 100% by mass, the component b) is

contained in an amount of preferably 40% to 75% by mass and more preferably 50% to 75% by mass.

-Cationically polymerizable compound-

The curable composition for forming the HC layer according to the second aspect preferably contains at least one radically polymerizable compound and at least one cationically polymerizable compound. As the cationically polymerizable compound, any compound having a polymerizable group which is cationically polymerizable (cationically polymerizable group) can be used without any limitation. In addition, the number of cationically polymerizable groups in one molecule is at least 1. The cationically polymerizable compound may be a monofunctional compound including one cationically polymerizable group in one molecule, or a polyfunctional compound including two or more cationically polymerizable groups in one molecule. The number of cationically polymerizable groups included in the polyfunctional compound is not particularly limited, but it is, for example, 2 to 6 in one molecule. In addition, the two or more cationically polymerizable groups included in one molecule of the polyfunctional compound may be the same, or may have two or more different structures.

In addition, in one aspect, the cationically polymerizable compound also preferably has one or more radically polymerizable groups in one molecule together with the cationically polymerizable group. With regard to the radically polymerizable group included in such a cationically polymerizable compound, the description regarding the radically polymerizable compound above can be referred to. The radically polymerizable group is preferably an ethylenically unsaturated group, and more preferably a radically polymerizable group selected from the group consisting of a vinyl group, an acryloyl group, and a methacryloyl group. The number of radically polymerizable groups in one molecule of the cationically polymerizable compound having a radically polymerizable group is at least 1, preferably 1 to 3 and more preferably 1.

Preferred examples of the cationically polymerizable group include an oxygen-containing heterocyclic group and a vinyl ether group. The cationically polymerizable compound may include one or more oxygen-containing heterocyclic groups and one or more vinyl ether groups in one molecule.

The oxygen-containing heterocyclic ring may be a monocyclic ring or a fused ring. In addition, a ring having a bicyclo skeleton is also preferable. The oxygen-containing heterocyclic ring may be a non-aromatic ring or an aromatic ring, and is preferably a non-aromatic ring. Specific examples of the monocyclic ring include an epoxy ring, a tetrahydrofuran ring, and an oxetane ring. In addition, examples of the ring having a bicyclo skeleton include an oxabicyclo ring. The cationically polymerizable group including the oxygen-containing heterocyclic ring is included in the cationically polymerizable compound as a monovalent substituent or a di- or higher polyvalent substituent. In addition, the above-described fused ring may be a ring in which two or more oxygen-containing heterocyclic rings are fused, or may be a ring in which one or more oxygen-containing heterocyclic rings and one or more ring structures other than the oxygen-containing heterocyclic ring are fused. Examples of the ring structure other than the oxygen-containing heterocyclic ring described above include, but are not limited to, cycloalkane rings such as cyclohexane ring.

Specific examples of the oxygen-containing heterocyclic ring are shown below. However, the present invention is not limited to the following specific examples.

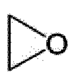
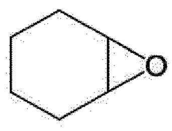
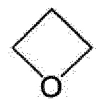

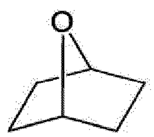
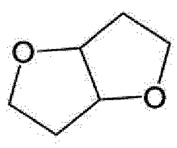

The cationically polymerizable compound may include a partial structure other than the cationically polymerizable group.

Such a partial structure is not particularly limited, and it may be a linear structure, a branched structure, or a cyclic structure. These partial structures may include one or more heteroatoms such as an oxygen atom and a nitrogen atom.

Examples of a preferred aspect of the cationically polymerizable compound include a compound including a cyclic structure as the cationically polymerizable group or as a partial structure other than the cationically polymerizable group (cyclic structure-containing compound). The number of cyclic structures included in the cyclic structure-containing compound is, for example, 1 in one molecule, or may be 2 or more. The number of cyclic structures included in the cyclic structure-containing compound is, for example, 1 to 5 in one molecule, but is not particularly limited. The compound

including two or more cyclic structures in one molecule may include the same cyclic structure or may include two or more different cyclic structures.

Examples of the cyclic structure included in the above-described cyclic structure-containing compound include an oxygen-containing heterocyclic ring. The details thereof are as described above.

An equivalent of the cationically polymerizable group (= B/C), obtained by dividing the molecular weight (hereinafter, referred to as "B") by the number of cationically polymerizable groups included in one molecule of the cationically polymerizable compound (hereinafter, referred to as "C"), is, for example, 300 or less; and from the viewpoint of improving adhesiveness of the HC layer obtained by curing the curable composition for forming the HC layer with the resin film, it is preferably less than 150, and from the viewpoint of more excellent abrasion resistance, it is more preferably 120 or less. On the other hand, from the viewpoint of hygroscopicity of the HC layer obtained by curing the curable composition for forming the HC layer, the equivalent of the cationically polymerizable group is preferably 50 or more. In addition, in one aspect, the cationically polymerizable group included in the cationically polymerizable compound, for obtaining the equivalent of the cationically polymerizable group, can be an epoxy group (epoxy ring). That is, in one aspect, the cationically polymerizable compound is an epoxy ring-containing compound. With regard to the epoxy ring-containing compound, from the viewpoint of improving adhesiveness of the HC layer obtained by curing the curable composition for forming the HC layer with the resin film, an equivalent of the epoxy group, obtained by dividing the molecular weight by the number of epoxy rings included in one molecule, is preferably less than 150, and from the viewpoint of more excellent abrasion resistance, it is more preferably 120 or less. In addition, the equivalent of the epoxy group in the epoxy ring-containing compound is, for example, 50 or more.

In addition, the molecular weight of the cationically polymerizable compound is preferably 500 or less, and more preferably 300 or less. The cationically polymerizable compound having a molecular weight in the above-described range tends to permeate into a transparent substrate described later, and it is presumed that this can contribute to the improvement of adhesiveness of the HC layer obtained by curing the curable composition for forming the HC layer with the transparent substrate.

The curable composition for forming the HC layer according to the second aspect (2) contains a) the cationically polymerizable compound having a molecular weight of 300 or less, which includes an alicyclic epoxy group and an ethylenically unsaturated group, in which the number of alicyclic epoxy groups in one molecule is 1 and the number of ethylenically unsaturated groups in one molecule is 1. Hereinafter, the above a) will be referred to as "component a)".

Examples of the ethylenic unsaturated group include a radically polymerizable group such as an acryloyl group, a methacryloyl group, a vinyl group, a styryl group, and an allyl group; and among these, an acryloyl group, a methacryloyl group, or $C(O)OCH=CH_2$ is preferable, and an acryloyl group or a methacryloyl group is more preferable. Each of the number of alicyclic epoxy groups and the number of ethylenically unsaturated groups in one molecule is preferably 1.

The molecular weight of the component a) is 300 or less, preferably 210 or less and more preferably 200 or less.

Examples of a preferred aspect of the component a) include a compound represented by General Formula (1).

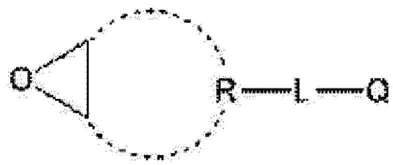

(1)

In General Formula (1), R represents a monocyclic hydrocarbon or a crosslinked hydrocarbon, L represents a single bond or a divalent linking group, and Q represents an ethylenically unsaturated group.

In a case where R in General Formula (1) is a monocyclic hydrocarbon, the monocyclic hydrocarbon is preferably an alicyclic hydrocarbon, more preferably an alicyclic group having 4 to 10 carbon atoms, still more preferably an alicyclic group having 5 to 7 carbon atoms, and particularly preferably an alicyclic group having 6 carbon atoms. Preferred specific examples thereof include a cyclobutyl group, a cyclopentyl group, a cyclohexyl group, and a cycloheptyl group, and a cyclohexyl group is preferable.

In a case where R in General Formula (1) is a crosslinked hydrocarbon, the crosslinked hydrocarbon is preferably a bicyclic crosslinked hydrocarbon (bicyclo ring) or a tricyclic crosslinked hydrocarbon (tricyclo ring). Specific examples thereof include crosslinked hydrocarbons having 5 to 20 carbon atoms, such as a norbomyl group, a bornyl group, an isobornyl group, a tricyclodecyl group, a dicyclopentenyl group, a dicyclopentanyl group, a tricyclopentenyl group, a tricyclopentanyl group, an adamantyl group, and a lower alkyl group (for example, having 1 to 6 carbon atoms)-substituted adamantyl group.

In a case where L represents a divalent linking group, the divalent linking group is preferably a divalent aliphatic

hydrocarbon group.

The number of carbon atoms in the divalent aliphatic hydrocarbon group is preferably 1 to 6, more preferably 1 to 3, and still more preferably 1. The divalent aliphatic hydrocarbon group is preferably a linear, branched, or cyclic alkylene group, more preferably a linear or branched alkylene group, and still more preferably a linear alkylene group.

Examples of Q include an ethylenically unsaturated group such as an acryloyl group, a methacryloyl group, a vinyl group, a styryl group, and an allyl group; and among these, an acryloyl group, a methacryloyl group, or C(O)OCH=$CH_2$ is preferable, and an acryloyl group or a methacryloyl group is more preferable.

Specific examples of the component a) include various compounds exemplified in paragraph 0015 of JP1998-017614A (JP-H10-017614A), a compound represented by General Formula (1A) or (1B), and 1,2-epoxy-4-vinylcyclohexane. Among these, a compound represented by General Formula (1A) or (1B) is more preferable. In addition, an isomer of the compound represented by General Formula (1A) is also preferable.

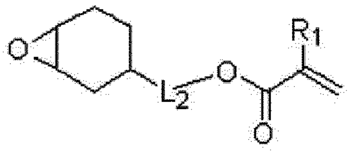

(1A)

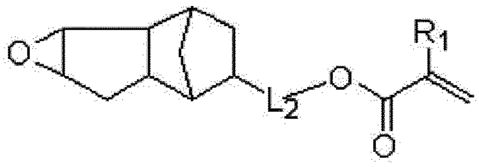

(1B)

In General Formulae (1A) and (1B), $R_1$ represents a hydrogen atom or a methyl group, and $L_2$ represents a divalent aliphatic hydrocarbon group having 1 to 6 carbon atoms.

The number of carbon atoms in the divalent aliphatic hydrocarbon group represented by $L_2$ in General Formulae (1A) and (1B) is 1 to 6, preferably 1 to 3, and more preferably 1.

The divalent aliphatic hydrocarbon group is preferably a linear, branched, or cyclic alkylene group, more preferably a linear or branched alkylene group, and still more preferably a linear alkylene group.

The HC layer obtained by curing the curable composition for forming the HC layer according to the second aspect (2) contains the structure derived from a) in an amount of preferably 15% to 70% by mass, more preferably 18% to 50% by mass, and still more preferably 22% to 40% by mass in a case where the total solid content of the HC layer is set to 100% by mass. In addition, in a case where the total solid content of the curable composition for forming the HC layer according to the second aspect (2) is set to 100% by mass, the component a) is contained in an amount of preferably 15% to 70% by mass, more preferably 18% to 50% by mass, and still more preferably 22% to 40% by mass.

Examples of other cyclic structures included in the above-described cyclic structure-containing compound include an alicyclic ring structure. Examples of the alicyclic ring structure include a cyclo ring structure, a dicyclo ring structure, and a tricyclo ring structure, and specific examples thereof include a dicyclopentanyl ring and a cyclohexane ring.

The cationically polymerizable compound described above can be synthesized by a known method. In addition, the cationically polymerizable compound can also be obtained as a commercially available product.

Specific examples of the cationically polymerizable compound including the oxygen-containing heterocyclic ring as the cationically polymerizable group include 3,4-epoxycyclohexyl methyl methacrylate (commercially available product such as CYCLOMER M100 manufactured by Daicel Chemical Industries, Ltd.), 3,4-epoxycyclohexylmethyl-3',4'-epoxycyclohexanecarboxylate (for example, commercially available products such as UVR 6105 and UVR 6110 manufactured by Union Carbide Corporation, and CELLOXIDE 2021 and the like manufactured by Daicel Chemical Industries, Ltd.), bis(3,4-epoxycyclohexylmethyl) adipate (for example, UVR 6128 manufactured by Union Carbide Corporation), vinylcyclohexene monoepoxide (for example, CELLOXIDE 2000 manufactured by Daicel Chemical Industries, Ltd.), ε-caprolactone-modified 3,4-epoxycyclohexylmethyl 3',4'-epoxycyclohexanecarboxylate (for example, CELLOXIDE 2081 manufactured by Daicel Chemical Industries, Ltd.), 1-methyl-4-(2-methyloxiranyl)-7-oxabicyclo[4,1,0]heptane (for example, CELLOXIDE 3000 manufactured by Daicel Chemical Industries, Ltd.), 7,7'-dioxa-3,3'-bis[bicyclo[4.1.0]heptane] (for example, CELLOXIDE 8000 manufactured by Daicel Chemical Industries, Ltd.), 3-ethyl-3-hydroxymethyloxetane, 1,4-bis{[(3-ethyl-3-oxetanyl)methoxy]methyl}benzene, 3-ethyl-3-(phenoxymethyl)oxetane, 3-ethyl-3-(2-ethylhexyloxymethyl)oxetane, and di[1-ethyl(3-oxetanyl)]methyl ether.

In addition, specific examples of the cationically polymerizable compound including the vinyl ether group as the cationically polymerizable group include 1,4-butanediol divinyl ether, 1,6-hexanediol divinyl ether, nonanediol divinyl

ether, cyclohexanediol divinyl ether, cyclohexanedimethanol divinyl ether, triethylene glycol divinyl ether, trimethylolpropane trivinyl ether, and pentaerythritol tetravinyl ether. As the cationically polymerizable compound including the vinyl ether group, those having an alicyclic ring structure are also preferable.

Furthermore, as the cationically polymerizable compound, it is also possible to use compounds exemplified in JP1996-143806A (JP-H8-143806A), JP1996-283320A (JP-H8-283320A), JP2000-186079A, JP2000-327672A, JP2004-315778A, JP2005-29632A, and the like.

Specific examples of the cationically polymerizable compound will be shown below as exemplary compounds B-1 to B-14, but the present invention is not limited to the following specific examples.

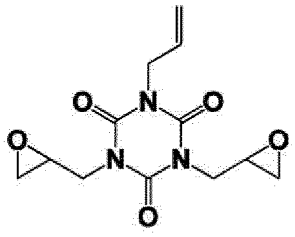

B－1

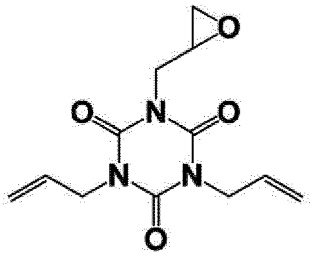

B－2

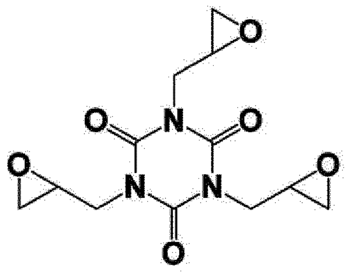

B－3

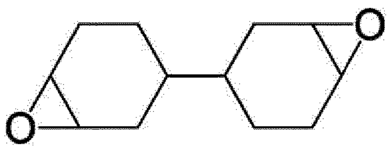

B－4

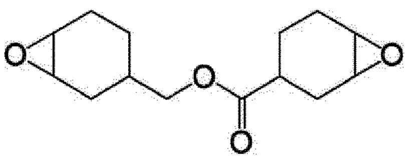

B－5

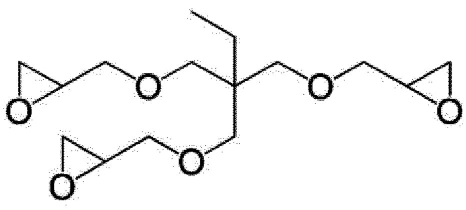

B－6

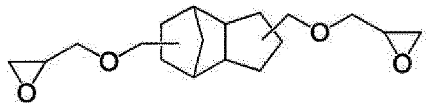

B－7

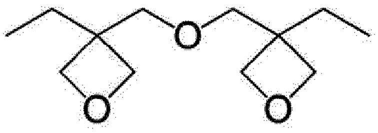

B－8

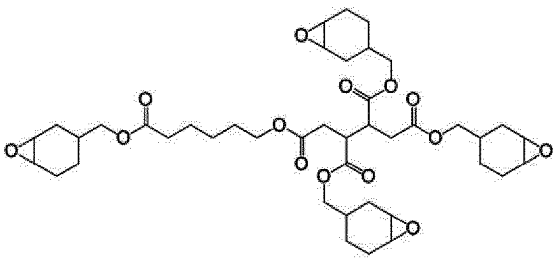

B－9

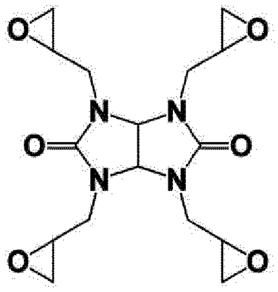

B－10

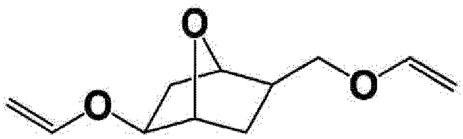

B－11

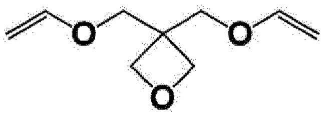

B－12

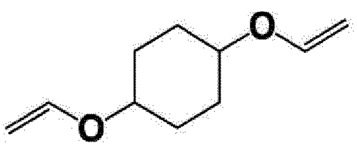

B－13

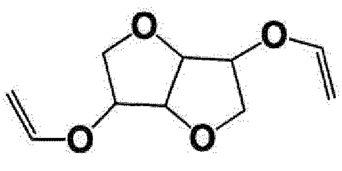

B－14

In addition, from the viewpoint of improving adhesiveness of the HC layer obtained by curing the curable composition for forming the HC layer with the resin film, examples of a preferred aspect of the curable composition for

forming the HC layer include the following aspects. It is more preferable to satisfy one or more of the following aspects, and it is still more preferable to satisfy two or more of the following aspects. It is also preferable that one cationically polymerizable compound satisfy a plurality of aspects.

(1) the curable composition for forming the HC layer contains, as the cationically polymerizable compound, a cationically polymerizable compound having an equivalent of cationically polymerizable group of less than 150, preferably contains an epoxy group-containing compound having an equivalent of epoxy group of less than 150.
(2) the cationically polymerizable compound includes an ethylenically unsaturated group.

A content of the cationically polymerizable compound in the curable composition for forming the HC layer described above is preferably 10 parts by mass or more, more preferably 15 parts by mass or more, and still more preferably 20 parts by mass or more with respect to 100 parts by mass of the total content of the radically polymerizable compound and the cationically polymerizable compound. In addition, the content of the cationically polymerizable compound in the curable composition for forming the HC layer described above is preferably 50 parts by mass or less with respect to 100 parts by mass of the total content of the radically polymerizable compound and the cationically polymerizable compound.

In addition, the content of the cationically polymerizable compound in the curable composition for forming the HC layer described above is preferably 0.05 parts by mass or more, more preferably 0.1 parts by mass or more, and still more preferably 1 part by mass or more with respect to 100 parts by mass of the total content of the radically polymerizable compound and the cationically polymerizable compound. On the other hand, the content of the cationically polymerizable compound is preferably 50 parts by mass or less, and more preferably 40 parts by mass or less with respect to 100 parts by mass of the total content of the radically polymerizable compound and the cationically polymerizable compound.

In addition, the content of the cationically polymerizable compound in the curable composition for forming the HC layer described above is preferably 5% by mass or more, and more preferably 10% by mass or more with respect to the total solid content of the curable composition for forming the HC layer. The upper limit thereof is not particularly limited, but is preferably 40% by mass or less and more preferably 25% by mass or less.

In the present specification, a compound having both the cationically polymerizable group and the radically polymerizable group is classified as the cationically polymerizable compound, and the content in the curable composition for forming the HC layer is defined.

(Polymerization initiator)

The curable composition for forming the HC layer preferably contains a polymerization initiator, and more preferably contains a photopolymerization initiator. The curable composition for forming the HC layer, which contains the radically polymerizable compound, preferably contains a radical photopolymerization initiator; and the curable composition for forming the HC layer, which contains the cationically polymerizable compound, preferably contains a cationic photopolymerization initiator. For the radical photopolymerization initiator, one kind may be used alone, or two or more kinds with different structures may be used in combination. The same also applies to the cationic photopolymerization initiator.

Hereinafter, each of the photopolymerization initiators will be described in order.

(i) Radical photopolymerization initiator

The radical photopolymerization initiator may be any photopolymerization initiator as long as it can generate a radical as an active species by light irradiation; and known radical photopolymerization initiators can be used without any limitation. Specific examples thereof include acetophenones such as diethoxyacetophenone, 2-hydroxy-2-methyl-1-phenylpropan-1-one, benzyldimethylketal, 4-(2-hydroxyethoxy)phenyl-(2-hydroxy-2-propyl)ketone, 1-hydroxycyclohexylphenyl ketone, 2-methyl-2-morpholino(4-thiomethylphenyl)propan-1-one, 2-benzyl-2-dimethylamino-1-(4-morpholinophenyl)butanone, 2-hydroxy-2-methyl-1-[4-(1-methylvinyl)phenyl]propanone oligomer, and 2-hydroxy-1-{4-[4-(2-hydroxy-2-methyl-propionyl)-benzyl]phenyl}-2-methyl-propan-1-one; oxime esters such as 1,2-octanedione, 1-[4-(phenylthio)-,2-(O-benzoyloxime)], and ethanone,1-[9-ethyl-6-(2-methylbenzoyl)-9H-carbazol-3-yl]-,1-(0-acetyloxime); benzoins such as benzoin, benzoin methyl ether, benzoin ethyl ether, benzoin isopropyl ether, and benzoin isobutyl ether; benzophenones such as benzophenone, ortho-benzoyl methyl benzoate, 4-phenylbenzophenone, 4-benzoyl-4'-methyldiphenyl sulfide, 3,3',4,4'-tetra(t-butylperoxycarbonyl)benzophenone, 2,4,6-trimethylbenzophenone, 4-benzoyl-N,N-dimethyl-N-[2-(1-oxo-2-propenyloxy)ethyl]benzenemethanaminium bromide, and (4-benzoylbenzyl)trimethylammonium chloride; thioxanthones such as 2-isopropylthioxanthone, 4-isopropylthioxanthone, 2,4-diethylthioxanthone, 2,4-dichlorothioxanthone, 1-chloro-4-propoxythioxanthone, and 2-(3-dimethylamino-2-hydroxy)-3,4-dimethyl-9H-thioxanthone-9-one mesochloride; and acylphosphine oxides such as 2,4,6-trimethylbenzoyl-diphenylphosphine oxide, bis(2,6-dimethoxybenzoyl)-2,4,4-trimethyl-pentylphosphine oxide, and bis(2,4,6-trimethylbenzoyl)-phenylphosphine oxide. In addition, as an auxiliary agent of the radical photopolymerization initiator, triethanolamine, triisopropanolamine, 4,4'-dimethylaminobenzophenone (Michler's ketone), 4,4'-diethylaminobenzophenone, 2-dimethylaminoethylbenzoic acid, ethyl 4-dimethylaminobenzoate, (n-butoxy)ethyl 4-dimethylaminobenzoate, isoamyl 4-dimethylaminobenzoate, 2-ethylhexyl 4-dimethylaminobenzoate, 2,4-diethylthioxanthone, 2,4-diisopropylthioxanthone, and the like may be used in combination.

The above-described radical photopolymerization initiator and auxiliary agent can be synthesized by known methods, and are available as commercially available products. Preferred examples of commercially available radical photopolymerization initiators include IRGACURE (127, 651, 184, 819, 907, 1870 (CGI-403/Irg 184 = 7/3 mixing initiator), 500, 369, 1173, 2959, 4265, 4263, and OXE 01), and the like manufactured by BASF; KAYACURE (DETX-S, BP-100, BDMK, CTX, BMS, 2-EAQ, ABQ, CPTX, EPD, ITX, QTX, BTC, MCA, and the like) manufactured by Nippon Kayaku Co., Ltd.; and Esacure (KIP100F, KB1, EB3, BP, X33, KT046, KT37, KIP150, and TZT) manufactured by Sartomer Arkema Inc.

A content of the radical photopolymerization initiator in the curable composition for forming the HC layer described above may be appropriately adjusted within a range in which the polymerization reaction (radical polymerization) of the radically polymerizable compound favorably proceeds, and the content is not particularly limited. The content is preferably 0.1 to 20 parts by mass, more preferably 0.5 to 10 parts by mass, and still more preferably 1 to 10 parts by mass with respect to 100 parts by mass of the radically polymerizable compound contained in the curable composition for forming the HC layer described above.

(ii) Cationic photopolymerization initiator

The cationic photopolymerization initiator may be any photopolymerization initiator as long as it can generate a cation as an active species by light irradiation; and known cationic photopolymerization initiators can be used without any limitation. Specific examples thereof include known sulfonium salts, ammonium salts, iodonium salts (for example, a diaryliodonium salt), triarylsulfonium salts, diazonium salts, and iminium salts. More specific examples thereof include cationic photopolymerization initiators represented by Formulae (25) to (28) described in paragraphs 0050 to 0053 of JP1996-143806A (JP-H8-143806A), and compounds exemplified as a cationic polymerization catalyst in paragraph 0020 of JP1996-283320A (JP-H8-283320A). In addition, the cationic photopolymerization initiator can be synthesized by a known method, and is available as a commercially available product. Examples of the commercially available product include CI-1370, CI-2064, CI-2397, CI-2624, CI-2639, CI-2734, CI-2758, CI-2823, CI-2855, CI-5102, and the like manufactured by NIPPON SODA CO., LTD.; PHOTOINITIATOR 2047 and the like manufactured by Rhodia; UVI-6974 and UVI-6990 manufactured by Union Carbide Corporation; and CPI-10P manufactured by San-Apro Ltd.

As the cationic photopolymerization initiator, from the viewpoint of sensitivity of the photopolymerization initiator with respect to light, stability of the compound, and the like, a diazonium salt, an iodonium salt, a sulfonium salt, or an iminium salt is preferable. In addition, from the viewpoint of weather fastness, an iodonium salt is preferable.

Specific examples of commercially available products of the iodonium salt-based cationic photopolymerization initiator include B2380 manufactured by TOKYO CHEMICAL INDUSTRY CO., LTD.; BBI-102 manufactured by Midori Kagaku Co., Ltd.; WPI-113, WPI-124, WPI-169, and WPI-170 manufactured by Wako Pure Chemical Industries, Ltd.; and DTBPI-PFBS manufactured by Toyo Gosei Co., Ltd.

In addition, specific examples of iodonium salt compounds which can be used as the cationic photopolymerization initiator include the following compounds PAG-1 and PAG-2.

Cationic photopolymerization initiator (iodonium salt compound) PAG-1

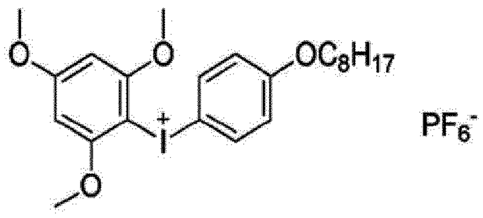

Cationic photopolymerization initiator (iodonium salt compound) PAG-2

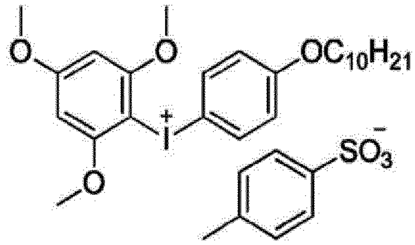

A content of the cationic photopolymerization initiator in the curable composition for forming the HC layer described above may be appropriately adjusted within a range in which the polymerization reaction (cationic polymerization) of the cationically polymerizable compound favorably proceeds, and the content is not particularly limited. The content is preferably 0.1 to 200 parts by mass, more preferably 1 to 150 parts by mass, and still more preferably 2 to 100 parts by mass with respect to 100 parts by mass of the cationically polymerizable compound.
Examples of other photopolymerization initiators include photopolymerization initiators described in paragraphs 0052 to 0055 of JP2009-204725A, the contents of which are incorporated into the present invention.

-Component which can be optionally contained in curable composition for forming HC layer-

The curable composition for forming the HC layer contains at least one component having a property of being cured by irradiation with active energy rays and a compound selected from the group consisting of a polysiloxane-containing compound and a fluorine-containing compound; and can optionally contain at least one polymerization initiator, preferably contains the at least one polymerization initiator. The details thereof are as described above.
Next, various components which can be optionally contained in the curable composition for forming the HC layer will be described.

(i) Inorganic particles

The curable composition for forming the HC layer may contain inorganic particles having an average primary particle diameter of less than 2 μm. From the viewpoint of improving hardness of a front plate having the HC layer obtained by curing the curable composition for forming the HC layer (and further improving hardness of a liquid crystal panel having the front plate), the curable composition for forming the HC layer, and the HC layer obtained by curing the composition preferably contain inorganic particles having an average primary particle diameter of less than 2 μm. The average primary particle diameter of the inorganic particles is preferably 5 nm to 1 μm, more preferably 5 nm to 200 nm, and still more preferably 40 nm or more and less than 200 nm.
The average primary particle diameter of the inorganic particles, and an average primary particle diameter of matte particles, which will be described later, are determined by observing 100 randomly selected particles (primary particles) with a transmission electron microscope (magnification: 500,000 to 2,000,000), and obtaining an average value of particle diameters.
Examples of the inorganic particles include silica particles, titanium dioxide particles, zirconium oxide particles, and aluminum oxide particles. Among these, silica particles are preferable.
In order to enhance affinity with organic components contained in the curable composition for forming the HC layer, it is preferable that a surface of the inorganic particles is treated with a surface modifier including an organic segment. The surface modifier is preferably a surface modifier having, in the same molecule, a functional group capable of forming a bond with or being adsorbed on the inorganic particles, and a functional group having a high affinity with the organic components. As the surface modifier having a functional group capable of being bonded with or being adsorbed on the inorganic particles, a silane-based surface modifier, a metal alkoxide surface modifier of aluminum, titanium, zirconium, and the like, or a surface modifier having an anionic group such as a phosphoric acid group, a sulfuric acid group, a sulfonic acid group, and a carboxylic acid group is preferable. Examples of the functional group having a high affinity with the organic components include a functional group with the same hydrophilicity or hydrophobicity as the organic components and a functional group which can be chemically bonded to the organic components. Among these, a functional group which can be chemically bonded to the organic components is preferable, and an ethylenically unsaturated group or a ring-opening polymerizable group is more preferable.
Among these, as the above-described inorganic particles, inorganic particles having an ethylenically unsaturated group on the surface are preferable.
A surface modifier for the preferred inorganic particles is a metal alkoxide surface modifier, or a polymerizable compound having both the anionic group and an ethylenically unsaturated group or a ring-opening polymerizable group in the same molecule. By chemically bonding the inorganic particles and the organic components with these surface

modifiers, the crosslinking density of the HC layer can be increased, and as a result, the scratch resistance can be improved.

Specific examples of the above-described surface modifier include the following exemplary compounds S-1 to S-8.

S-1 $H_2C=C(X)COOC_3H_6Si(OCH_3)_3$
S-2 $H_2C=C(X)COOC_2H_4OTi(OC_2H_5)_3$
S-3 $H_2C=C(X)COOC_2H_4OCOC_5H_{10}OPO(OH)_2$
S-4 $(H_2C=C(X)COOC_2H_4OCOC_5H_{10}O)_2POOH$
S-5 $H_2C=C(X)COOC_2H_4OSO_3H$
S-6 $H_2C=C(X)COO(C_5H_{10}COO)_2H$
S-7 $H_2C=C(X)COOC_5H_{10}COOH$
S-8 $CH_2CH(O)CH_2OC_3H_6Si(OCH_3)_3$

(X represents a hydrogen atom or a methyl group)

The surface modification of the inorganic particles using the surface modifier is preferably performed in a solution. In a case of mechanically dispersing the inorganic particles, the surface modifier may be present together, the surface modifier may be added and stirred after the inorganic particles is mechanically dispersed, or the surface modification may be performed before mechanically dispersing the inorganic particles (as necessary, heating, heating after drying, or changing of a pH (power of hydrogen) may be performed). As a solvent for dissolving the surface modifier, an organic solvent having a large polarity is preferable. Specific examples thereof include known solvents such as alcohols, ketones, and esters.

A content of the inorganic particles is preferably 50% by mass or less, more preferably 40% by mass or less, and still more preferably 30% by mass or less in a case where the total solid content of the curable composition for forming the HC layer is set to 100% by mass. The lower limit value of the above-described content is not particularly limited, and may be 0% by mass (the inorganic particles may not be contained in the HC layer). However, in a case of being contained, the content is preferably 0.5% by mass or more, more preferably 1% by mass or more, and still more preferably 7% by mass or more. A shape of primary particles of the inorganic particles may be spherical or non-spherical, but the primary particles of the inorganic particles are preferably spherical. In the HC layer obtained by curing the curable composition for forming the HC layer, from the viewpoint of further improving the hardness, it is more preferable that the inorganic particles are present as non-spherical secondary or higher-order particles in which 2 to 10 spherical inorganic particles (primary particles) are connected.

Specific examples of the inorganic particles include ELCOM V-8802 (spherical silica particles having an average primary particle diameter of 15 nm, manufactured by JGC Catalysts and Chemicals Ltd.), ELCOM V-8803 (irregularly shaped silica particles manufactured by JGC Catalysts and Chemicals Ltd.), MiBK-SD (spherical silica particles having an average primary particle diameter of 10 to 20 nm, manufactured by Nissan Chemical Corporation), MEK-AC-2140Z (spherical silica particles having an average primary particle diameter of 10 to 20 nm, manufactured by Nissan Chemical Corporation), MEK-AC-4130 (spherical silica particles having an average primary particle diameter of 45 nm, manufactured by Nissan Chemical Corporation), MiBK-SD-L (spherical silica particles having an average primary particle diameter of 40 to 50 nm manufactured by Nissan Chemical Corporation), MEK-ST-L (spherical silica particles having an average primary particle diameter of 40 to 50 nm, manufactured by Nissan Chemical Corporation), MEK-AC-5140Z (spherical silica particles having an average primary particle diameter of 85 nm, manufactured by Nissan Chemical Corporation), MEK-ST-ZL (spherical silica particles having an average primary particle diameter of 85 nm manufactured by Nissan Chemical Corporation), and RX-300 (spherical silica particles having an average primary particle diameter of 7 nm, manufactured by Nippon Aerosil Co., Ltd.). Among these, MEK-AC-2140Z manufactured by Nissan Chemical Corporation is preferable from the viewpoint of further improving the hardness; RX-300, MEK-ST-ZL, or MEK-AC-5140Z is preferable from the viewpoint of imparting surface unevenness; and MEK-ST-ZL or MEK-AC-5140Z is more preferable from the viewpoint of achieving both surface unevenness and visibility.

(ii) Matte particles

The curable composition for forming the HC layer can also contain matte particles. The matte particles refer to particles having an average primary particle diameter of 2 μm or more, and may be inorganic particles, organic particles, or particles of an inorganic and organic composite material. A shape of the matte particles may be spherical or non-spherical. The average primary particle diameter of the matte particles is preferably 2 to 20 μm, more preferably 4 to 14 μm, and still more preferably 6 to 10 μm.

Specific examples of the matte particles include inorganic particles such as silica particles and $TiO_2$ particles, crosslinked acrylic particles, crosslinked acrylic-styrene particles, crosslinked styrene particles, and resin particles such as melamine resin particles and benzoguanamine resin particles. Among these, the matte particles are preferably organic particles, and more preferably crosslinked acrylic particles, crosslinked acrylic-styrene particles, or crosslinked styrene particles.

A content of the matte particles in the HC layer obtained by curing the curable composition for forming the HC layer per unit volume is preferably 0.10 $g/cm^3$ or more, more preferably 0.10 to 0.40 $g/cm^3$, and still more preferably 0.10 to 0.30 $g/cm^3$.

(iii) Ultraviolet absorber (UV absorber)

The curable composition for forming the HC layer can contain an ultraviolet absorber.

Examples of the ultraviolet absorber include a benzotriazole compound and a triazine compound. Here, the benzotriazole compound is a compound having a benzotriazole ring, and specific examples thereof include various benzotriazole-based ultraviolet absorbers described in paragraph 0033 of JP2013-111835A. The triazine compound is a compound having a triazine ring, and specific examples thereof include various triazine-based ultraviolet absorbers described in paragraph 0033 of JP2013-111835A.

A content of the ultraviolet absorber in the curable composition for forming the HC layer is preferably 0.1% to 10% by mass in a case where the total solid content of the curable composition for forming the HC layer is set to 100% by mass.

In addition, for the ultraviolet absorber, paragraph 0032 of JP2013-111835A can also be referred to. Ultraviolet rays in the present specification mean light having a light emission center wavelength in a wavelength range of 200 to 380 nm.

(iv) Leveling agent

The curable composition for forming the HC layer can contain a leveling agent.

A fluorine-containing polymer is preferably used as the leveling agent. Examples thereof include fluoroaliphatic group-containing polymers described in JP5175831B. In addition, a fluoroaliphatic group-containing polymer, in which a content of the fluoroaliphatic group-containing monomer represented by General Formula (1) is 50% by mass or less of all polymerization units, can also be used as the leveling agent.

In a case where the curable composition for forming the HC layer contains a leveling agent, a content of the leveling agent is preferably 0.01% to 7% by mass, more preferably 0.05% to 5% by mass, and still more preferably 0.1% to 2% by mass in the solid content of the curable composition for forming the HC layer.

The curable composition for forming the HC layer may contain only one kind of leveling agent, or may contain two or more kinds of leveling agents. In a case where two or more kinds thereof are contained, the total amount thereof is preferably within the above-described range.

(v) Solvent

The curable composition for forming the HC layer also preferably contains a solvent.

As the solvent, an organic solvent is preferable, and one kind or two or more kinds can be mixed and used at an arbitrary ratio. Specific examples of the organic solvent include alcohols such as methanol, ethanol, propanol, n-butanol, and i-butanol; ketones such as acetone, methyl isobutyl ketone, methyl ethyl ketone, and cyclohexanone; cellosolves such as ethyl cellosolve; aromatic solvents such as toluene and xylene; glycol ethers such as propylene glycol monomethyl ether; acetic acid esters such as methyl acetate, ethyl acetate, and butyl acetate; and diacetone alcohol.

Among these, it is preferable to use a mixture of cyclohexanone, methyl ethyl ketone, methyl isobutyl ketone, butyl acetate, isopropyl acetate, and methyl acetate at an arbitrary ratio.

An amount of the solvent in the curable composition for forming the HC layer can be appropriately adjusted within a range that ensures coating suitability of the composition. The content of the solvent is preferably 50 to 500 parts by mass and more preferably 80 to 200 parts by mass with respect to 100 parts by mass of the total amount of the polymerizable compound and the photopolymerization initiator.

In addition, a proportion of solid contents of the curable composition for forming HC is preferably 10% to 90% by mass, more preferably 50% to 80% by mass, and still more preferably 65% to 75% by mass with respect to the total mass of the curable composition for forming HC.

(vi) Other components

The curable composition for forming the HC layer may contain one or more known additives in an arbitrary

amount, in addition to the above-described components. Examples of the additive include a surface modifier, a polymerization inhibitor, and polyrotaxane.

The details thereof can refer to, for example, paragraphs 0032 to 0034 of JP2012-229412A. However, the additive is not limited thereto, and various additives which can be generally added to the curable composition for forming the HC layer can be used.

The curable composition for forming the HC layer can be prepared by simultaneously or sequentially mixing the various components described above in any order. The preparation method is not particularly limited, and the composition can be prepared using a known stirrer or the like.

(Thickness of HC layer)

A thickness of the HC layer is preferably 1 μm or more, more preferably 1 to 100 μm, still more preferably 1 to 20 μm, particularly preferably 3 to 20 μm, and most preferably 5 to 20 μm.

The thickness of the HC layer is measured by cutting the HC layer with a microtome to take out a cross section, staining the cross section with a 3% by mass aqueous solution of osmium tetroxide for one night, and then taking out the surface again to observe the cross section with a scanning electron microscope (SEM).

A surface roughness Sa1 of a component with a wavelength of 2.5 μm or less on the surface of the HC layer on a side opposite to the reflective layer is preferably 0.30 nm or more, more preferably 0.40 nm or more, still more preferably 0.45 nm or more, and particularly preferably 0.50 nm or more. The upper limit thereof is not particularly limited, but is 3.0 nm or less in many cases and 2.0 nm or less in more cases.

In a case where the above-described surface roughness Sa1 is within the above-described range, when the reflection film is rolled in a state in which the reflective layer and the HC layer are in direct contact with each other in a stage of a semi-finished product of the reflection film (a stage of a laminate including the reflective layer and the HC layer and not including the pressure-sensitive adhesive layer), friction between the reflective layer and the HC layer can be reduced, so that the reflection film can be rolled without wrinkles, which is preferable.

A surface roughness Sa2 of a component with a wavelength of 10 μm or less on the surface of the HC layer on a side opposite to the reflective layer is preferably 2.0 nm or less, more preferably 1.5 nm or less, and still more preferably 1.2 nm or less. The lower limit thereof is not particularly limited, but is 0.5 nm or more in many cases.

In a case where the surface roughness Sa2 is within the above-described range, the visibility of the reflection film can be improved, which is preferable.

The surface roughness of the surface of the HC layer is obtained using a surface shape measurement system [VertScan (registered trademark) R5500G, manufactured by Hitachi High-Tech Corporation] under the following conditions, in which an uneven shape in a region of 128 μm × 128 μm on the surface of the HC layer is measured and image data thereof is read.

· Measurement mode: Wave mode
· Complement: Yes
· Baseline correction: Yes

The obtained image data is subjected to fast Fourier transformation (FFT), and in a case of a wavelength of 2.5 μm, image data in which a component with a frequency = 1/wavelength = 1/2.5 (1/μm) = 1000/2.5 (1/mm) = 400 (1/mm) or more is extracted by Highpass is acquired. The acquired image data is analyzed for a surface roughness Sa to determine the surface roughness Sa1 of the component of 2.5 μm or less.

Similarly, in a case of a wavelength of 10 μm, image data in which a component with a frequency = 1/wavelength = 1/10 (1/μm) = 1000/10 (1/mm) = 100 (1/mm) or less is extracted by Lowpass is acquired. The acquired image data is analyzed for a surface roughness Sa to determine the surface roughness Sa2 of the component with a wavelength of 10 μm or more.

(Method for forming HC layer)

The HC layer can be formed by applying the curable composition for forming the HC layer and irradiating the curable composition with active energy rays.

The coating can be performed by a known coating method such as a dip coating method, an air knife coating method, a curtain coating method, a roller coating method, a die coating method, a wire bar coating method, and a gravure coating method.

The HC layer can also be formed as an HC layer of a laminated structure having two or more layers (for example, approximately 2 to 5 layers) by applying two or more compositions with different formulations simultaneously or sequentially.

The HC layer can be formed by irradiating the applied curable composition for forming the HC layer with active energy rays.

For example, in a case where the curable composition for forming the HC layer contains the radically polymerizable compound, the cationically polymerizable compound, the radical photopolymerization initiator, and the cationic photopolymerization initiator, each of a polymerization reaction of the radically polymerizable compound and a polymerization reaction of the cationically polymerizable compound can be initiated and proceed by the action of the radical photopolymerization initiator and the cationic photopolymerization initiator, respectively. A wavelength of the light to be radiated may be determined depending on the type of the polymerizable compound and polymerization initiator to be used. Examples of a light source for the light irradiation include a low pressure mercury lamp, a high pressure mercury lamp, an ultra-high pressure mercury lamp, a carbon arc lamp, a metal halide lamp, a xenon lamp, a chemical lamp, an electrodeless discharge lamp, and a light emitting diode (LED), all of which emit light in a wavelength range of 150 to 450 nm.

In addition, the amount of light irradiation is preferably 30 to 3,000 mJ/cm$^2$ and more preferably 100 to 1,500 mJ/cm$^2$. A drying treatment may be performed as necessary before or after the light irradiation, or before and after the light irradiation. The drying treatment can be performed by blowing hot air, disposing the film in a heating furnace, transporting the film in a heating furnace, and the like.

In a case where the curable composition for forming the HC layer contains a solvent, the heating temperature may be set to a temperature at which the solvent can be dried and removed, and is not particularly limited. The heating temperature means the temperature of hot air or the internal atmospheric temperature of the heating furnace.

The reflection film may include a layer other than the pressure-sensitive adhesive layer, the reflective layer, and the HC layer described above.

For example, in an example shown in Fig. 2, a reflection film 10B includes a pressure-sensitive adhesive layer 1, a polarization conversion layer 5, a reflective layer 2, a retardation layer 6, a transparent substrate 7, and an HC layer 3 in this order. A protective film 4 is disposed on the pressure-sensitive adhesive layer 1 in the reflection film 10B on a side opposite to the reflective layer 2, and a laminate including the reflection film 10B and the protective film 4 is formed.

In addition, in an example shown in Fig. 3, a reflection film 10C includes a pressure-sensitive adhesive layer 1, a transparent substrate 7, a polarization conversion layer 5, a reflective layer 2, a retardation layer 6, and an HC layer 3 in this order. A protective film 4 is disposed on the pressure-sensitive adhesive layer 1 in the reflection film 10C on a side opposite to the reflective layer 2, and a laminate including the reflection film 10C and the protective film 4 is formed.

In addition, in an example shown in Fig. 4, a reflection film 10D includes a pressure-sensitive adhesive layer 1, a matte layer 8, a polarization conversion layer 5, a reflective layer 2, a retardation layer 6, a transparent substrate 7, and an HC layer 3 in this order. A protective film 4 is disposed on the pressure-sensitive adhesive layer 1 in the reflection film 10D on a side opposite to the reflective layer 2, and a laminate including the reflection film 10C and the protective film 4 is formed.

The reflection film 10B and the reflection film 10C are made of the same members, except for the difference in lamination order.

Hereinafter, the members constituting the reflection film 10B, the reflection film 10C, and the reflection film 10D, and the protective film will be described in detail.

The pressure-sensitive adhesive layer 1, the reflective layer 2, and the HC layer 3 in the reflection film 10B, the reflection film 10C, and the reflection film 10D are the same as the pressure-sensitive adhesive layer, the reflective layer, and the HC layer described above, respectively, so the description thereof will be omitted.

<Polarization conversion layer>

The polarization conversion layer is preferably a layer with a helical alignment structure of the liquid crystal compound, which is immobilized, and the number of pitches x of the helical alignment structure and a film thickness y (unit: μm) of the polarization conversion layer satisfy all of the following relational expressions (a) to (c).

$$0.1 \leq x \leq 1.0 \text{ ... Expression (a)}$$

$$0.5 \leq y \leq 3.0 \text{ ... Expression (b)}$$

$$3000 \leq (1560 \times y)/x \leq 50000 \text{ ... Expression (c)}$$

One pitch of the helical structure of the liquid crystal compound is one turn of a helix of the liquid crystal compound. That is, the number of pitches in a state in which a director (a major axis direction in a case of a rod-like liquid crystal) of the

helically aligned liquid crystal compound is rotated by 360° is defined as 1.

In a case where the polarization conversion layer has the helical structure of the liquid crystal compound, the polarization conversion layer exhibits optical rotation and birefringence with respect to visible light having a wavelength shorter than a reflection peak wavelength in the infrared region. Therefore, the polarized light in the visible region can be controlled. By setting the number of pitches x of the helical alignment structure of the polarization conversion layer and the film thickness y of the polarization conversion layer within the above-described ranges, a function of optically compensating the visible light with the polarization conversion layer or a straight line incident on the reflection film or a function of converting linearly polarized light (p-polarized light) into circularly polarized light can be provided.

The polarization conversion layer exhibits optical rotation and birefringence with respect to visible light because the liquid crystal compound has the helical structure satisfying the relational expressions (a) to (c). In particular, by setting a pitch P of the helical structure of the polarization conversion layer to have a length corresponding to a pitch P of the cholesteric liquid crystal layer in which the selective reflection center wavelength is within the long wavelength infrared region, it is possible to exhibit high optical rotation and birefringence with respect to visible light having a short wavelength.

The relational expression (a) is "$0.1 \leq x \leq 1.0$".

In a case where the number of pitches x of the helical structure is 0.1 or more, sufficient optical rotation and birefringence are obtained, which is preferable.

In addition, in a case where the number of pitches x of the helical structure is 1.0 or less, the optical rotation and birefringence are sufficient, and desired elliptic polarization is easily obtained.

The relational expression (b) is "$0.5 \leq y \leq 3.0$".

In a case where the thickness y of the polarization conversion layer is 0.5 μm or more, sufficient optical rotation and birefringence are obtained.

In a case where the thickness y of the polarization conversion layer is 3.0 μm or less, the optical rotation and birefringence are sufficient, and desired circular polarization is easily obtained.

The relational expression (c) is "$3000 \leq (1560 \times y)/x \leq 50000$".

In a case where "$(1560 \times y)/x$" is 3,000 or more, desired polarization is easily obtained.

In a case where "$(1560 \times y)/x$" is 50,000 or less, desired polarization is easily obtained.

In the present invention, the number of pitches x of the helical structure of the polarization conversion layer is more preferably 0.1 to 0.8, and the film thickness y is more preferably 0.6 to 2.6 μm. In addition, "$(1560 \times y)/x$" is more preferably 5,000 to 13,000.

That is, it is preferable that the polarization conversion layer has a long pitch P of the helical structure and a small number of pitches x.

Specifically, in the polarization conversion layer, it is preferable that the helical pitch P is equal to the pitch P of the cholesteric liquid crystal layer in which the selective reflection center wavelength is within the long wavelength infrared region, and the number of pitches x is small. More specifically, in the polarization conversion layer, it is preferable that the helical pitch P is equal to the pitch P of the cholesteric liquid crystal layer in which the selective reflection center wavelength is within 3,000 to 10,000 nm, and the number of pitches x is small.

Since the selective reflection center wavelength corresponding to the pitch P in the polarization conversion layer is much longer than that of visible light, the above-described optical rotation and birefringence with respect to visible light are more suitably exhibited.

Basically, the polarization conversion layer can be formed in the same manner as a known cholesteric liquid crystal layer. However, during the formation of the polarization conversion layer, it is preferable to adjust the liquid crystal compound to be used, the chiral agent to be used, the amount of the chiral agent added, the film thickness, and the like, so that the number of pitches x and the film thickness y [μm] of the helical structure in the polarization conversion layer satisfy all of the relational expressions (a) to (c).

<Retardation layer>

In the retardation layer, a phase difference (optical path difference) is provided to two orthogonal polarized light components to change the state of the incident polarized light.

In a case where the retardation layer is disposed on a glass plate side on the in-vehicle side and optically compensates, a front phase difference of the retardation layer may be a phase difference which can optically compensate.

In this case, the retardation layer preferably has a front retardation of 50 to 160 nm at a wavelength of 550 nm.

In addition, in a case where a windshield glass including the reflection film is mounted in the vehicle, and a direction corresponding to an upper vertical direction of a surface of a first glass plate is 0°, an angle of the slow axis is preferably 10° to 50° or -50° to -10°.

In addition, in a case where the retardation layer converts linearly polarized light into circularly polarized light, the retardation layer is preferably configured to provide λ/4 as the front phase difference, and may be configured to provide 3λ/4 as the front phase difference. In addition, the angle of the slow axis may be set to change the incident linearly polarized

light into circularly polarized light.

In this case, for example, the front phase difference of the retardation layer at a wavelength of 550 nm is preferably in a range of 100 to 450 nm, and more preferably in a range of 120 to 200 nm or 300 to 400 nm. In addition, in a case where the reflection film is used in a head-up display system, the direction of the slow axis of the retardation layer is preferably determined in accordance with an incident direction of a projection light for displaying projection image and a helical sense of the cholesteric liquid crystal layer constituting the reflective layer.

The retardation layer is not particularly limited, and can be appropriately selected according to the purpose. Examples of the retardation layer include a stretched polycarbonate film, a stretched norbornene-based polymer film, a transparent film in which inorganic particles having birefringence such as strontium carbonate are included and aligned, a thin film in which oblique deposition of an inorganic dielectric is performed on a support, a film in which the polymerizable liquid crystal compound is uniaxially aligned and the alignment is immobilized, and a film in which the liquid crystal compound is uniaxially aligned and the alignment is immobilized.

Among these, suitable examples of the retardation layer include a film obtained by uniaxially aligning and immobilizing a polymerizable liquid crystal compound.

As an example, the retardation layer can be formed by a method in which a liquid crystal composition containing a polymerizable liquid crystal compound is applied onto a transparent substrate, a temporary support, or a surface of an alignment layer, the polymerizable liquid crystal compound in the liquid crystal composition is formed in a nematic alignment in a liquid crystal state, and the polymerizable liquid crystal compound is immobilized by curing.

In this case, the formation of the retardation layer can be carried out in the same manner as the formation of the cholesteric liquid crystal layer, except that no chiral agent is added to the liquid crystal composition. However, during the formation of the nematic alignment after applying the liquid crystal composition, the heating temperature is preferably 50°C to 120°C and more preferably 60°C to 100°C.

The retardation layer may be a layer formed by applying a composition containing a high-molecular-weight liquid crystal compound onto the transparent substrate, the temporary support, the surface of the alignment layer, or the like, forming the nematic alignment in a liquid crystal state, cooling the composition, and immobilizing the alignment.

A thickness of the retardation layer is not particularly limited, and is preferably 0.2 to 300 μm, more preferably 0.5 to 150 μm, and still more preferably 1.0 to 80 μm. A thickness of the retardation layer formed from the liquid crystal composition is not particularly limited, and is preferably 0.2 to 10 μm, more preferably 0.5 to 5.0 μm, and still more preferably 0.7 to 2.0 μm.

In the retardation layer, for example, a slow axis inclined at an angle $\alpha$ is set with respect to an axis of the retardation layer in any direction. The direction of the slow axis can be set by, for example, rubbing treatment on an alignment film serving as an underlayer of the retardation layer.

The reflection film may have a thin film-shape, a sheet-shape, or the like. The reflection film may have a roll-shape as a thin film before used for the windshield glass.

<Transparent substrate>

The transparent substrate can also be used as a substrate for forming the reflective layer or the HC layer.

The transparent substrate used for forming the reflective layer or the HC layer may be a temporary support which is peeled off after the reflective layer or the HC layer is formed. Therefore, the transparent substrate may not be included in the finished reflection film and windshield glass. In a case where the finished reflection film or windshield glass includes the transparent substrate, instead of peeling off as the temporary support, the transparent substrate is preferably transparent in the visible light region.

A material of the transparent substrate is not particularly limited. Examples of the transparent substrate include polyesters such as polyethylene terephthalate (PET), and plastic films such as polycarbonate, an acrylic resin, an epoxy resin, polyurethane, polyamide, polyolefin, a cellulose derivative, and silicone. As the temporary support, glass may be used in addition to the plastic films.

As the transparent substrate, a cellulose acylate film is preferable.

A thickness of the transparent substrate may be approximately 5.0 to 1,000 μm, preferably 10 to 250 μm, more preferably 15 to 90 μm, and still more preferably 40 to 80 μm.

The transparent substrate may be formed by any method, and examples thereof include a melt film-forming method and a solution film-forming method.

(Melt film-forming method and smoothing)

In a case where the transparent substrate is formed by a melt film-forming method, the melt film-forming method preferably includes a melting step of melting a resin with an extruder, a step of extruding the melted resin into a sheet shape from a die, and a step of molding the melted resin into a film shape. Depending on a material of the resin, a step of filtering

the melted resin may be provided after the melting step, or the melted resin may be cooled in a case where the melted resin is extruded into a sheet shape.

Hereinafter, the melt film-forming method will be specifically described, but the present invention is not limited thereto.

The manufacturing method of the transparent substrate described above preferably includes a melting step of melting a resin with an extruder; a filtration step of filtering the melted resin through a filtering device equipped with a filter; a film-forming step of extruding the filtered resin into a sheet shape from a die, cooling and solidifying the extruded resin by closely attaching the resin to a cooling drum, thereby forming an unstretched transparent substrate; and a stretching step of uniaxially or biaxially stretching the unstretched transparent substrate.

With such a configuration, the transparent substrate can be manufactured. In a case where a pore diameter of the filter used in the filtration step of filtering the melted resin is 1 μm or less, foreign substances can be sufficiently removed. As a result, a surface roughness of the obtained transparent substrate in a film width direction can be controlled.

Specifically, the method for forming the transparent substrate can include the following steps.

[Melting step]

The manufacturing method of the transparent substrate described above includes a melting step of melting a resin with an extruder.

It is preferable that the resin or a mixture of the resin and an additive is dried to a moisture content of 200 ppm or less, and then introduced into a uniaxial (monoaxial) or biaxial extruder to be melted. In this case, in order to suppress decomposition of the resin, it is also preferable to melt the resin in nitrogen or in a vacuum. The step can be performed under detailed conditions with the aid of paragraphs 0051 and 0052 of JP4962661B (paragraphs 0085 and 0086 of US2013/0100378A) in accordance with these publications, and the contents of these publications are incorporated in the present specification.

The extruder is preferably a uniaxial kneading extruder.

Furthermore, it is also preferable to use a gear pump in order to improve accuracy of sending the melted resin (melting).

[Filtration step]

The manufacturing method of the transparent substrate described above includes a filtration step of filtering the melted resin through a filtering device equipped with a filter, in which a pore diameter of the filter used in the filtration step is preferably 1 μm or less.

In the filtration step, only one set of the filtering device having the filter having such a pore diameter range may be installed, or two or more sets thereof may be installed.

[Film-forming step]

The manufacturing method of the transparent substrate described above includes a film-forming step of extruding the filtered resin into a sheet shape from a die, cooling and solidifying the extruded resin by closely attaching the resin to a cooling drum, thereby forming an unstretched transparent substrate.

In a case where the melted (and kneaded) and filtered resin (melting containing the resin) is extruded into a sheet shape from the die, it may be extruded in a single layer, or may be extruded in a multilayer. In a case of extrusion in a multilayer, for example, a layer containing an ultraviolet absorber and a layer not containing an ultraviolet absorber may be laminated, but from the viewpoint that it is possible to suppress deterioration of the polarizer due to ultraviolet rays and suppress bleed-out of the ultraviolet absorber, a three-layer structure in which the layer containing an ultraviolet absorber is an inner layer is preferable.

In a case where the transparent substrate is manufactured by extruding a multilayer transparent substrate, the preferred thickness of the inner layer of the transparent substrate to be obtained is 50% to 99%, more preferably 60% to 99%, and still more preferably 70% to 99% with respect to the total thickness of all layers. Such lamination can be performed using a feed block die, a multi-manifold die, or the like.

It is preferable that the resin (melting containing the resin) extruded into a sheet shape from the die is extruded to a cooling drum (casting drum), and cooled and solidified, thereby an unstretched transparent substrate (original sheet), in accordance with paragraph 0059 of JP2009-269301A.

In the manufacturing method of the transparent substrate described above, the temperature of the resin extruded from the die is preferably 280°C to 320°C and more preferably 285°C to 310°C. In a case where the temperature of the resin extruded from the die in the melting step is 280°C or higher, it possible to reduce a residual melt of a raw material resin and suppress occurrence of foreign substances, which is preferable. In a case where the temperature of the resin extruded

from the die in the melting step is 320°C or lower, it possible to reduce decomposition of the resin and suppress occurrence of foreign substances, which is preferable.

In measuring the temperature of the resin extruded from the die, a surface of the resin can be measured in a contactless manner using a radiation-type thermometer (manufactured by Hayashi Denko Co., Ltd., model number: RT61-2, used with an emissivity of 0.95).

In the manufacturing method of the transparent substrate described above, it is preferable to use an electrostatic applying electrode in a case of closely attaching the resin to the cooling drum in the film-forming step. As a result, the resin can be strongly and closely attached to the cooling drum, so that a film surface is not roughened.

In the manufacturing method of the transparent substrate described above, a temperature of the resin in a case where the resin is closely attached to the cooling drum (in a case where the melted resin extruded from the die first comes into contact with the cooling drum) is preferably 280°C or higher. As a result, electrical conductivity of the resin is increased, the resin can be strongly and closely attached to the cooling drum by electrostatic application, so that roughening of the film surface can be inhibited.

In measuring the temperature of the resin in a case of closely attaching the resin to the cooling drum, a surface of the resin can be measured in a contactless manner using a radiation-type thermometer (manufactured by Hayashi Denko Co., Ltd., model number: RT61-2, used with an emissivity of 0.95).

[Stretching step]

The manufacturing method of the transparent substrate described above includes a stretching step of uniaxially or biaxially stretching the unstretched transparent substrate.

In a machine-direction stretching step (a step of stretching the transparent substrate in the same direction as a transport direction of the film), after the transparent substrate is pre-heated, the transparent substrate in a heated state is stretched in the conveyance direction using a roller group of rollers having different circumferential speeds (that is, different transportation speeds).

A pre-heating temperature in the machine-direction stretching step is preferably (Tg - 40°C) or higher and (Tg + 60°C) or lower, more preferably (Tg - 20°C) or higher and (Tg + 40°C) or lower, and still more preferably Tg or higher and (Tg + 30°C) or lower with respect to a glass transition temperature (Tg) of the transparent substrate. In addition, the stretching temperature in the machine-direction stretching step is preferably Tg or higher and (Tg + 60°C) or lower, more preferably (Tg + 2°C) or higher and (Tg + 40°C) or lower, and still more preferably (Tg + 5°C) or higher and (Tg + 30°C) or lower. A stretching ratio in the machine direction is preferably 1.0 to 2.5 times and more preferably 1.1 to 2 times.

In addition to or in place of the machine-direction stretching step, the transparent substrate is subjected to cross-direction stretching in a width direction by a cross-direction stretching step (a step of stretching the transparent substrate in a direction perpendicular to the transport direction of the film). In the cross-direction stretching step, for example, a tenter can be preferably used, and using this tenter, both end portions of the transparent substrate in the width direction are gripped by clips and stretched in a cross direction. By performing the cross-direction stretching, it is possible to increase a tensile modulus of the transparent substrate in the optical film.

The cross-direction stretching is preferably performed using a tenter, and a stretching temperature is preferably Tg or higher and (Tg + 60°C) or lower, more preferably (Tg + 2°C) or higher and (Tg + 40°C) or lower, and still more preferably (Tg + 4°C) or higher and (Tg + 30°C) or lower with respect to a glass transition temperature (Tg) of the transparent substrate. A stretching ratio is preferably 1.0 to 5.0 times and more preferably 1.1 to 4.0 times. It is also preferable to relax the transparent substrate in any one or both of the machine direction and the cross direction, after the cross-direction stretching.

In addition, a variation in thickness depending on the location in a width direction and a longitudinal direction is preferably 10% or less, more preferably 8% or less, still more preferably 6% or less, particularly preferably 4% or less, and most preferably 2% or less.

Here, the variation in thickness can be obtained as follows.

A stretched transparent substrate is sampled for 10 m (meter), both end portions in a width direction of the film are removed by 20%, and 50 points are sampled at equal intervals from the central part of the film in each of a width direction and a longitudinal direction to measure a thickness.

A thickness average value $Th_{TD\text{-}av}$, the maximum value $Th_{TD\text{-}max}$, and the minimum value $Th_{TD\text{-}min}$ in the width direction are obtained, and

$$(Th_{TD\text{-}max} - Th_{TD\text{-}min}) \div Th_{TD\text{-}av} \times 100\ [\%]$$

is the variation in thickness in the width direction.

In addition, a thickness average value $Th_{MD\text{-}av}$, the maximum value $Th_{MD\text{-}max}$, and the minimum value $Th_{MD\text{-}min}$

in the longitudinal direction are obtained, and

$$(Th_{MD\text{-}max} - Th_{MD\text{-}min}) \div Th_{MD\text{-}av} \times 100\ [\%]$$

is the variation in thickness in the longitudinal direction.

It is possible to improve accuracy of the thickness of the transparent substrate by the above-described stretching step.

The transparent substrate after the stretching can be wound into a roll shape in a winding step. In this case, a winding tension of the transparent substrate is preferably 0.02 kg/mm$^2$ or less.

Regarding other detailed conditions, contents described in paragraphs 0134 to 0148 of JP2015-224267A for the melt film formation and contents described in JP2007-137028A for the stretching step can be incorporated in the present specification in accordance with the present invention.

(Solution film-forming method and smoothing)

In a case where the transparent substrate is formed by a solution film-forming method, the solution film-forming method preferably includes a step of casting a dope solution on a casting band to form a casting film, a step of drying the casting film, and a step of stretching the casting film. Specifically, it is preferable to form the transparent substrate by a method described in JP4889335B.

In the present invention, the following method is preferably adopted.

Examples thereof include a method described in JP1999-123732A (JP-H11-123732A), in which a drying speed for the casting film is set to 300 % by mass/min (= 5 % by mass/s) or less based on an amount of a solvent contained on a dry base to perform gentle drying. In addition, examples thereof further include a method described in JP2003-276037A, in which in a co-casting method of a casting film having a multilayer structure having skin layers (outer layers) on both surfaces of a core layer which is an interlayer, a viscosity of a dope solution forming the outer layer is decreased while ensuring strength of the casting film by increasing a viscosity of a dope forming the core layer. Preferred examples thereof include a method of rapidly drying a casting film to form a film on the surface of the casting film, and smoothing a surface state by a leveling effect of the formed film, and a method of stretching a casting film.

The transparent substrate may contract due to heat. In particular, in a case where the reflection film is made to follow a curved glass, it is possible to suppress contraction and wrinkles of the reflection film due to thermal contraction of the transparent substrate.

In a case where the reflection film is made to follow the curved glass or the like, it is preferable to apply an application liquid onto a surface of the curved glass and perform the treatment of making the reflection film follow the curved glass.

As the application liquid, a liquid obtained by dissolving a surfactant in distilled water, ion exchange water, or tap water can be used. The surfactant contributes to improvement of wettability of the surface of an object to be bonded (for example, glass) with the application liquid, and to adjustment of evaporation time.

Examples of the surfactant include ester-type surfactants such as glycerin fatty acid ester, sorbitan fatty acid ester, and sucrose fatty acid ester; ether-type surfactants such as alkyl polyethylene glycol and polyoxyethylene alkylphenyl ether; and nonionic surfactants such as alkyl glycoside.

A concentration of the surfactant in the application liquid is preferably 0.01% to 5% by mass and more preferably 0.1% to 5% by mass.

It is presumed that, in a case where the planar reflection film is interposed with the curved glass, wrinkles caused by an extra film can be eliminated by the contraction of the reflection film including the transparent substrate.

In general, the manufacturing of the transparent substrate includes a process of stretching, and stress due to the stretching remains as residual stress. Therefore, the residual stress can be utilized to induce thermal contraction during the curved surface following through heating. It is presumed that the wrinkles generated in a case of following the curved glass can be eliminated by the thermal contraction. In addition, the wrinkles are likely to occur in the vicinity of the outer peripheral portion of the curved glass, where the curvature of the glass is large, and are unlikely to occur in portions of the glass, where the curvature is small. On the other hand, in the reflection film using the transparent substrate which contracts due to heat, there is an effect of effectively suppressing the occurrence of wrinkles in the portions of the glass, where the curvature is small. In a portion of the glass with a large curvature, the film has a degree of freedom to expand in the thickness direction, causing the film to contract in the plane direction. Conversely, in a portion of the glass with a small curvature, the degree of freedom to expand in the thickness direction is limited, and the film hardly contracts in the plane direction.

A temperature at which the transparent substrate thermally contracts varies depending on a forming material of the transparent substrate, but is preferably in a range of 80°C to 200°C, and more preferably in a range of 100°C to 140°C, which is a heating treatment temperature by a heat gun in a general curved surface tracking process.

The heating for contraction the transparent substrate may be performed on the entire curved glass, or may be performed locally on portions where the curvature is high and wrinkles are likely to occur.

The amount of contraction of the transparent substrate required to suppress the wrinkles in the reflection film varies depending on the curvature, dimensions, and the like of the glass. In the heating conditions by a heat gun or the like in the curved surface following process, the transparent substrate has each of a thermal contraction rate in a direction where the thermal contraction rate is maximized and a thermal contraction rate in a direction orthogonal to the direction of preferably 0.01% to 5.0%, more preferably 0.05% to 3.0%, and still more preferably 0.2% to 2.0%. In a case where the thermal contraction rate is 0.01% or more, the wrinkles are less likely to occur during the curved surface following. In addition, in a case where the thermal contraction rate is 5.0% or less, bubbles are less likely to be generated during the curved surface following. The thermal contraction rate can be appropriately adjusted depending on the stretching conditions in a case of manufacturing the transparent substrate.

The thermal contraction rate is measured as follows.

Two reference lines are previously drawn in the width direction on the sample piece of the film cut out in the width direction of 30 mm and in the length direction of 120 mm so as to have an interval of 100 mm. The sample piece is allowed to stand in a heating oven at 140°C under no tension for 45 minutes, and then cooled to room temperature, and the interval between the two reference lines is measured. The interval measured after the treatment is denoted by A [mm]. A numerical value [%] calculated from the interval of 100 mm before the treatment and the interval A [mm] after the treatment by using an expression of "$100 \times (100 - A)/100$" is defined as the thermal contraction rate of the sample piece.

<Protective film layer of pressure-sensitive adhesive layer>

It is preferable that a peelable protective film layer is provided on one surface of the pressure-sensitive adhesive layer. By including such a protective film layer, it is possible to prevent damage to the pressure-sensitive adhesive layer included in the reflection film before use and the attachment of dust, dirt, or the like, and the protective film layer can be peeled off during use.

A peeling layer can be provided between the protective film layer and the pressure-sensitive adhesive layer to facilitate the peeling of the protective film layer. A method of providing such a peeling layer is not particularly limited, and for example, the peeling layer can be provided by applying a peeling coating agent onto a surface of at least one of the protective film layer or the pressure-sensitive adhesive layer. The type of the peeling coating agent is not particularly limited, and examples thereof include a silicone-based coating agent, an inorganic coating agent, a fluorine-based coating agent, and an organic-inorganic hybrid coating agent.

In a case of using the peeling layer, a laminate including the reflection film and the protective film can be obtained by providing the peeling layer on the surface of the protective film layer and laminating it onto the surface of the pressure-sensitive adhesive layer. In this case, the above-described peeling layer may be provided on the surface of the pressure-sensitive adhesive layer, instead of the surface of the protective film layer.

In a case where the protective film layer is provided on the reflection film according to the embodiment of the present invention (on the pressure-sensitive adhesive layer), it is preferable that a difference in thermal contraction rate between the protective film layer and the reflection film layer is small.

Specifically, the difference in thermal contraction rate under the heating conditions by a heat gun or the like in the curved surface following process is preferably 2.0% or less, more preferably 1.0% or less, and still more preferably 0.6% or less. By setting the difference in thermal contraction rate between the protective film layer and the reflection film layer within the above-described range, it is possible to suppress the deformation of the reflection film during heating with a heat gun or the like in a case of following the curved glass.

More specifically, the difference in thermal contraction rate between the reflection film and the protective film at 140°C is preferably less than 1.5%. That is, the difference between the thermal contraction rate of the reflection film at 140°C and the thermal contraction rate of the protective film at 140°C is preferably less than 1.5%, more preferably 1.0% or less, and still more preferably 0.6% or less. The lower limit thereof is not particularly limited, and may be, for example, 0%.

The reflection film according to the embodiment of the present invention preferably reflects linearly polarized light. In a case where the reflection film is incorporated in the windshield glass and used as a combiner for a head-up display, the projected image light is preferably p-polarized light, that is, linearly polarized light in order to prevent reflection on the surface of the windshield glass.

On the other hand, in the present invention, the reflective layer has a cholesteric liquid crystal layer and reflects circularly polarized light.

Therefore, the reflection film according to the embodiment of the present invention preferably has a layer which converts linearly polarized light incident on the reflection film into circularly polarized light. Examples of the layer which converts the polarization state of light include the polarization conversion layer and the retardation layer described above.

As described above, the polarization conversion layer exhibits optical rotation and birefringence with respect to visible light, and converts a polarization state of incident light. In the present invention, it is preferable that the polarization

conversion layer formed of a layer in which a material having birefringence, such as a liquid crystal compound, is aligned with the amount of twist at 360° or less.

As described above, in the retardation layer, a phase difference (optical path difference) is provided to two orthogonal polarized light components to change the state of the incident polarized light. In the present invention, the retardation layer is a layer formed by a material having birefringence, such as a liquid crystal compound, which is aligned in the same direction, and does not have optical rotation.

By adopting a configuration in which the reflection film has a polarization conversion layer or a retardation layer on the reflective layer side onto which light is incident, linearly polarized light incident on the reflection film is converted into circularly polarized light, the reflective layer reflects circularly polarized light, and the reflected circularly polarized light is converted into linearly polarized light by the polarization conversion layer or the retardation layer and emitted.

As described above, in the example shown in Fig. 4, the reflection film 10D includes the polarization conversion layer 5 on one surface side of the reflective layer 2, and the retardation layer 6 on the other surface side. In a case where such a reflection film 10D is incorporated into a windshield glass, as shown in Fig. 5 as an example, the polarization conversion layer 5 is disposed on a side of an in-vehicle side glass plate 11.

A windshield glass shown in Fig. 5 includes the in-vehicle side glass plate 11, a pressure-sensitive adhesive layer 1, a matte layer 8, a polarization conversion layer 5, a reflective layer 2, a retardation layer 6, a transparent substrate 7, and an HC layer 3 in this order.

In this case, the polarization conversion layer has a function of converting a projected p-polarized light (linearly polarized light) into circularly polarized light reflected by the cholesteric liquid crystal layer of the reflective layer.

On the other hand, the retardation layer has a function of optically compensating for light incident from the outside of the windshield glass. For example, in a case of s-polarized light incident from the outside of the windshield glass, a polarization state changes in a case where the s-polarized light passes through the polarization conversion layer, and a component of p-polarized light is mixed. Since a polarized sunglass cuts off the s-polarized light, this component of the p-polarized light transmits the polarized sunglass. Therefore, there is a problem that the function of the polarized sunglass to cut off the glare of the reflected light that is mainly composed of s-polarized light is impaired, which hinders driving. By contrast, a configuration in which the retardation layer is provided, and the retardation layer is used for optical compensation enables an improvement of the suitability for polarized sunglass.

In the example shown in Fig. 5, the reflection film 10D has a configuration in which the polarization conversion layer 5 is disposed on the side of the in-vehicle side glass plate 11, but the configuration is not limited thereto. In the reflection film 10D, the retardation layer 6 may be disposed on the side of the in-vehicle side glass plate 11.

In this case, the retardation layer 6 has a function of converting a projected p-polarized light (linearly polarized light) into circularly polarized light reflected by the cholesteric liquid crystal layer of the reflective layer 2.

On the other hand, the polarization conversion layer 5 has a function of optically compensating for light incident from the outside of the windshield glass, and optical compensation by the polarization conversion layer 5 enables an improvement of the suitability for the polarized sunglass.

In addition, the reflection film according to the embodiment of the present invention may have a configuration in which polarization conversion layers are provided on both sides of the reflective layer 2 or a configuration in which retardation layers are provided on both sides thereof.

In this case, a polarization conversion layer or a retardation layer disposed on the in-vehicle side glass plate may be configured to have a function of converting the projected p-polarized light (linearly polarized light) into circularly polarized light reflected by the cholesteric liquid crystal layer of the reflective layer.

On the other hand, a polarization conversion layer or a retardation layer disposed on the outside of the vehicle may be configured to have a function of optically compensating for light incident from the outside of the windshield glass.

The polarization conversion layer and the retardation layer are as described above.

<Matte layer>

In addition, the reflection film according to the embodiment of the present invention may include a matte layer on the side of the reflective layer opposite to the hardcoat layer. In particular, the reflection film may include a matte layer between the pressure-sensitive adhesive layer and the reflective layer.

The matte layer is a layer with irregularities. By providing the matte layer, in a case where the reflection film is rolled in a state in which the matte layer and the HC layer are in direct contact with each other in a stage of a semi-finished product of the reflection film (a stage of a laminate including the matte layer, the reflective layer, and the HC layer and not including the pressure-sensitive adhesive layer), friction between the matte layer and the HC layer can be reduced, so that the reflection film can be rolled without wrinkles, which is preferable. In a case of a configuration in which the retardation layer or the polarization conversion layer is provided on the reflective layer, the matte layer can be provided on the retardation layer or the polarization conversion layer on a side opposite to the hardcoat layer.

The matte layer can be obtained by irradiating a curable composition for forming the matte layer with active

energy rays to cure the composition.

The retardation layer, and the polarization conversion layer, the curable composition for forming the matte layer preferably contains a polymerizable compound having two or more ethylenically unsaturated groups in one molecule and a radical photopolymerization initiator to ensure adhesion with the reflective layer, and preferably contains particles to impart unevenness.

In addition, it is also preferable that the curable composition for forming the matte layer contains a solvent or a leveling agent.

(Thickness of matte layer)

A thickness of the matte layer is preferably 10 nm or more, more preferably 10 nm to 1 μm, and still more preferably 30 nm to 1 μm.

The thickness of the matte layer is measured by cutting the matte layer with a microtome to take out a cross section, staining the cross section with a 3% by mass aqueous solution of osmium tetroxide for one night, and then taking out the surface again to observe the cross section with a scanning electron microscope (SEM).

A surface roughness Sa1 of a component with a wavelength of 2.5 μm or less on the surface of the matte layer on a side opposite to the reflective layer is preferably 0.30 nm or more, more preferably 0.40 nm or more, still more preferably 0.45 nm or more, and particularly preferably 0.50 nm or more.

In a case where the above-described surface roughness Sa1 is within the above-described range, when the reflection film is rolled in a state in which the matte layer and the HC layer are in direct contact with each other in a stage of a semi-finished product of the reflection film (a stage of a laminate including the matte layer and the HC layer and not including the pressure-sensitive adhesive layer), friction between the matte layer and the HC layer can be reduced, so that the reflection film can be rolled without wrinkles, which is preferable.

## Examples

Hereinafter, the present invention will be described in detail with Examples. The materials, reagents, amounts and proportions of substances, operations, and the like described in Examples, Comparative Examples, and Production Examples below can be appropriately modified as long as the gist of the present invention is maintained. Therefore, the scope of the present invention is not limited to Examples below.

<Preparation of curable composition for forming HC layer>

Components were mixed according to the formulation shown in Tables 1 and 2 below, and filtered through a polypropylene filter having a pore diameter of 10 μm, thereby preparing curable compositions HC-1 and HC-26 for forming an HC layer.

The blending amount of each component shown in Tables 1 and 2 is represented in part by mass.

[Table 1]

| Composition for forming HC layer | | HC-1 | HC-2 | HC-3 | HC-4 | HC-5 | HC-6 | HC-7 | HC-8 | HC-9 | HC-10 | HC-11 | HC-12 |
|---|---|---|---|---|---|---|---|---|---|---|---|---|---|
| Radically polymerizable compound | DPHA (manufactured by Nippon Kayaku Co., Ltd.) | 14.45 | 28.48 | 39.95 | | | 28.48 | 28.48 : | 28.48 : | 28.48 | 36.13 | 28.81 | 36.46 |
| | ATMMT (manufactured by Shin-Nakamura Chemical Co., Ltd.) | | | | 28.48 | | | | | | | | |
| | TMPTA (manufactured by Nippon Kayaku Co., Ltd.) | | | | | 28.48 | | | | | | | |
| Cationically polymerizable compound | CYCLOMER M100 (manufactured by Daicel Chemical Industries, Ltd.) | 25.50 | 11.48 | | 11.48 | 11.48 | | | 11.48 | 11.48 | 11.48 | 11.48 | 11.48 |
| | CELLOXIDE 8000 (manufactured by Daicel Chemical Industries, Ltd.) | | | | | | 11.48 | | | | | | |
| | CELLOXIDE 2121P (manufactured by Daicel Chemical Industries, Ltd.) | | | | | | | 11.48 | | | | | |
| Radical polymerizotion initiator | Irgacure 184 (manufactured by BASF) | 204 | 204 | 2.04 | 204 | 204 | 2.04 | 2.04 | | 2.04 | 2.04 | 204 | 204 |
| | Irgacure 127 (manufactured by BASF) | | | | | | | | 204 | | | | |
| Cationic polymerization initiator | PAG-1 | 0.41 | 0.41 | 0.41 | 0.41 | 0.41 | 0.41 | 0.41 | 0.41 | | 0.41 | 0.41 | 0.41 |
| | PAG-2 | | | | | | | | | 0.41 | | | |

(continued)

| Composition for forming HC layer | | HC-1 | HC-2 | HC-3 | HC-4 | HC-5 | HC-6 | HC-7 | HC-8 | HC-9 | HC-10 | HC-11 | HC-12 |
|---|---|---|---|---|---|---|---|---|---|---|---|---|---|
| Silica particles | MEK-AC-2140Z (manufactured by Nissan Chemical Corporation; solid content: 40 wt%) | 19.13 | 19.13 | 19.13 | 19.13 | 19.13 | 19.13 | 19.13 | 19.13 | 19.13 | | 19.13 | |
| | AEROSIL RX300 (manufactured by Nippon Aerosil Co., Ltd.) | 0.33 | 0.33 | 0.33 | 0.33 | 0.33 | 0.33 | 0.33 | 0.33 | 0.33 | 0.33 | | |
| | MEK-ST-ZL (manufactured by Nissan Chemical Corporation; solid content: 30 wt%) | | | | | | | | | | | | |
| | MEK-ST-5140Z (manufactured by Nissan Chemical Corporation; solid content: 40 wt%) | | | | | | | | | | | | |
| | MEK-ST-L (manufactured by Nissan Chemical Corporation; solid content: 30 wt%) | | | | | | | | | | | | |
| UV absorber | TINUVIN928 (manufactured by BASF) | 0.59 | 0.59 | 0.59 | 0.59 | 0.59 | 0.59 | 0.59 | 0.59 | 0.59 | 0.59 | 0.59 | 0.59 |
| Antifouling agent | RS-90 (manufactured by DIC CORPORATION) | 0.31 | 0.31 | 0.31 | 0.31 | 0.31 | 0.31 | 0.31 | 0.31 | 0.31 | 0.31 | 0.31 | 0.31 |
| Leveling agent | P-112 | | | | | | | | | | | | |
| Solvent | Methyl ethyl ketone (MEK) | 3.92 | 3.92 | 3.92 | 3.92 | 3.92 | 3.92 | 3.92 | 3.92 | 3.92 | 15.39 | 3.92 | 15.39 |
| | Methyl isobutyl ketone (MIBK) | 18.60 | 18.60 | 18.6C | 18.60 | 18.60 | 18.60 | 18.60 | 18.60 | 18.60 | 18.60 | 18.60 | 18.60 |
| | Methyl acetate | 14.73 | 14.73 | 14.73 | 14.73 | 14.73 | 14.73 | 14.73 | 14.73 | 14.73 | 14.73 | 14.73 | 14.73 |

[Table 2]

| Composition for forming HC layer | | HC-13 | HC-14 | HC-15 | HC-16 | HC-17 | HC-18 | HC-19 | HC-20 | HC-21 | HC-22 | HC-23 | HC-24 | HC-25 | HC-26 |
|---|---|---|---|---|---|---|---|---|---|---|---|---|---|---|---|
| Radically polymerizable compound | DPHA (manufactured by Nippon Kavaku Co., Ltd.) | 29.06 | 14.45 | 48.93 | 42.83 | 45.38 | 29.57 | 29.83 | 29.57 | 29.06 | 28.55 | 29.57 | 29.06 | 29.57 | 48.42 |
| | ATMMT (manufactured by Shin-Nakamura Chemical Co., Ltd.) | | | | | | | | | | | | | | |
| | TMPTA (manufactured by Nippon Kavaku Co., Ltd.) | | | | | | | | | | | | | | |
| Cationically polymerizable compound | CYCLOMER M100 (manufactured by Daicel Chemical Industries, Ltd.) | 11.48 | 25.50 | | 5.10 | 2.55 | 10.20 | 10.20 | 10.20 | 10.20 | 10.20 | 10.20 | 10.20 | 10.20 | |
| | CELLOXIDE 8000 (manufactured by Daicel Chemical Industries, Ltd.) | | | | | | | | | | | | | | |
| | CELLOXIDE 2121P (manufactured by Daicel Chemical Industries, Ltd.) | | | | | | | | | | | | | | |
| Radical polymerization initiator | Irgacure 184 (manufactured by BASF) | 204 | 2.04 | 204 | 204 | 2.04 | 204 | 2.04 | 2.04 | 204 | 2.04 | 204 | 204 | 204 | 2.04 |
| | Irgacure 127 (manufactured by BASF) | | | | | | | | | | | | | | |
| Cationic polymerization initiator | PAG-1 | 0.41 | 0.41 | | 0.41 | 0.41 | 0.41 | 0.41 | 0.41 | 0.41 | 0.41 | 0.41 | 0.41 | 0.41 | |
| | PAG-2 | | | | | | | | | | | | | | |

(continued)

| Composition for forming HC layer | | HC-13 | HC-14 | HC-15 | HC-16 | HC-17 | HC-18 | HC-19 | HC-20 | HC-21 | HC-22 | HC-23 | HC-24 | HC-25 | HC-26 |
|---|---|---|---|---|---|---|---|---|---|---|---|---|---|---|---|
| Silica particles | MEK-AC-2140Z (manufactured by Nissan Chemical Corporation; solid content: 40 wt%) | 19.13 | 19.13 | | | | 19.13 | 19.13 | 19.13 | 19.13 | 19.13 | 19.13 | 19.1 | 19.13 | |
| | AEROSIL RX300 (manufactured by Nippon Aerosil Co., Ltd.) | 0.33 | 0.33 | | | | 0.51 | | | | | | | | |
| | MEK-ST-ZL (manufactured by Nissan Chemical Corporation; solid content: 30 wt%) | | | | | | | 0.85 | 1.70 | 3.40 | 5.10 | | | | |
| | MEK-ST-5140Z (manufactured by Nissan Chemical Corporation; solid content: 40 wt%) | | | | | | | | | | | 1.28 | 2.55 | | 1.70 |
| | MEK-ST-L (manufactured by Nissan Chemical Corporation; solid content: 30 wt%) | | | | | | | | | | | | | 1.70 | |
| UV absorber | TINUVIN928 (manufactured by BASF) | | 0.59 | | | | 0.59 | 0.59 | 0.59 | 0.59 | 0.59 | 0.59 | 0.59 | 0.59 | |
| Antifouling agent | RS-90 (manufactured by DIC CORPORATION) | 0.31 | | 0.31 | 0.31 | 0.31 | 0.31 | 0.31 | 0.31 | 0.31 | 0.31 | 0.31 | 0.31 | 0.31 | 0.31 |
| Leveling agent | P-112 | | 0.31 | | | | | | | | | | | | |

(continued)

| Composition for forming HC layer | | HC-13 | HC-14 | HC-15 | HC-16 | HC-17 | HC-18 | HC-19 | HC-20 | HC-21 | HC-22 | HC-23 | HC-24 | HC-25 | HC-26 |
|---|---|---|---|---|---|---|---|---|---|---|---|---|---|---|---|
| Solvent | Methyl ethyl ketone (MEK) | 3.92 | 3.92 | 15.39 | 15.39 | 15.39 | 3.92 | 3.32 | 2.73 | 1.54 | 0.35 | 3.15 | 2.39 | 2.73 | 14.20 |
| | Methyl isobutyl ketone (MIBK) | 18.60 | 18.60 | 18.60 | 18.60 | 18.60 | 18.60 | 18.60 | 18.60 | 18.60 | 18.60 | 18.60 | 18.60 | 18.60 | 18.60 |
| | Methyl acetate | 14.73 | 14.73 | 14.73 | 14.73 | 14.73 | 14.73 | 14.73 | 14.73 | 14.73 | 14.73 | 14.73 | 14.73 | 14.73 | 14.73 |

The unit of the numerical values in Tables 1 and 2 is % by mass.
Details of each compound shown in Tables 1 and 2 are provided below.
PAG-1 and PAG-2 are the above-described compounds.

<Leveling agent>

P-112: leveling agent, compound P-112 described in paragraph 0053 of JP5175831B

<Preparation of composition for forming reflective layer, composition for forming retardation layer, and composition for forming polarization conversion layer>

Each component was mixed in the formulation shown in Table 3 below, and the mixture was filtered through a polypropylene filter having a pore diameter of 10 μm to prepare compositions BG1, R1, and IR1 for forming a reflective layer, a composition A1 for forming a retardation layer, and a composition TW-1 for forming a polarization conversion layer.
The blending amount of each component shown in Table 3 is represented in part by mass.
The mixture 1, the alignment control agent 1, and the alignment control agent 2 are the above-described compounds.

[Table 3]

| Composition for forming reflective layer, composition for forming retardation layer, and composition for forming polarization conversion layer | | BG1 | R1 | IR1 | A1 | TW1 |
|---|---|---|---|---|---|---|
| Polymerizable liquid crystal compound | Mixture 1 | 100.00 | 100.00 | 100.00 | 100.00 | 100.00 |
| Chiral agent | LC756 (manufactured by BASF) | 6.37 | 4.08 | 3.36 | | 0.32 |
| Polymerization initiator | Irgacure OXE01 (manufactured by BASF) | 1.00 | 1.00 | 1.00 | 1.00 | 1.00 |
| Alignment control agent | Alignment control agent 1 | 0.05 | 0.05 | 0.05 | 0.05 | 0.05 |
| | Alignment control agent 2 | 0.02 | 0.02 | 0.02 | 0.01 | 0.02 |
| Solvent | Methyl ethyl ketone (MEK) | 134.30 | 131.44 | 130.54 | 126.33 | 126.74 |

<Preparation of composition for forming matte layer>

Components were mixed according to the formulation shown in Table 4 below, and filtered through a polypropylene filter having a pore diameter of 10 μm, thereby preparing compositions M-1 to M-3 for forming a matte layer.
The blending amount of each component shown in Table 4 is represented in part by mass.

[Table 4]

| Composition for forming matte layer | | M-1 | M-2 | M-3 |
|---|---|---|---|---|
| Radically polymerizable compound | DPHA (manufactured by Nippon Kayaku Co., Ltd.) | 3.80 | 3.80 | 3.80 |
| Radical polymerization initiator | Irgacure 184 (manufactured by BASF) | 0.16 | 0.16 | 0.16 |
| Silica particles | MEK-ST-ZL (manufactured by Nissan Chemical Corporation; solid content: 30 wt%) | 0.13 | 0.13 | 0.13 |
| Antifouling agent | RS-90 (manufactured by DIC CORPORATION) | | 0.04 | |
| Leveling agent | P-112 | | | 0.004 |
| Solvent | Methyl ethyl ketone (MEK) | 28.71 | 28.67 | 28.71 |
| | Cyclohexanone | 67.20 | 67.20 | 67.20 |

The cellulose acylate film on which the alignment film was formed was used as a transparent substrate.

<Saponification of cellulose acylate film>

A cellulose acylate film having a thickness of 40 μm was produced by the same production method as in Example 20 described in WO2014/112575A. UV-531 manufactured by Fujian Disheng Technology Co., Ltd. was added to the cellulose acylate film as an ultraviolet absorber. The addition amount thereof was 3 per hundred resin (phr).

After passing the produced cellulose acylate film through a dielectric heating roll at a temperature of 60°C to raise the surface temperature of the film to 40°C, one side of the film was coated with an alkaline solution with formulation provided as below at a coating amount of 14 mL/$m^2$ using a bar coater, and was allowed to stay under a steam-type far infrared heater (manufactured by Noritake Co., Ltd.) heated to 110°C for 10 seconds.

Next, pure water was applied thereto at 3 mL/$m^2$ using a bar coater in the same manner.

Next, washing with water using a fountain coater and dewatering using an air knife were repeated three times, staying in a drying zone at 70°C was performed for 5 seconds, and drying was performed to produce a cellulose acylate film 1 subjected to the saponification treatment.

In addition, cellulose acylate films were prepared by adjusting the film thickness to 25 μm, 60 μm, and 80 μm and subjecting the cellulose acylate films to the same treatment as described above, resulting in cellulose acylate films 2, 3, and 4.

In addition, a cellulose acylate film was prepared by adjusting the film thickness to 40 μm and modifying the stretching conditions to increase the residual stress, followed by subjecting the cellulose acylate film to the same treatment as described above to produce a cellulose acylate film 5.

| Formulation of alkali solution | |
|---|---|
| · Potassium hydroxide | 4.7 parts by mass |
| · Water | 15.7 parts by mass |
| · Isopropanol | 64.8 parts by mass |
| · Surfactant ($C_{16}H_{33}O(CH_2CH_2O)_{10}H$) | 1.0 part by mass |
| · Propylene glycol | 14.9 parts by mass |

<Formation of alignment film>

The saponified surface of the saponified cellulose acylate film 1 (transparent substrate) obtained as described above was coated with a coating liquid for forming an alignment film, having formulation described below, using a wire bar coater at 24 mL/$m^2$, and dried with hot air at 100°C for 120 seconds to obtain an alignment film having a thickness of 0.5 μm.

| Formulation of coating liquid for forming alignment film | |
|---|---|
| · Modified polyvinyl alcohol shown below | 28 parts by mass |
| · Citric acid ester (AS3, manufactured by Sankyo Chemical Co., Ltd. | 1.2 parts by mass |
| · Photoinitiator (IRGACURE 2959, manufactured by BASF) | 0.84 parts by mass |
| · Glutaraldehyde | 2.8 parts by mass |
| · Water | 699 parts by mass |
| · Methanol | 226 parts by mass |

(Modified polyvinyl alcohol)

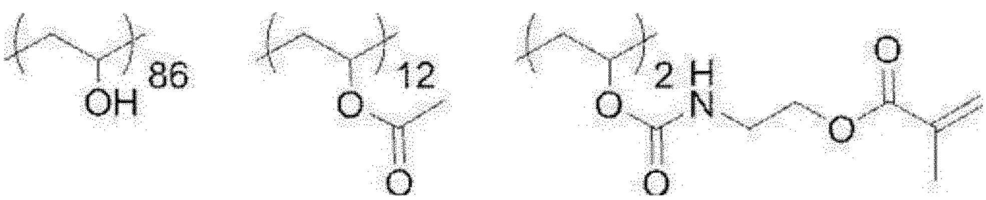

<Production of reflection film>

The alignment film produced as described above was subjected to a rubbing treatment (rayon cloth, pressure: 0.1 kgf (0.98 N), rotation speed: 1,000 revolutions per minute (rpm), transportation speed: 10 m/min, number of times: 1 round trip) in a direction rotated clockwise by 45° with respect to a long side direction of a support.

The composition IR1 for forming a reflective layer was applied onto the rubbed surface of the alignment film described above at room temperature using a wire bar, such that a thickness of a dry film after drying was 0.4 μm, to obtain a coating layer.

The coating layer was dried at room temperature for 30 seconds, and heated in an atmosphere of 85°C for 2 minutes. Thereafter, in an environment with an oxygen concentration of 1,000 ppm or less, a D bulb (90 mW/cm lamp) manufactured by Fusion Co., Ltd. was used for irradiation with ultraviolet rays at 60°C and an output of 60% for 6 to 12 seconds to immobilize a cholesteric liquid crystalline phase, thereby obtaining a cholesteric liquid crystal layer IR1 having a thickness of 0.4 μm.

Next, the same process was repeated on the surface of the obtained cholesteric liquid crystal layer IR1 using the composition BG1 for forming a reflective layer, thereby laminating a cholesteric liquid crystal layer BG1 having a thickness of 0.34 μm thereon.

Next, the same process was repeated on the surface of the obtained cholesteric liquid crystal layer BG1 using the composition R1 for forming a reflective layer, thereby laminating a cholesteric liquid crystal layer R1 having a thickness of 0.20 μm thereon.

In this way, a film A1 having a reflective layer consisting of three cholesteric liquid crystal layers was obtained. In a case where a transmission spectrum of the film A1 was measured with a spectrophotometer (manufactured by JASCO Corporation, V-670), transmission spectra having selective reflection center wavelengths at 515 nm, 685 nm, and 775 nm were obtained.

The curable composition HC-1 for forming an HC layer was applied onto the surface of the cellulose acylate film 1 on a side opposite to the reflective layer in the film A1 produced above, and cured to form an HC1 layer having a film thickness of 6 μm.

The method of applying and curing was specifically as follows. By a die coating method using a slot die, described in Example 1 of JP2006-122889A, the curable composition for forming an HC layer was applied under a condition of a transportation speed of 30 m/min, and dried at an atmospheric temperature of 60°C for 60 seconds. Thereafter, under nitrogen purging, the applied curable composition for forming an HC layer was further cured by irradiating the curable composition with ultraviolet rays having an illuminance of 150 $mW/cm^2$ and an irradiation amount of 600 $mJ/cm^2$ using an air-cooled metal halide lamp (manufactured by EYE GRAPHICS Co., Ltd.) of 160 W/cm with an oxygen concentration of approximately 0.1% by volume to form a first HC layer, thereby obtaining a film HC1 including the reflective layer and the HC layer.

A pressure-sensitive adhesive layer was applied onto the reflective layer side of the film HC1 produced above. After peeling off a light-peeling film of NCF-D692 (film thickness of pressure-sensitive adhesive layer: 15 μm, manufactured by LINTEC Corporation), the exposed pressure-sensitive adhesive layer and the reflective layer of the film HC1 were bonded to each other while applying a load of 2 kg with a rubber roller, thereby producing a reflection film of Example 1 with a configuration of HC layer/transparent substrate/reflective layer/pressure-sensitive adhesive layer/protective film.

The above-described NCF-D692 had a light-peeling film, a pressure-sensitive adhesive layer, and a heavy-peeling film, and the protective film in the reflection film corresponds to the heavy-peeling film of NCF-D692.

<Examples 2 to 13>

Reflection films of Examples 2 to 13 were produced in the same manner as in Example 1, except that, instead of the curable composition HC-1 for forming an HC layer, the curable compositions HC-2 to HC-13 for forming an HC layer were used.

<Example 14>

A reflection film of Example 14 was produced in the same manner as in Example 2, except that the thickness of the first HC layer was set to 12 μm.

<Example 15>

A reflection film of Example 15 was produced in the same manner as in Example 2, except that the thickness of the first HC layer was set to 3 μm.

<Example 16>

A first HC layer was formed in the same manner as in Example 14, except that the curable composition HC-14 for forming an HC layer was used instead of the curable composition HC-2 for forming an HC layer, and the ultraviolet irradiation conditions during curing were changed to an illuminance of 20 $mW/cm^2$ and an irradiation amount of 30 $mJ/cm^2$.
The curable composition HC-15 for forming an HC layer was applied onto the surface of the first HC layer formed as described above, and the curable composition was cured to form a second HC layer having a film thickness of 4 μm.
The method of applying and curing was specifically as follows. By a die coating method using a slot die, described in Example 1 of JP2006-122889A, the curable composition for forming an HC layer was applied under a condition of a transportation speed of 30 m/min, and dried at an atmospheric temperature of 60°C for 150 seconds. Thereafter, under nitrogen purging, the applied curable composition for forming an HC layer was further cured by irradiating the curable composition with ultraviolet rays having an illuminance of 150 $mW/cm^2$ and an irradiation amount of 600 $mJ/cm^2$ using an air-cooled metal halide lamp (manufactured by EYE GRAPHICS Co., Ltd.) of 160 W/cm with an oxygen concentration of approximately 0.1% by volume to form the second HC layer, and winding was performed to obtain a film HC2 including the reflective layer and the HC layer.
A pressure-sensitive adhesive layer was applied onto the reflective layer side of the film HC2 produced above. After peeling off a light-peeling film of NCF-D692 (film thickness of pressure-sensitive adhesive layer: 15 μm, manufactured by LINTEC Corporation), the exposed pressure-sensitive adhesive layer and the reflective layer of the film HC1 were bonded to each other while applying a load of 2 kg with a rubber roller, thereby producing a reflection film of Example 16 with a configuration of HC layer/transparent substrate/reflective layer/pressure-sensitive adhesive layer/protective film.

<Example 17>

A reflection film of Example 17 was produced in the same manner as in Example 2, except that the thickness of the cholesteric liquid crystal layer BG1 was set to 0.84 μm.

<Example 18>

A reflection film of Example 18 was produced in the same manner as in Example 2, except that the thickness of the cholesteric liquid crystal layer R1 was set to 0.36 μm.

<Example 19>

A reflection film of Example 19 was produced in the same manner as in Example 18, except that NCF-D692 (film thickness of pressure-sensitive adhesive layer: 10 μm, manufactured by LINTEC Corporation) was used as the pressure-sensitive adhesive layer.
The above-described NCF-D692 had a light-peeling film, a pressure-sensitive adhesive layer, and a heavy-peeling film, and the protective film in the reflection film corresponds to the heavy-peeling film of NCF-D692.

<Example 20>

A reflection film of Example 20 was produced in the same manner as in Example 18, except that NCF-D692 (film thickness of pressure-sensitive adhesive layer: 5 μm, manufactured by LINTEC Corporation) was used as the pressure-sensitive adhesive layer.
The above-described NCF-D692 had a light-peeling film, a pressure-sensitive adhesive layer, and a heavy-peeling film, and the protective film in the reflection film corresponds to the heavy-peeling film of NCF-D692.

<Example 21>

A reflection film of Example 21 was produced in the same manner as in Example 18, except that NCF-D692 (film thickness of pressure-sensitive adhesive layer: 20 μm, manufactured by LINTEC Corporation) was used as the pressure-sensitive adhesive layer.
The above-described NCF-D692 had a light-peeling film, a pressure-sensitive adhesive layer, and a heavy-peeling film, and the protective film in the reflection film corresponds to the heavy-peeling film of NCF-D692.

<Example 22>

A reflection film of Example 22 was produced in the same manner as in Example 18, except that NCF-D692 (film thickness of pressure-sensitive adhesive layer: 25 μm, manufactured by LINTEC Corporation) was used as the pressure-sensitive adhesive layer.
The above-described NCF-D692 had a light-peeling film, a pressure-sensitive adhesive layer, and a heavy-peeling film, and the protective film in the reflection film corresponds to the heavy-peeling film of NCF-D692.

<Example 23>

A reflection film of Example 23 was produced in the same manner as in Example 18, except that PANACLEAN PD-S1 (film thickness of pressure-sensitive adhesive layer: 5 μm, manufactured by PANAC Corporation) was used as the pressure-sensitive adhesive layer.
The above-described PANACLEAN PD-S1 had a light-peeling film, a pressure-sensitive adhesive layer, and a heavy-peeling film, and the protective film in the reflection film corresponds to the heavy-peeling film of PD-S1.

<Example 24>

A reflection film of Example 24 was produced in the same manner as in Example 18, except that MF-58 (film thickness of pressure-sensitive adhesive layer: 12 μm, manufactured by TOMOEGAWA CORPORATION) was used as the pressure-sensitive adhesive layer.
The above-described MF-58 had a light-peeling film, a pressure-sensitive adhesive layer, and a heavy-peeling film, and the protective film in the reflection film corresponds to the heavy-peeling film of MF-58.

<Example 25>

A reflection film of Example 25 was produced in the same manner as in Example 18, except that MHM-UVC (film thickness of pressure-sensitive adhesive layer: 15 μm, manufactured by NEION Film Coatings Corp.) was used as the pressure-sensitive adhesive layer.
The above-described MHM-UVC had a light-peeling film, a pressure-sensitive adhesive layer, and a heavy-peeling film, and the protective film in the reflection film corresponds to the heavy-peeling film of MHM-UVC.

<Example 26>

A reflection film of Example 26 was produced in the same manner as in Example 18, except that SK Dyne 2057 (film thickness of pressure-sensitive adhesive layer: 25 μm, manufactured by Soken Chemical & Engineering Co., Ltd.) was used as the pressure-sensitive adhesive layer.
The above-described SK Dyne 2057 had a light-peeling film, a pressure-sensitive adhesive layer, and a heavy-peeling film, and the protective film in the reflection film corresponds to the heavy-peeling film of SK Dyne 2057.

<Example 27>

A reflection film of Example 27 was produced in the same manner as in Example 18, except that the cellulose acylate film 2 (thickness: 25 μm) was used as the transparent substrate.

<Example 28>

A reflection film of Example 28 was produced in the same manner as in Example 18, except that the cellulose acylate film 3 (thickness: 60 μm) was used as the transparent substrate.

<Example 29>

A reflection film of Example 29 was produced in the same manner as in Example 18, except that the cellulose acylate film 4 (thickness: 80 μm) was used as the transparent substrate.

<Example 30>

A reflection film of Example 30 was produced in the same manner as in Example 18, except that the cellulose

acylate film 5 (thickness: 40 μm) was used as the transparent substrate.

<Example 31>

A reflection film of Example 31 was produced in the same manner as in Example 24, except that the composition A1 for forming a retardation layer was applied onto the rubbed surface of the alignment film using a wire bar, dried, and cured under the following conditions, and the composition IR1 for forming a reflective layer was applied onto the cured retardation layer A1.

<Curing conditions of composition A1 for forming retardation layer>

The composition A1 for forming a retardation layer was applied and dried, placed on a hot plate at 50°C, and irradiated with ultraviolet rays for 6 seconds using an electrodeless lamp "D bulb" (60 $mW/cm^2$) manufactured by Fusion Co., Ltd. in an environment with an oxygen concentration of 1,000 ppm or less to form a retardation layer. As a result, a retardation layer having a desired front phase difference, that is, a thickness adjusted to obtain a desired retardation was obtained.

In a case where the retardation of the produced retardation layer at 550 nm was measured with AxoScan manufactured by Axometrics, Inc., it was 126 nm.

<Example 32>

A reflection film of Example 32 was produced in the same manner as in Example 31, except that a polarization conversion layer TW1 was applied onto the cholesteric liquid crystal layer R1 so that the thickness was 0.8 μm.

For the polarization conversion layer TW1, a composition TW1 for forming a polarization conversion layer was applied onto the cholesteric liquid crystal layer R1 at room temperature using a wire bar, and the coating layer was dried at room temperature for 30 seconds and heated in an atmosphere of 85°C for 2 minutes. Thereafter, in an environment with an oxygen concentration of 1,000 ppm or less, the coating layer was irradiated with ultraviolet rays at 60°C and an output of 60% for 6 to 12 seconds using a D-valve (90 mW/cm lamp) manufactured by Fusion Co., Ltd., thereby forming the polarization conversion layer.

<Examples 33 to 42>

Reflection films of Examples 33 to 42 were produced in the same manner as in Example 24, except that, instead of the curable composition HC-2 for forming an HC layer, the curable compositions HC-16 to HC-25 for forming an HC layer were used.

<Example 43>

A first HC layer was formed in the same manner as in Example 24, except that the curable composition HC-14 for forming an HC layer was used instead of the curable composition HC-2 for forming an HC layer, and the ultraviolet irradiation conditions during curing were changed to an illuminance of 20 $mW/cm^2$ and an irradiation amount of 30 $mJ/cm^2$.

The curable composition HC-26 for forming an HC layer was applied onto the surface of the first HC layer formed as described above, and the curable composition was cured to form a second HC layer having a film thickness of 0.2 μm.

A reflection film of Example 43 was produced by applying the pressure-sensitive adhesive layer in the same manner as in Example 24.

<Examples 44 to 46>

A reflection film including a polarization conversion layer was produced in the same manner as in Example 32, except that HC-17 was used as the composition for forming HC. Each of the compositions M-1 to M-3 for forming a matte layer was applied onto the surface of the polarization conversion layer in the reflection film, and cured to form a matte layer having a film thickness of 60 nm.

The method of applying and curing was specifically as follows. By a die coating method using a slot die, described in Example 1 of JP2006-122889A, the curable composition for forming a matte layer was applied under a condition of a transportation speed of 30 m/min, and dried at an atmospheric temperature of 45°C for 60 seconds. Thereafter, under nitrogen purging, the applied curable composition for forming a matte layer was further cured by irradiating the curable composition with ultraviolet rays having an illuminance of 150 $mW/cm^2$ and an irradiation amount of 300 $mJ/cm^2$ using an air-cooled metal halide lamp (manufactured by EYE GRAPHICS Co., Ltd.) of 160 W/cm with an oxygen concentration of

approximately 0.1% by volume to form a matte layer, thereby obtaining reflection films of Examples 44 to 46, including the matte layer.

<Comparative Example 1>

A reflection film of Comparative Example 1 was produced in the same manner as in Example 1, except that the HC layer was not applied.

<Comparative Example 2>

A reflection film of Comparative Example 2 was produced in the same manner as in Example 1, except that the reflective layer was not applied.

<Comparative Example 3>

A reflection film of Comparative Example 3 was produced in the same manner as in Example 1, except that the pressure-sensitive adhesive layer was not applied.

The following tests were performed on the reflection films produced as described above. Test results are summarized in Table 3.

[Test Example 1] Pencil hardness

The pencil hardness was evaluated according to Japanese Industrial Standards (JIS) K 5400.

The protective film was peeled off from the pressure-sensitive adhesive layer of the reflection film, a glass plate (manufactured by Coming, trade name: Eagle XG, thickness: 1 mm) and the reflection film produced above were bonded to each other while applying a load of 2 kg with a rubber roller, such that the glass plate and the pressure-sensitive adhesive layer side of the reflection film faced each other, thereby producing a laminate of the reflection film and the glass plate.

The laminate was moisture-conditioned at a temperature of 25°C and a relative humidity of 60% for 2 hours, and then scratched at five different locations on the surface of the HC layer with a load of 750 gf using test pencils ranging from H to 9H according to JIS S 6006. Thereafter, among hardnesses of pencils in which scratches were observed at 0 to 2 points, the highest pencil hardness was used as the evaluation result.

[Test Example 2] Abrasion resistance

The protective film was peeled off from the pressure-sensitive adhesive layer of the reflection film, a glass plate (manufactured by Coming, trade name: Eagle XG, thickness: 1 mm) and the reflection film produced above were bonded to each other while applying a load of 2 kg with a rubber roller, such that the glass plate and the pressure-sensitive adhesive layer side of the reflection film faced each other, thereby producing a laminate of the reflection film and the glass plate.

The laminate was moisture-conditioned at a temperature of 25°C and a relative humidity of 60% for 2 hours, and then a haze (HA) before an abrasion test was measured using a haze meter (NDH2000N, manufactured by NIPPON DENSHOKU INDUSTRIES Co., LTD.). Using a Taber abrasion tester (rotary abrasion tester, manufactured by Toyo Seiki Seisaku-sho, Ltd.), the surface of the HC layer was tested for 100 cycles under the conditions of a CS-10F abrasion wheel, a rotation speed of 72 rpm, and a load of 500 gf. For the laminate after the test, a haze (HB) of the test portion was measured. ∆haze (HB - HA) before and after the test was calculated and evaluated according to the following standard.

<∆Haze before and after abrasion resistance test>

A: ∆haze was 1% or less.
B: ∆haze was more than 1% and 2.5% or less.
C: ∆haze was more than 2.5% and 4% or less.
D: ∆haze was more than 4%.

A to C are within the acceptable range.

[Test Example 3] Reflection spectrum

The protective film was peeled off from the pressure-sensitive adhesive layer of the reflection film, a glass plate (manufactured by Corning, trade name: Eagle XG, thickness: 1 mm) and the reflection film produced above were bonded to each other while applying a load of 2 kg with a rubber roller, such that the glass plate and the pressure-sensitive adhesive layer side of the reflection film faced each other, thereby producing a laminate of the reflection film and the glass plate.

The glass plate side of the laminate was bonded to "KUKKIRI MIERU" (manufactured by TOMOEGAWA CORPORATION), and using a spectrophotometer (manufactured by JASCO Corporation, V-670), P-polarized light and S-polarized light were incident on the surface of the reflection film at an angle of 5° from the normal direction, and reflection spectrum of 400 to 1,000 nm was measured. An average value (average reflection spectrum) of the measured reflection spectrum of P-polarized light and the measured reflection spectrum of S-polarized light was obtained.

The average value between the reflectivity in a case where the P-polarized light was incident and the reflectivity in a case where the S-polarized light was incident is synonymous with the reflectivity in a case where unpolarized light (natural light) was incident. That is, the average value of the reflection spectrum of P-polarized light and the reflection spectrum of S-polarized light has the same meaning as the reflection spectrum in a case where the natural light was incident.

From the calculated average value of the reflection spectra of P-polarized light and S-polarized light, the following values were calculated and evaluated according to the following standard:

· a maximum value R1 of natural light reflectivity in a wavelength range of 400 nm or more and less than 500 nm,
· a maximum value R2 of natural light reflectivity in a wavelength range of 500 nm or more and less than 600 nm, and
· a maximum value R3 of natural light reflectivity in a wavelength range of 600 nm to 800 nm.

A: the maximum value R1, the maximum value R2, and the maximum value R3 were all more than 20%.
B: the maximum value R1, the maximum value R2, and the maximum value R3 were all more than 7%, and any one of the maximum values was 20% or less.
C: the maximum value R1, the maximum value R2, and the maximum value R3 were all 7% or less.

A or B is within the acceptable range.

[Test Example 4] Curved surface followability

<Preparation of application liquid>

An application liquid having the following formulation was prepared.

| Formulation of application liquid | |
|---|---|
| · Film application liquid (manufactured by 3M Company) | 10 parts by mass |
| · Water | 500 parts by mass |

<Curved surface forming of reflection film>

The application liquid prepared above was sprayed on a convex surface side of a curved glass with a width of 330 mm and a length of 260 mm, having a curvature of R1750 mm in the longitudinal direction of 330 mm and R1250 mm in the lateral direction of 260 mm. The reflection film produced above was cut into a size of 330 mm × 260 mm, and the hardcoat layer side of the reflection film was attached to the convex surface side of the curved glass. In this case, the reflection film was adsorbed to the convex surface side of the curved glass due to a surface tension of the application liquid, but a part of the reflection film did not come into contact with the curved glass and remained as wrinkles. A heat gun (Heating Gun 882 manufactured by HAKKO Corporation) was used for blowing hot air while using a squeegee on the wrinkled portion of the reflection film, causing the wrinkled portion to contract and follow to the surface of the curved glass. In a case where a temperature of the hot air of the heat gun was measured with a thermocouple using a memory logger (LR8450, manufactured by HIOKI E.E. CORPORATION), the temperature was 120°C to 140°C.

<Curved surface following of reflection film>

The protective film was peeled off from the pressure-sensitive adhesive layer of the reflection film, the application

liquid was sprayed on a concave surface side of the above-described curved glass and the surface of the pressure-sensitive adhesive layer of the reflection film, which had been formed into a curved shape, and the reflection film and the curved glass were bonded to each other such that the pressure-sensitive adhesive layer of the reflection film and the concave surface of the curved glass faced each other. The reflection film and the curved glass were closely attached to each other while removing the application liquid using a squeegee, dried at room temperature for 12 hours, and then evaluated according to the following standard.

A: the surface curvature was followed without any problem.
B: a part of the film was deformed during the curved surface forming or the curved surface following, but the film could follow the curved surface.
C: the deformation of the film was significant during the curved surface forming or the curved surface tracking, but the film could follow the curved surface.
D: the curved surface could not be formed or followed.

A to C are within the acceptable range.

[Test Example 5] Sliding properties

In the procedure of each of Examples and Comparative Examples, two sheets of film, each including the reflective layer and the HC layer before providing the pressure-sensitive adhesive layer, were cut out to a size of 100 mm × 100 mm, and the films were laminated such that the reflective layer and the HC layer were in contact with each other. A φ30 mm weight was placed on the laminated film, and sensation when the two sheets of film were slid against each other was evaluated according to the following standard.

For a film having no reflective layer or HC layer, the same evaluation was performed by laminating the films such that the reflective layer and the transparent substrate or the HC layer and the transparent substrate were in contact with each other.

In addition, for a film having a matte layer on the reflective layer, the same evaluation was performed by laminating the films such that the matte layer and the HC layer were in contact with each other.

A: even in a case where a weight of 150 g was placed, the laminate slipped.
B: even in a case where a weight of 100 g was placed, the laminate slipped, but in a case where a weight of 150 g was placed, the laminated did not slip.
C: even in a case where a weight of 50 g was placed, the laminate slipped, but in a case where a weight of 100 g was placed, the laminated did not slip.
D: in a case where a weight of 50 g was placed, the laminated did not slip.

[Test Example 6] Visibility

The protective film was peeled off from the pressure-sensitive adhesive layer of the reflection film, a glass plate (manufactured by Coming, trade name: Eagle XG, thickness: 1 mm) and the reflection film produced above were bonded to each other while applying a load of 2 kg with a rubber roller, such that the glass plate and the pressure-sensitive adhesive layer side of the reflection film faced each other, thereby producing a laminate of the reflection film and the glass plate.

In a dark room, the laminate produced above was irradiated with light from the glass plate side using a point light source, and a reflected image of the point light source visible on the glass plate was evaluated according to the following standard.

A: no blurring was visible around the point light source of the reflected image.
B: the periphery of the point light source of the reflected image appears blurred.
C: the periphery of the point light source of the reflected image was strongly blurred.

The reflection films of Examples 23 to 26 and 31 to 46 could follow the curved surface without any problem (evaluation A).

In Example 30, in a case where hot air from the heat gun was applied during the curved surface forming, the reflection film deformed by curling toward the laminate film side, but the reflection film could be formed and could follow the curved surface by applying the hot air while pressing with a squeegee (evaluation B).

In the reflection films of Examples 1 to 22, 27 to 29, and Comparative Examples 1 and 2, in a case where hot air from the heat gun was applied during the curved surface forming, the reflection film significantly deformed by curling toward the laminate film side, but the reflection film could be formed and could follow the curved surface by pressing with a

plurality of squeegees (evaluation C).

In the reflection film of Comparative Example 3, the reflection film was peeled off from the curved glass during drying in the curved surface following, and the reflection film could not follow the curved surface (evaluation D).

In the following table, the column of "HC layer Sa1" indicates the surface roughness Sa1 (nm) of a component with a wavelength of 2.5 μm or less on the surface of the hardcoat layer on a side opposite to the reflective layer.

The column of "HC layer Sa2" indicates the surface roughness Sa2 (nm) of a component with a wavelength of 10 μm or more on the surface of the hardcoat layer on a side opposite to the reflective layer.

The column of "Matte layer Sa1" indicates the surface roughness Sa1 (nm) of a component with a wavelength of 2.5 μm or less on the surface of the matte layer on a side opposite to the reflective layer.

[Table 5]

| | Second HC layer | | First HC layer | | Reflective layer | Pressure-sensitive adhesive layer | | | | Transparent substrate |
|---|---|---|---|---|---|---|---|---|---|---|
| | Film thickness /μm | HC composition | Film thickness /μm | Composition for forming HC layer | Composition for forming reflective layer | Film thickness /μm | Storage elastic modulus 25°C, 1 Hz /MPa | tan δ 25°C, 1 Hz | Pressure sensitive adhesive | Film thickness /μm |
| Example 1 | - | - | 6 | HC-1 | IR1, BG1, R1 | 15 | 0.57 | 0.22 | NCF-D692 | 40 |
| Example 2 | - | - | 6 | HC-2 | IR1, BG1, R1 | 15 | 0.57 | 0.22 | NCF-D692 | 40 |
| Example 3 | - | - | 6 | HC-3 | IR1, BG1, R1 | 15 | 0.57 | 0.22 | NCF-D692 | 40 |
| Example 4 | - | - | 6 | HC-4 | IR1, BG1, R1 | 15 | 0.57 | 0.22 | NCF-D692 | 40 |
| Example 5 | - | - | 6 | HC-5 | IR1, BG1, R1 | 15 | 0.57 | 0.22 | NCF-D692 | 40 |
| Example 6 | - | - | 6 | HC-6 | IR1, BG1, R1 | 15 | 0.57 | 0.22 | NCF-D692 | 40 |
| Example 7 | - | - | 6 | HC-7 | IR1, BG1, R1 | 15 | 0.57 | 0.22 | NCF-D692 | 40 |
| Example 8 | - | - | 6 | HC-8 | IR1, BG1, R1 | 15 | 0.57 | 0.22 | NCF-D692 | 40 |
| Example 9 | - | - | 6 | HC-9 | IR1, BG1, R1 | 15 | 0.57 | 0.22 | NCF-D692 | 40 |
| Example 10 | - | - | 6 | HC-10 | IR1, BG1, R1 | 15 | 0.57 | 0.22 | NCF-D692 | 40 |
| Example 11 | - | - | 6 | HC-11 | IR1, BG1, R1 | 15 | 0.57 | 0.22 | NCF-D692 | 40 |
| Example 12 | - | - | 6 | HC-12 | IR1, BG1, R1 | 15 | 0.57 | 0.22 | NCF-D692 | 40 |
| Example 13 | - | - | 6 | HC-13 | IR1, BG1, R1 | 15 | 0.57 | 0.22 | NCF-D692 | 40 |

(continued)

| | Second HC layer | | First HC layer | | Reflective layer | Pressure-sensitive adhesive layer | | | | Transparent substrate |
|---|---|---|---|---|---|---|---|---|---|---|
| | Film thickness /μm | HC composition | Film thickness /μm | Composition for forming HC layer | Composition for forming reflective layer | Film thickness /μm | Storage elastic modulus 25°C, 1 Hz /MPa | tan δ 25°C, 1 Hz | Pressure sensitive adhesive | Film thickness /μm |
| Example 14 | - | - | 12 | HC-2 | IR1, BG1, R1 | 15 | 0.57 | 0.22 | NCF-D692 | 40 |
| Example 15 | - | - | 3 | HC-2 | IR1, BG1, R1 | 15 | 0.57 | 0.22 | NCF-D692 | 40 |
| Example 16 | 4 | HC-15 | 12 | HC-14 | IR1, BG1, R1 | 15 | 0.57 | 0.22 | NCF-D692 | 40 |
| Example 17 | - | - | 6 | HC-2 | IR1, BG1, R1 | 15 | 0.57 | 0.22 | NCF-D692 | 40 |
| Example 18 | - | - | 6 | HC-2 | IR1, BG1, R1 | 15 | 0.57 | 0.22 | NCF-D692 | 40 |
| Example 19 | - | - | 6 | HC-2 | IR1, BG1, R1 | 10 | 0.57 | 0.22 | NCF-D692 | 40 |
| Example 20 | - | - | 6 | HC-2 | IR1, BG1, R1 | 5 | 0.57 | 0.22 | NCF-D692 | 40 |
| Example 21 | - | - | 6 | HC-2 | IR1, BG1, R1 | 20 | 0.57 | 0.22 | NCF-D692 | 40 |
| Example 22 | - | - | 6 | HC-2 | IR1, BG1, R1 | 25 | 0.57 | 0.22 | NCF-D692 | 40 |
| Example 23 | - | - | 6 | HC-2 | IR1, BG1, R1 | 5 | 0.49 | 0.40 | PANACLEAN PD-S1 | 40 |
| Example 24 | - | - | 6 | HC-2 | IR1, BG1, R1 | 12 | 0.44 | 0.31 | MF-58 | 40 |

[Table 6]

| | Second HC layer | | First HC layer | | Reflective layer | Pressure-sensitive adhesive layer | | | | Transparent substrate |
|---|---|---|---|---|---|---|---|---|---|---|
| | Film thickness /μm | HC composition | Film thickness /μm | Composition for forming HC layer | Composition for forming reflective layer | Film thickness /μm | Storage elastic modulus 25°C, 1 Hz /MPa | tan δ 25°C, 1 Hz | Pressure sensitive adhesive | Film thickness /μm |
| Example 25 | - | - | 6 | HC-2 | IR1, BG1, R1 | 15 | 0.08 | 0.39 | MHM-UVC | 40 |
| Example 26 | - | - | 6 | HC-2 | IR1, BG1, R1 | 25 | 0.10 | 0.34 | SK Dyne 2057 | 40 |
| Example 27 | - | - | 6 | HC-2 | IR1, BG1, R1 | 15 | 0.57 | 0.22 | NCF-D692 | 25 |
| Example 28 | - | - | 6 | HC-2 | IR1, BG1, R1 | 15 | 0.57 | 0.22 | NCF-D692 | 60 |
| Example 29 | - | - | 6 | HC-2 | IR1, BG1, R1 | 15 | 0.57 | 0.22 | NCF-D692 | 80 |
| Example 30 | - | - | 6 | HC-2 | IR1, BG1, R1 | 15 | 0.57 | 0.22 | NCF-D692 | 40 |
| Example 31 | - | - | 6 | HC-2 | IR1, BG1, R1 | 15 | 0.44 | 0.31 | MF-58 | 40 |
| Example 32 | - | - | 6 | HC-2 | IR1, BG1, R1 | 15 | 0.44 | 0.31 | MF-58 | 40 |
| Example 33 | - | - | 6 | HC-16 | IR1, BG1, R1 | 15 | 0.44 | 0.31 | MF-58 | 40 |
| Example 34 | - | - | 6 | HC-17 | IR1, BG1, R1 | 15 | 0.44 | 0.31 | MF-58 | 40 |
| Example 35 | - | - | 6 | HC-18 | IR1, BG1, R1 | 15 | 0.44 | 0.31 | MF-58 | 40 |
| Example 36 | - | - | 6 | HC-19 | IR1, BG1, R1 | 15 | 0.44 | 0.31 | MF-58 | 40 |
| Example 37 | - | - | 6 | HC-20 | IR1, BG1, R1 | 15 | 0.44 | 0.31 | MF-58 | 40 |
| Example 38 | - | - | 6 | HC-21 | IR1, BG1, R1 | 15 | 0.44 | 0.31 | MF-58 | 40 |
| Example 39 | - | - | 6 | HC-22 | IR1, BG1, R1 | 15 | 0.44 | 0.31 | MF-58 | 40 |
| Example 40 | - | - | 6 | HC-23 | IR1, BG1, R1 | 15 | 0.44 | 0.31 | MF-58 | 40 |
| Example 41 | - | - | 6 | HC-24 | IR1, BG1, R1 | 15 | 0.44 | 0.31 | MF-58 | 40 |
| Example 42 | - | - | 6 | HC-25 | IR1, BG1, R1 | 15 | 0.44 | 0.31 | MF-58 | 40 |
| Example 43 | 0.2 | HC-26 | 6 | HC-14 | IR1, BG1, R1 | 15 | 0.44 | 0.31 | MF-58 | 40 |
| Example 44 | - | - | 6 | HC-17 | IR1, BG1, R1 | 15 | 0.44 | 0.31 | MF-58 | 40 |
| Example 45 | - | - | 6 | HC-17 | IR1, BG1, R1 | 15 | 0.44 | 0.31 | MF-58 | 40 |
| Example 46 | - | - | 6 | HC-17 | IR1, BG1, R1 | 15 | 0.44 | 0.31 | MF-58 | 40 |

(continued)

| | Second HC layer | | First HC layer | | Reflective layer | Pressure-sensitive adhesive layer | | | | Transparent substrate |
|---|---|---|---|---|---|---|---|---|---|---|
| | Film thickness /μm | HC composition | Film thickness /μm | Composition for forming HC layer | Composition for forming reflective layer | Film thickness /μm | Storage elastic modulus 25°C, 1 Hz /MPa | tan δ 25°C, 1 Hz | Pressure sensitive adhesive | Film thickness /μm |
| Comparative Example 1 | - | - | - | - | IR1, BG1, R1 | 15 | 0.57 | 0.22 | NCF-D692 | 40 |
| Comparative Example 2 | - | - | 6 | HC-1 | - | 15 | 0.57 | 0.22 | NCF-D692 | 40 |
| Comparative Example 3 | - | - | 6 | HC-1 | IR1, BG1, R1 | - | - | - | - | 40 |

[Table 7]

| | Evaluation | | | | | | | | | Thermal contraction rate | | |
|---|---|---|---|---|---|---|---|---|---|---|---|---|
| | Abrasion resistance | Reflection spectrum | Curved surface followability | Pencil hardness | HC layer Sa1 | HC layer Sa2 | Matte layer Sa1 | Sliding properties | Visibility | Reflection film (%) | Protective film (%) | Difference in thermal contraction rate (%) |
| Example 1 | C | B | C | 3B | 0.45 | 1.8 | - | B | B | 0.8 | 2.2 | 1.4 |
| Example 2 | A | B | C | 2B | 0.45 | 1.8 | - | B | B | 0.8 | 2.2 | 1.4 |
| Example 3 | A | B | C | B | 0.45 | 1.8 | - | B | B | 0.8 | 2.2 | 1.4 |
| Example 4 | B | B | C | 3B | 0.45 | 1.8 | - | B | B | 0.8 | 2.2 | 1.4 |
| Example 5 | C | B | C | 4B | 0.45 | 1.8 | - | B | B | 0.8 | 2.2 | 1.4 |
| Example 6 | B | B | C | 2B | 0.45 | 1.8 | - | B | B | 0.8 | 2.2 | 1.4 |
| Example 7 | C | B | C | 3B | 0.45 | 1.8 | | B | B | 0.8 | 2.2 | 1.4 |
| Example 8 | A | B | C | 2B | 0.45 | 1.8 | - | B | B | 0.8 | 2.2 | 1.4 |
| Example 9 | A | B | C | 2B | 0.45 | 1.8 | - | B | B | 0.8 | 2.2 | 1.4 |
| Example 10 | A | B | C | 3B | 0.45 | 1.8 | - | B | B | 0.8 | 2.2 | 1.4 |
| Example 11 | A | B | C | 2B | 0.25 | 0.7 | - | D | A | 0.8 | 2.2 | 1.4 |
| Example 12 | A | B | C | 3B | 0.25 | 0.7 | - | D | A | 0.8 | 2.2 | 1.4 |
| Example 13 | A | B | C | 2B | 0.45 | 1.8 | - | B | B | 0.8 | 2.2 | 1.4 |
| Example 14 | A | B | C | HB | 0.90 | 2.2 | - | A | C | 0.8 | 2.2 | 1.4 |
| Example 15 | A | B | C | 4B | 0.32 | 1.4 | - | C | A | 0.8 | 2.2 | 1.4 |
| Example 16 | A | B | C | 5H | 0.28 | 0.8 | - | D | A | 0.8 | 2.2 | 1.4 |
| Example 17 | A | A | C | 2B | 0.45 | 1.8 | - | B | B | 0.8 | 2.2 | 1.4 |
| Example 18 | A | A | C | 2B | 0.45 | 1.8 | - | B | B | 0.8 | 2.2 | 1.4 |
| Example 19 | A | A | C | HB | 0.45 | 1.8 | - | B | B | 0.8 | 2.2 | 1.4 |
| Example 20 | A | A | C | 3H | 0.45 | 1.8 | - | B | B | 0.8 | 2.2 | 1.4 |
| Example 21 | A | A | C | 4B | 0.45 | 1.8 | - | B | B | 0.8 | 2.2 | 1.4 |
| Example 22 | A | A | C | 6B | 0.45 | 1.8 | - | B | B | 0.8 | 2.2 | 1.4 |
| Example 23 | A | A | A | 2H | 0.45 | 1.8 | - | B | B | 0.8 | 0.5 | 0.3 |

(continued)

| | Evaluation | | | | | | | | | Thermal contraction rate | | |
|---|---|---|---|---|---|---|---|---|---|---|---|---|
| | Abrasion resistance | Reflection spectrum | Curved surface followability | Pencil hardness | HC layer Sa1 | HC layer Sa2 | Matte layer Sa1 | Sliding properties | Visibility | Reflection film (%) | Protective film (%) | Difference in thermal contraction rate (%) |
| Example 24 | A | A | A | 2B | 0.45 | 1.8 | - | B | B | 0.8 | 0.9 | 0.1 |

[Table 8]

| | Evaluation | | | | | | | | | Thermal contraction rate | | |
|---|---|---|---|---|---|---|---|---|---|---|---|---|
| | Abrasion resistance | Reflection spectrum | Curved surface followability | Pencil hardness | HC layer Sa1 | HC layer Sa2 | Matte layer Sa1 | Sliding properties | Visibility | Reflection film (%) | Protective film (%) | Difference in thermal contraction rate (%) |
| Example 25 | A | A | A | 4B | 0.45 | 1.8 | - | B | B | 0.8 | 0.4 | 0.4 |
| Example 26 | A | A | A | | 0.45 | 1.8 | - | B | B | 0.8 | 0.7 | 0.1 |
| Example 27 | A | A | C | | 0.45 | 1.8 | - | B | B | 0.8 | 2.2 | 1.4 |
| Example 28 | A | A | C | H | 0.45 | 1.8 | - | B | B | 0.8 | 2.2 | 1.4 |
| Example 29 | A | A | C | 3H | 0.45 | 1.8 | - | B | B | 0.8 | 2.2 | 1.4 |
| Example 30 | A | A | B | 2B | 0.45 | 1.8 | - | B | B | 1.2 | 2.2 | 1.0 |
| Example 31 | A | A | A | 2B | 0.45 | 1.8 | | B | B | 0.8 | 0.9 | 0.1 |
| Example 32 | A | A | A | 2B | 0.45 | 1.8 | | B | B | 0.8 | 0.9 | 0.1 |
| Example 33 | A | A | A | 2B | 0.23 | 0.7 | - | D | A | 0.8 | 0.9 | 0.1 |
| Example 34 | A | A | A | 2B | 0.24 | 0.7 | - | D | A | 0.8 | 0.9 | 0.1 |
| Example 35 | B | A | A | 2B | 0.52 | 2.3 | - | A | C | 0.8 | 0.9 | 0.1 |
| Example 36 | A | A | A | 2B | 0.46 | 0.7 | - | B | A | 0.8 | 0.9 | 0.1 |
| Example 37 | B | A | A | 2B | 0.53 | 0.7 | - | A | A | 0.8 | 0.9 | 0.1 |
| Example 38 | B | A | A | 2B | 0.67 | 0.7 | - | A | A | 0.8 | 0.9 | 0.1 |
| Example 39 | C | A | A | 2B | 0.72 | 0.7 | - | A | A | 0.8 | 0.9 | 0.1 |
| Example 40 | A | A | A | 2B | 0.55 | 0.7 | - | A | A | 0.8 | 0.9 | 0.1 |
| Example 41 | A | A | A | 2B | 0.60 | 0.7 | - | A | A | 0.8 | 0.9 | 0.1 |
| Example 42 | A | A | A | 2B | 0.38 | 0.7 | - | C | A | 0.8 | 0.9 | 0.1 |
| Example 43 | A | A | A | 2B | 0.64 | 0.7 | - | A | A | 0.8 | 0.9 | 0.1 |
| Example 44 | A | A | A | 2B | 0.23 | 0.7 | 2.5 | A | A | 0.8 | 0.9 | 0.1 |
| Example 45 | A | A | A | 2B | 0.23 | 0.7 | 2.5 | A | A | 0.8 | 0.9 | 0.1 |
| Example 46 | A | A | A | 2B | 0.23 | 0.7 | 2.5 | A | A | 0.8 | 0.9 | 0.1 |

(continued)

| | Evaluation | | | | | | | | | Thermal contraction rate | | |
|---|---|---|---|---|---|---|---|---|---|---|---|---|
| | Abrasion resistance | Reflection spectrum | Curved surface followability | Pencil hardness | HC layer Sa1 | HC layer Sa2 | Matte layer Sa1 | Sliding properties | Visibility | Reflection film (%) | Protective film (%) | Difference in thermal contraction rate (%) |
| Comparative Example 1 | D | B | C | - | - | - | - | A | A | 0.8 | 2.2 | 1.4 |
| Comparative Example 2 | C | C | C | 2B | 0.45 | 1.8 | - | A | B | 0.8 | 2.2 | 1.4 |
| Comparative Example 3 | C | B | D | 2B | 0.45 | 1.8 | - | B | B | 0.8 | - | - |

As shown in the above tables, it was found that the reflection film according to the embodiment of the present invention exhibited a desired effect.

From the comparison between Examples 1 and 2, it was found that, in a case where the content of the cationically polymerizable compound was 50 parts by mass or less with respect to 100 parts by mass of the total content of the radically polymerizable compound and the cationically polymerizable compound, the abrasion resistance and pencil hardness were more excellent.

From the comparison of Examples 2, 4, and 5, it was found that, in a case where the number of radically polymerizable groups selected from the group consisting of an acryloyl group and a methacryloyl group in the radically polymerizable compound was 4 or more (preferably, 5 or more), the abrasion resistance and pencil hardness were more excellent.

From the comparison of Examples 2, 6, and 7, it was found that, in a case where the cationically polymerizable compound had a radically polymerizable group and a cationically polymerizable group, the abrasion resistance and pencil hardness were more excellent.

From the comparison between Examples 6 and 7, it was found that, in a case where the equivalent of cationically polymerizable group of the cationically polymerizable compound was 120 or less, the abrasion resistance and pencil hardness were more excellent.

From the comparison between Examples 10 and 12 and other Examples, it was found that, in a case where inorganic particles having an ethylenically unsaturated group on the surface were used, the pencil hardness was more excellent.

From the comparison of Examples 14 to 16, it was found that, in a case where the film thickness of the HC layer was 5 to 20 μm, the pencil hardness was more excellent.

As shown in Examples 18 to 22, it was found that, in a case where the thickness of the pressure-sensitive adhesive layer was 5 to 20 μm, the pencil hardness was more excellent.

As shown in Examples 18, and 27 to 30, it was found that, in a case where the thickness of the transparent substrate was 40 to 80 μm, the pencil hardness was more excellent.

From the comparison between Examples 23 to 26 and other examples, it was found that, in a case where the difference in thermal contraction rate between the protective film layer and the reflection film layer was 1.0% or less, the curved surface followability was more excellent.

<Preparation of curable composition for forming heat seal layer>

Components were mixed according to the formulation shown in the tables below, and filtered through a polypropylene filter having a pore diameter of 10 μm, thereby preparing curable compositions HS-1 to HC-30 for forming a heat seal layer.

The blending amount of each component shown in Table 9 is represented in part by mass.

[Table 9]

| Table 9 (1) | | HS-1 | HS-2 | HS-3 | HS-4 | HS-5 | HS-6 | HS-7 | HS-8 | HS-9 | HS-10 | HS-11 | HS-12 | HS-13 | HS-14 | HS-15 |
|---|---|---|---|---|---|---|---|---|---|---|---|---|---|---|---|---|
| Thermoplastic resin | S LEC KS-10 (manufactured by Sekisui Chemical Co., Ltd.) | 4.525 | 4.275 | 4.025 | 3.275 | 2.275 | 1.775 | 0.775 | 0.275 | 3.275 | 3.275 | 3.275 | 3.275 | 3.275 | 3.325 | 3.225 |
| | KURARITYLA4285 (manufactured by Kuraray Co., Ltd.) | | | | | | | | | | | | | | | |
| | KURARITYLA2250 (manufactured by Kuraray Co., Ltd.) | | | | | | | | | | | | | | | |
| | EVAFLEX V5573W (manufactured by DOW-MITSUI POLYCHEMICALS) | | | | | | | | | | | | | | | |
| | EVAFLEX EV420 (manufactured by DOW-MITSUI POLYCHEMICALS) | | | | | | | | | | | | | | | |
| | EVAFLEX P1207 (manufactured by DOW-MITSUI POLYCHEMICALS) | | | | | | | | | | | | | | | |

(continued)

| Table 9 (1) | | HS-1 | HS-2 | HS-3 | HS-4 | HS-5 | HS-6 | HS-7 | HS-8 | HS-9 | HS-10 | HS-11 | HS-12 | HS-13 | HS-14 | HS-15 |
|---|---|---|---|---|---|---|---|---|---|---|---|---|---|---|---|---|
| Polymerizable compound | NK ESTER A-600 (manufactured by Shin-Nakamura Chemical Co., Ltd.) | 0.25 | 0.50 | 0.75 | 1.50 | 2.50 | 3.00 | 400 | 4.50 | | | | | | 1.50 | 1.50 |
| | NK ESTER A-DCP (manufactured by Shin-Nakamura Chemical Co., Ltd.) | | | | | | | | | 1.50 | | | | | | |
| | NK ESTER A-TMPT (manufactured by Shin-Nakamura Chemical Co., Ltd.) | | | | | | | | | | 1.50 | | | | | |
| | NK ESTER A-200 (manufactured by Shin-Nakamura Chemical Co., Ltd.) | | | | | | | | | | | 1.50 | | | | |
| | NK ESTER A-1000 (manufactured by Shin-Nakamura Chemical Co., Ltd.) | | | | | | | | | | | | 1.50 | | | |
| | FOM-03008 (manufactured by FUJIFILM Wako Pure Chemical Corporation) | | | | | | | | | | | | | 1.50 | | |
| Polymerization initiator | Irgacure 127 (manufactured by BASF) | 0.10 | 0.10 | 0.10 | 0.10 | 0.10 | 0.10 | 0.10 | 0.10 | 0.10 | 0.10 | 0.10 | 0.10 | 0.10 | 0.05 | 0.15 |
| Silica particles | AEROSIL RX300 (manufactured by Nippon Aerosil Co., Ltd.) | 0.125 | 0.125 | 0.125 | 0.125 | 0.125 | 0.125 | 0.125 | 0.125 | 0.125 | 0.125 | 0.125 | 0.125 | 0.125 | 0.125 | 0.125 |

(continued)

| Table 9 (1) | | HS-1 | HS-2 | HS-3 | HS-4 | HS-5 | HS-6 | HS-7 | HS-8 | HS-9 | HS-10 | HS-11 | HS-12 | HS-13 | HS-14 | HS-15 |
|---|---|---|---|---|---|---|---|---|---|---|---|---|---|---|---|---|
| Solvent | Methyl ethyl ketone (MEK) | 47.50 | 47.50 | 47.50 | 47.50 | 47.50 | 47.50 | 47.50 | 47.50 | 47.50 | 47.50 | 47.50 | 47.50 | 47.50 | 47.50 | 47.50 |
| | Butyl acetate | 47.50 | 47.50 | 47.50 | 47.50 | 47.50 | 47.50 | 47.50 | 47.50 | 47.50 | 47.50 | 47.50 | 47.50 | 47.50 | 47.50 | 47.50 |
| | Isopropyl acetate | | | | | | | | | | | | | | | |

[Table 10]

| Table 9 (2) | | HS-16 | HS-17 | HS-18 | HS-19 | HS-20 | HS-21 | HS-22 | HS-23 | HS-24 | HS-25 | HS-26 | HS-27 | HS-28 | HS-29 | HS-30 |
|---|---|---|---|---|---|---|---|---|---|---|---|---|---|---|---|---|
| Thermoplastic resin | S LEC KS-10 (manufactured by Sekisui Chemical Co., Ltd.) | 3.400 | 2.900 | 1.310 | 9.825 | 3.275 | 3.275 | 3.275 | | | | | | | | |
| | KURARITYLA4285 (manufactured by Kuraray Co., Ltd.) | | | | | | | | 3.275 | 4.775 | 4.875 | | | | | |
| | KURARITYLA2250 (manufactured by Kuraray Co., Ltd.) | | | | | | | | | | | 4.775 | | | | |
| | EVAFLEX V5573W (manufactured by DOW-MITSUI POLYCHEMICALS) | | | | | | | | | | | | 4.775 | | | |
| | EVAFLEX EV420 (manufactured by DOW-MITSUI POLYCHEMICALS) | | | | | | | | | | | | | 4.775 | | |
| | EVAFLEX P1207 (manufactured by DOW-MITSUI POLYCHEMICALS) | | | | | | | | | | | | | | 4.775 | |

(continued)

| Table 9 (2) | | HS-16 | HS-17 | HS-18 | HS-19 | HS-20 | HS-21 | HS-22 | HS-23 | HS-24 | HS-25 | HS-26 | HS-27 | HS-28 | HS-29 | HS-30 |
|---|---|---|---|---|---|---|---|---|---|---|---|---|---|---|---|---|
| Polymerizable compound | NK ESTER A-600 (manufactured by Shin-Nakamura Chemical Co., Ltd.) | 1.50 | 1.50 | 0.60 | 4.50 | 1.50 | 1.50 | 1.50 | 1.50 | | | | | | | 4.775 |
| | NK ESTER A-DCP (manufactured by Shin-Nakamura Chemical Co., Ltd.) | | | | | | | | | | | | | | | |
| | NK ESTER A-TMPT (manufactured by Shin-Nakamura Chemical Co., Ltd.) | | | | | | | | | | | | | | | |
| | NK ESTER A-200 (manufactured by Shin-Nakamura Chemical Co., Ltd.) | | | | | | | | | | | | | | | |
| | NK ESTER A-1000 (manufactured by Shin-Nakamura Chemical Co., Ltd.) | | | | | | | | | | | | | | | |
| | FOM-03008 (manufactured by FUJIFILM Wako Pure Chemical Corporation) | | | | | | | | | | | | | | | |
| Polymerization initiator | Irgacure 127 (manufactured by BASF) | 0.10 | 0.10 | 0.04 | 0.30 | 0.10 | 0.10 | 0.10 | 0.10 | 0.10 | | 0.10 | 0.10 | 0.10 | 0.10 | 0.10 |
| Silica particles | AEROSIL RX300 (manufactured by Nippon Aerosil Co., Ltd.) | | 0.500 | 0.050 | 0.375 | 0.125 | 0.125 | 0.125 | 0.125 | 0.125 | 0.125 | 0.125 | 0.125 | 0.125 | 0.125 | 0.13 |

(continued)

| Table 9 (2) | | HS-16 | HS-17 | HS-18 | HS-19 | HS-20 | HS-21 | HS-22 | HS-23 | HS-24 | HS-25 | HS-26 | HS-27 | HS-28 | HS-29 | HS-30 |
|---|---|---|---|---|---|---|---|---|---|---|---|---|---|---|---|---|
| Solvent | Methyl ethyl ketone (MEK) | 47.50 | 47.50 | 49.00 | 42.50 | 95.00 | | 47.50 | 47.50 | 47.50 | 47.50 | 47.50 | 47.50 | 47.50 | 47.50 | 47.50 |
| | Butyl acetate | 47.50 | 47.50 | 49.00 | 42.50 | | 95.00 | | 47.50 | 47.50 | 47.50 | 47.50 | 47.50 | 47.50 | 47.50 | 47.50 |
| | Isopropyl acetate | | | | | | | 47.50 | | | | | | | | |

<Example 201>

The composition HS-1 for forming a heat seal layer was applied onto the surface of the reflective layer in the reflection film of Example 18 using a wire bar such that a film thickness after drying was 0.8 μm, and dried at 120°C for 1 minute to form a heat seal layer.

Thereafter, under nitrogen purging, the applied curable composition for forming a heat seal layer was further cured by irradiating the curable composition with ultraviolet rays having an illuminance of 150 $mW/cm^2$ and an irradiation amount of 300 $mJ/cm^2$ using an air-cooled metal halide lamp (manufactured by EYE GRAPHICS Co., Ltd.) of 160 W/cm with an oxygen concentration of approximately 0.1% by volume, thereby producing a reflection film of Example 201.

<Example 202>

A reflection film of Example 202 was produced in the same manner as in Example 201, except that the composition HS-1 for forming a heat seal layer was applied onto the surface of the polarization conversion layer in the reflection film of Example 32.

<Examples 203 to 223 and 227 to 233>

Reflection films of Examples 203 to 223 and 227 to 233 were produced in the same manner as in Example 202, except that HS2 to HS29 were used as the composition for forming a heat seal layer.

<Example 224>

A reflection film of Example 224 was produced in the same manner as in Example 206, except that the composition HS-5 for forming a heat seal layer was applied such that a film thickness after drying was 0.4 μm.

<Example 225>

A reflection film of Example 225 was produced in the same manner as in Example 206, except that the composition HS-5 for forming a heat seal layer was applied such that a film thickness after drying was 0.2 μm.

<Example 226>

A reflection film of Example 226 was produced in the same manner as in Example 206, except that the composition HS-5 for forming a heat seal layer was applied such that a film thickness after drying was 10.0 μm.

<Comparative Example 201>

A reflection film of Comparative Example 201 was produced in the same manner as in Example 201, except that HS30 used as the composition for forming a heat seal layer.

The following tests were performed on the reflection films produced as described above. Test results are summarized in Table 10.

[Test Example 7] Abrasion resistance of heat seal layer product

Each of the reflection films obtained in 201 to 233 and Comparative Example 201 was placed on a glass plate (manufactured by Corning, trade name: Eagle XG, thickness: 1 mm) such that the surface on the heat seal layer side was in contact with the glass plate, at the center of the glass plate. As a result, in a case of using the reflection film of Example 201, a laminate including the glass substrate, the heat seal layer, the selective reflective layer, the support, and the hardcoat layer in this order was formed; and in a case of using the reflection films of Examples 202 to 233, a laminate including the glass substrate, the heat seal layer, the polarization conversion layer, the selective reflective layer, the retardation layer, the support, and the hardcoat layer in this order was formed.

A PVB film (interlayer film) in the same size as the glass plate and having a thickness of 0.76 mm, manufactured by Sekisui Chemical Co., Ltd., was disposed on the laminate, and a glass plate (manufactured by Corning, trade name: Eagle XG, thickness: 1 mm) was further disposed thereon. The laminate was held at 115°C and 10 kPa (0.1 atm) for 1 hour, and then heated in an autoclave (manufactured by Kurihara Seisakusho, K.K.) at 140°C and 1.3 MPa (13 atm) for 60 minutes to remove air bubbles, thereby obtaining a laminated glass.

In the above-described laminated glass, the PVB film was peeled off from the hardcoat layer to obtain a glass

sample for an abrasion resistance test.

The glass sample was moisture-conditioned at a temperature of 25°C and a relative humidity of 60% for 2 hours, and then a haze (HA) before an abrasion test was measured using a haze meter (NDH2000N, manufactured by NIPPON DENSHOKU INDUSTRIES Co., LTD.). Using a Taber abrasion tester (rotary abrasion tester, manufactured by Toyo Seiki Seisaku-sho, Ltd.), the surface of the hardcoat layer was tested for 100 cycles under the conditions of a CS-10F abrasion wheel, a rotation speed of 72 rpm, and a load of 500 gf. For the laminate after the test, a haze (HB) of the test portion was measured. ∆haze (HB - HA) before and after the test was calculated and evaluated according to the following standard.

<∆Haze before and after abrasion resistance test>

A: ∆haze was 1% or less.
B: ∆haze was more than 1% and 2.5% or less.
C: ∆haze was more than 2.5% and 4% or less.
D: ∆haze was more than 4%.

A to C are within the acceptable range.

[Test Example 8] Reflection spectrum of heat seal layer product

Each of the reflection films obtained in Examples 201 to 233 and Comparative Example 201 was placed on a glass plate (thickness: 2 mm, float glass) such that the surface on the heat seal layer side was in contact with the glass plate, at the center of the glass plate. As a result, in a case of using the reflection film of Example 201, a laminate including the glass substrate, the heat seal layer, the selective reflective layer, the support, and the hardcoat layer in this order was formed; and in a case of using the reflection films of Examples 202 to 233, a laminate including the glass substrate, the heat seal layer, the polarization conversion layer, the selective reflective layer, the retardation layer, the support, and the hardcoat layer in this order was formed.

A PVB film (interlayer film) in the same size as the glass plate and having a thickness of 0.76 mm, manufactured by Sekisui Chemical Co., Ltd., was disposed on the laminate, and a glass plate (thickness: 2 mm, float glass) was further disposed thereon. The laminate was held at 115°C and 10 kPa (0.1 atm) for 1 hour, and then heated in an autoclave (manufactured by Kurihara Seisakusho, K.K.) at 140°C and 1.3 MPa (13 atm) for 60 minutes to remove air bubbles, thereby obtaining a laminated glass.

In the above-described laminated glass, the PVB film was peeled off from the hardcoat layer to obtain a glass sample for reflection spectrum measurement.

The glass plate side of the above-described glass sample was bonded to "KUKKIRI MIERU" (manufactured by TOMOEGAWA CORPORATION), and using a spectrophotometer (manufactured by JASCO Corporation, V-670), P-polarized light and S-polarized light were incident on the surface of the reflection film at an angle of 5° from the normal direction, and reflection spectrum of 400 to 1,000 nm was measured. An average value (average reflection spectrum) of the measured reflection spectrum of P-polarized light and the measured reflection spectrum of S-polarized light was obtained.

From the calculated average value of the reflection spectra of P-polarized light and S-polarized light, the following values were calculated and evaluated according to the following standard:

· a maximum value R1 of natural light reflectivity in a wavelength range of 400 nm or more and less than 500 nm,
· a maximum value R2 of natural light reflectivity in a wavelength range of 500 nm or more and less than 600 nm, and
· a maximum value R3 of natural light reflectivity in a wavelength range of 600 nm to 800 nm.

A: the maximum value R1, the maximum value R2, and the maximum value R3 were all more than 20%.
B: the maximum value R1, the maximum value R2, and the maximum value R3 were all more than 7%, and any one of the maximum values was 20% or less.
C: the maximum value R1, the maximum value R2, and the maximum value R3 were all 7% or less.

A or B is within the acceptable range.

[Test Example 9: Curved surface followability of heat seal layer product]

<Production of laminated glass>

Each of the reflection films obtained in 201 to 233 and Comparative Example 201, having a length of 260 mm and a width of 330 mm, was placed on a curved glass substrate (first glass substrate) having a length of 260 mm, a width of 330 mm, and a thickness of 2 mm such that the surface on the heat seal layer side was in contact with the glass plate, at the center of the glass plate. As a result, in a case of using the reflection film of Example 201, a laminate including the glass substrate, the heat seal layer, the selective reflective layer, the support, and the hardcoat layer in this order was formed; and in a case of using the reflection films of Examples 202 to 233, a laminate including the glass substrate, the heat seal layer, the polarization conversion layer, the selective reflective layer, the retardation layer, the support, and the hardcoat layer in this order was formed.

A PVB film (interlayer film) having a length of 260 mm, a width of 330 mm, and a thickness of 0.76 mm, manufactured by Sekisui Chemical Co., Ltd., was disposed on the laminate (on the hardcoat layer), and a curved glass substrate (second glass substrate) having a length of 260 mm, a width of 330 mm, and a thickness of 2 mm was further disposed thereon. The laminate was held at 115°C and 10 kPa (0.1 atm) for 1 hour, and then heated in an autoclave (manufactured by Kurihara Seisakusho, K.K.) at 140°C and 1.3 MPa (13 atm) for 60 minutes to remove air bubbles, thereby obtaining a laminated glass.

In the above-described laminated glass, the PVB film was peeled off from the hardcoat layer to obtain a laminate including the first glass substrate and the heat seal layer, produced as a glass sample for evaluating curved surface followability. The curved surface followability of the reflection film including the heat seal layer to the first glass substrate, which was a curved glass substrate in the glass sample for evaluating curved surface followability, was evaluated according to the following standard.

A: the surface curvature was followed without any problem.
B: the reflection film partially peeled off from the glass, but could follow the curved surface.
C: the reflection film could not follow the curved surface because the reflection film peeled off.

A or B is within the acceptable range.

[Test Example 10] Sliding properties of heat seal layer product

In each of Examples and Comparative Examples, two sheets of film, each including the heat seal layer and the HC layer, were cut out to a size of 100 mm × 100 mm, and the films were laminated such that the heat seal layer and the HC layer were in contact with each other. A φ30 mm weight was placed on the laminated film, and sensation when the two sheets of film were slid against each other was evaluated according to the following standard.

For a film having no heat seal layer, the same evaluation was performed by laminating the films such that the reflective layer and the HC layer were in contact with each other.

A: even in a case where a weight of 150 g was placed, the laminate slipped.
B: even in a case where a weight of 100 g was placed, the laminate slipped, but in a case where a weight of 150 g was placed, the laminated did not slip.
C: even in a case where a weight of 50 g was placed, the laminate slipped, but in a case where a weight of 100 g was placed, the laminated did not slip.
D: in a case where a weight of 50 g was placed, the laminated did not slip.

[Test Example 11] Visibility of heat seal layer product

In a dark room, the glass sample produced in Test Example 9 was irradiated with light from the glass plate side using a point light source, and a reflected image of the point light source visible on the glass plate was evaluated according to the following standard.

A: no blurring was visible around the point light source of the reflected image.
B: the periphery of the point light source of the reflected image appears blurred.
C: the periphery of the point light source of the reflected image was strongly blurred.
D: the evaluation was not possible because the reflection film was peeled off during the curved surface forming.

[Test Example 12: peelability]

<Production of laminated glass>

Each of the reflection films obtained in 201 to 233 and Comparative Example 201, having a length of 150 mm and a width of 25 mm, was placed on a flat glass substrate having a length of 80 mm, a width of 50 mm, and a thickness of 2 mm such that the surface on the heat seal layer side was in contact with the glass plate, at the center of the glass plate. In a case of using the reflection film of Example 201, a laminate including the glass substrate, the heat seal layer, the selective reflective layer, the support, and the hardcoat layer in this order was formed; and in a case of using the reflection films of Examples 202 to 233, a laminate including the glass substrate, the heat seal layer, the polarization conversion layer, the selective reflective layer, the retardation layer, the support, and the hardcoat layer in this order was formed.
A PVB film (interlayer film) having a length of 150 mm, a width of 25 mm, and a thickness of 0.76 mm, manufactured by Sekisui Chemical Co., Ltd., was disposed on the laminate, and a flat glass substrate (second glass substrate) having a length of 80 mm, a width of 50 mm, and a thickness of 2 mm was further disposed thereon. The laminate was held at 115°C and 10 kPa (0.1 atm) for 1 hour, and then heated in an autoclave (manufactured by Kurihara Seisakusho, K.K.) at 140°C and 1.3 MPa (13 atm) for 60 minutes to remove air bubbles, thereby obtaining a laminated glass.
In the above-described laminated glass, the PVB film was peeled off from the hardcoat layer to obtain a glass sample for a peel force test.

[Peelability; evaluation of peel strength]

The reflection film portion of the glass sample for a peeling test produced above was gripped with an arm of a Tensilon universal material testing machine (manufactured by Orientec Co., Ltd.), and a peeling strength when peeled off while maintaining an angle of 90° between the reflection film portion and the flat glass was measured and evaluated according to the following standard.

Evaluation standard

A: the peeling strength was 4.0 N/25 mm or more.
B: the peeling strength was 2.5 N/25 mm or more and less than 4.0 N/25 mm.
C: the peeling strength was 1.0 N/25 mm or more and less than 2.5 N/25 mm.
D: the peeling strength was less than 1.0 N/25 mm.

[Moisture-heat resistance]

The glass sample for evaluating curved surface followability produced as described above (the laminate which included the first glass substrate and the reflection film including the heat seal layer described above) was moisture-conditioned for 80 hours in an environment of 90°C and 80 %RH, and then moisture-conditioned for 24 hours in an environment of 25°C and 60 %RH. The glass sample after the moisture conditioning was observed, and adhesiveness of the reflection film to the first glass substrate was evaluated according to the following standard.

Evaluation standard

A: the reflection film was not peeled off from the glass.

B: the reflection film was partially peeled off from the glass.

[Table 11]

| Table 10 | Heat seal layer | | | | | Evaluation | | | | | | | |
|---|---|---|---|---|---|---|---|---|---|---|---|---|---|
| | Film thickness /μm | Composition for forming heat seal layer | I/O ratio of polymerizable compound | Ratio of polymerizable compound | Moisture content | Abrasion resistance | Reflection spectrum | Curved surface followability | Peel force | Sliding properties | Visibility | Moisture-heat resistance |
| Example 201 | 0.8 | HS-1 | 1.6 | 5% | 1.7% | A | A | B | C | A | A | B |
| Example 202 | 0.8 | HS-1 | 1.6 | 5% | 1.7% | A | A | B | C | A | A | B |
| Example 203 | 0.8 | HS-2 | 1.6 | 10% | 1.7% | A | A | A | B | A | A | B |
| Example 204 | 0.8 | HS-3 | 1.6 | 15% | 1.7% | A | A | A | A | A | A | B |
| Example 205 | 0.8 | HS-4 | 1.6 | 30% | 1.8% | A | A | A | A | A | A | B |
| Example 206 | 0.8 | HS-5 | 1.6 | 50% | 1.8% | A | A | A | A | A | A | B |
| Example 207 | 0.8 | HS-6 | 1.6 | 60% | 1.9% | A | A | A | B | A | A | B |
| Example 208 | 0.8 | HS-7 | 1.6 | 80% | 1.9% | A | A | A | B | A | A | B |
| Example 209 | 0.8 | HS-8 | 1.6 | 90% | 2.0% | A | A | B | C | A | A | B |
| Example 210 | 0.8 | HS-9 | 0.43 | 30% | 1.8% | A | A | B | C | A | A | B |
| Example 211 | 0.8 | HS-10 | 0.62 | 30% | 1.8% | A | A | A | B | A | A | B |
| Example 212 | 0.8 | HS-11 | 1.2 | 30% | 1.8% | A | A | A | A | A | A | B |
| Example 213 | 0.8 | HS-12 | 1.8 | 30% | 1.8% | A | A | A | A | A | A | B |
| Example 214 | 0.8 | HS-13 | 20 | 30% | 1.8% | A | A | A | A | A | A | B |
| Example 215 | 0.8 | HS-14 | 1.6 | 30% | 1.8% | A | A | A | A | A | A | B |
| Example 216 | 0.8 | HS-15 | 1.6 | 30% | 1.8% | A | A | A | A | A | A | B |
| Example 217 | 0.8 | HS-16 | 1.6 | 30% | 1.8% | A | A | A | A | C | A | B |
| Example 218 | 0.8 | HS-17 | 1.6 | 30% | 1.8% | A | A | A | A | A | A | B |
| Example 219 | 0.8 | HS-18 | 1.6 | 30% | 1.8% | A | A | A | A | A | A | B |
| Example 220 | 0.8 | HS-19 | 1.6 | 30% | 1.8% | A | A | A | A | A | A | B |
| Example 221 | 0.8 | HS-20 | 1.6 | 30% | 1.8% | A | A | A | A | A | A | B |
| Example 222 | 0.8 | HS-21 | 1.6 | 30% | 1.8% | A | A | A | A | A | A | B |
| Example 223 | 0.8 | HS-22 | 1.6 | 30% | 1.8% | A | A | A | A | A | A | B |

(continued)

| Table 10 | Heat seal layer | | | | | Evaluation | | | | | | |
|---|---|---|---|---|---|---|---|---|---|---|---|---|
| | Film thickness /μm | Composition for forming heat seal layer | I/O ratio of polymerizable compound | Ratio of polymerizable compound | Moisture content | Abrasion resistance | Reflection spectrum | Curved surface followability | Peel force | Sliding properties | Visibility | Moisture-heat resistance |
| Example 224 | 0.4 | HS-5 | 1.6 | 30% | 1.8% | A | A | A | B | A | A | B |
| Example 225 | 0.2 | HS-5 | 1.6 | 30% | 1.8% | A | A | B | C | A | A | B |
| Example 226 | 10 | HS-5 | 1.6 | 30% | 1.8% | A | A | A | A | A | A | B |
| Example 227 | 0.8 | HS-23 | - | - | 0.5% | A | A | A | A | A | A | A |
| Example 228 | 0.8 | HS-24 | - | - | 0.5% | A | A | A | A | A | A | A |
| Example 229 | 0.8 | HS-25 | - | - | 0.5% | A | A | A | B | A | A | A |
| Example 230 | 0.8 | HS-26 | - | - | 0.3% | A | A | A | A | C | A | A |
| Example 231 | 0.8 | HS-27 | - | - | 0.2% | A | A | A | A | A | A | A |
| Example 232 | 0.8 | HS-28 | - | - | 0.2% | A | A | A | A | A | A | A |
| Example 233 | 0.8 | HS-29 | - | - | 0.2% | A | A | A | A | A | A | A |
| Comparative Example 201 | 0.8 | HS-30 | 1.6 | 95..5% | 2.1% | A | A | C | D | A | D | B |

As shown in Table 10, it was found that the reflection film according to the embodiment of the present invention exhibited a desired effect.

Among these, from the comparison of Examples 205 and 210 to 213, it was found that, in a case where the I/O ratio of the ethylenically unsaturated polymerizable group-containing compound was 0.60 or more (preferably, 1.2 or more), the effect was more excellent.

In addition, from the comparison of Examples 201 and 203 to 209, it was found that, in a case where the content of the polymerizable compound contained in the heat seal layer was 10% to 60% by mass (preferably, 15% to 50% by mass) with respect to the total mass of the heat seal layer, the effect was more excellent.

In addition, from the comparison of Examples 223 to 225, it was found that, in a case where the average thickness of the heat seal layer was 0.4 μm or more (preferably, 0.8 μm or more), the effect was more excellent.

Explanation of References

1: pressure-sensitive adhesive layer
2: reflective layer
3: hardcoat layer (HC layer)
4: protective film
5: polarization conversion layer
6: retardation layer
7: transparent substrate
8: matte layer
10A, 10B, 10C, 10D, 10E, 10F: reflection film
11: in-vehicle side glass
12: heat seal layer

## Claims

**1.** A reflection film comprising, in the following order:

a pressure-sensitive adhesive layer;
a reflective layer reflecting light in a wavelength-selective manner; and
a hardcoat layer.

**2.** The reflection film according to claim 1,
wherein a thickness of the pressure-sensitive adhesive layer is 1 to 30 μm.

**3.** The reflection film according to claim 1,
wherein a thickness of the hardcoat layer is 1 μm or more.

**4.** The reflection film according to claim 1,

wherein the hardcoat layer is a layer formed of a curable composition for forming a hardcoat layer, containing a cationically polymerizable compound, and
a content of the cationically polymerizable compound is 5% by mass or more with respect to a total solid content of the curable composition for forming a hardcoat layer.

**5.** The reflection film according to claim 1,

wherein the hardcoat layer is a layer formed of a curable composition for forming a hardcoat layer, containing inorganic particles, and
a content of the inorganic particles is 0.5% by mass or more with respect to a total solid content of the curable composition for forming a hardcoat layer.

**6.** The reflection film according to claim 5,
wherein an average primary particle diameter of the inorganic particles is 40 nm or more.

7. The reflection film according to claim 5,
wherein an average primary particle diameter of the inorganic particles is 40 nm or more and less than 200 nm.

8. The reflection film according to claim 1,
wherein a surface roughness Sa1 of a component with a wavelength of 2.5 μm or less on a surface of the hardcoat layer on a side opposite to the reflective layer is 0.30 nm or more.

9. The reflection film according to claim 1,
wherein a surface roughness Sa2 of a component with a wavelength of 10 μm or more on a surface of the hardcoat layer on a side opposite to the reflective layer is 2.0 nm or less.

10. The reflection film according to claim 1, further comprising:
a transparent substrate.

11. The reflection film according to claim 10,
wherein the transparent substrate is a cellulose acylate film.

12. The reflection film according to claim 1, further comprising:
a retardation layer.

13. The reflection film according to claim 12, further comprising:

a polarization conversion layer,
wherein the retardation layer, the reflective layer, and the polarization conversion layer are arranged in this order.

14. The reflection film according to claim 1, further comprising:
a matte layer between the pressure-sensitive adhesive layer and the reflective layer.

15. The reflection film according to claim 14,
wherein a surface roughness Sa1 of a component with a wavelength of 2.5 μm or less on a surface of the matte layer on a side opposite to the reflective layer is 0.30 nm or more.

16. A laminate comprising:

the reflection film according to any one of claims 1 to 15; and
a protective film laminated on a surface of the pressure-sensitive adhesive layer in the reflection film on a side opposite to the reflective layer.

17. The laminate according to claim 16,
wherein a difference in thermal contraction rate between the reflection film and the protective film at 140°C is less than 1.5%.

18. A windshield glass comprising:

a glass plate; and
the reflection film according to any one of claims 1 to 15,
wherein the glass plate and the reflection film are bonded to each other through the pressure-sensitive adhesive layer.

19. An image display system comprising:

the windshield glass according to claim 18; and
a projector irradiating a projection image light onto the windshield glass on a side of the reflection film.

20. A reflection film comprising, in the following order:

a hardcoat layer;
a reflective layer reflecting light in a wavelength-selective manner; and

a heat seal layer laminated on one side of the reflective layer,
wherein the reflective layer is formed of a composition containing a polymerizable liquid crystal compound, and
the heat seal layer contains a thermoplastic resin or an elastomer.

**21.** The reflection film according to claim 20,
wherein the heat seal layer is a layer formed of a composition containing a polymerization initiator.

**22.** The reflection film according to claim 21,
wherein the composition further contains a polymerizable compound.

**23.** The reflection film according to claim 22,

wherein the polymerizable liquid crystal compound has an ethylenically unsaturated polymerizable group, and
the polymerizable compound has an ethylenically unsaturated polymerizable group.

**24.** A reflection film comprising, in the following order:

a hardcoat layer;
a reflective layer reflecting light in a wavelength-selective manner;
a polarization conversion layer; and
a heat seal layer laminated on one side of the polarization conversion layer,
wherein the polarization conversion layer is formed of a composition containing a polymerizable liquid crystal compound, and
the heat seal layer contains a thermoplastic resin or an elastomer.

**25.** The reflection film according to claim 24,
wherein the heat seal layer is a layer formed of a composition containing a polymerization initiator.

**26.** The reflection film according to claim 25,
wherein the composition further contains a polymerizable compound.

**27.** The reflection film according to any one of claims 22, 23, and 26,
wherein a content of the polymerizable compound is 5% to 80% by mass with respect to a solid content of the composition.

**28.** The reflection film according to any one of claims 22, 23, and 26,
wherein an I/O ratio of the polymerizable compound is 0.4 or more.

**29.** The reflection film according to any one of claims 20 to 26,
wherein a moisture content of the heat seal layer at 25°C and 60 %RH is 2.0% or less.

**30.** A windshield glass comprising:

a glass plate; and
the reflection film according to any one of claims 20 to 26,
wherein the glass plate and the reflection film are bonded to each other through the heat seal layer.

**31.** An image display system comprising:

the windshield glass according to claim 30; and
a projector irradiating a projection image light onto the windshield glass on a side of the reflection film.

FIG. 1

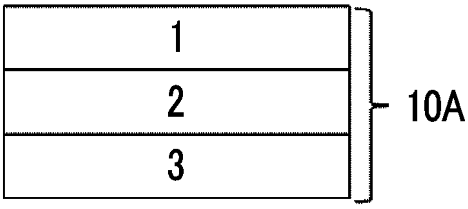


FIG. 2

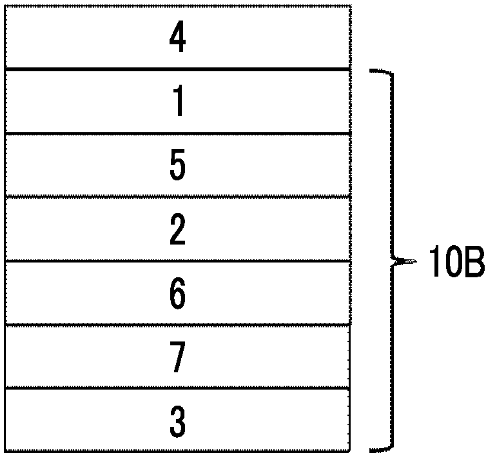


FIG. 3

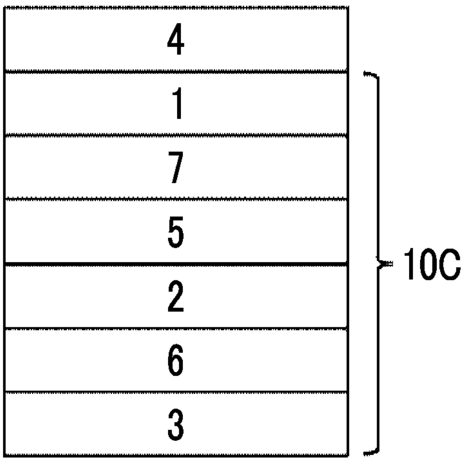

FIG. 4

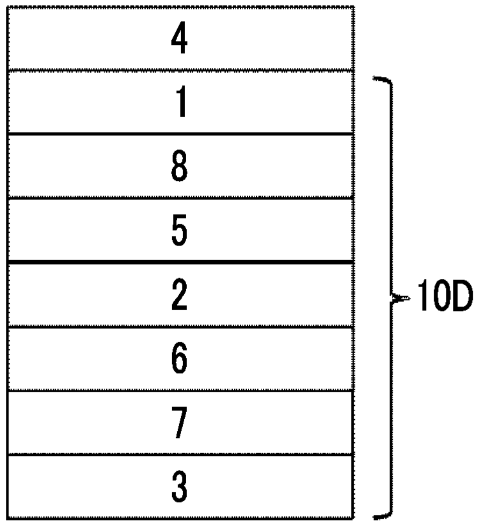


FIG. 5

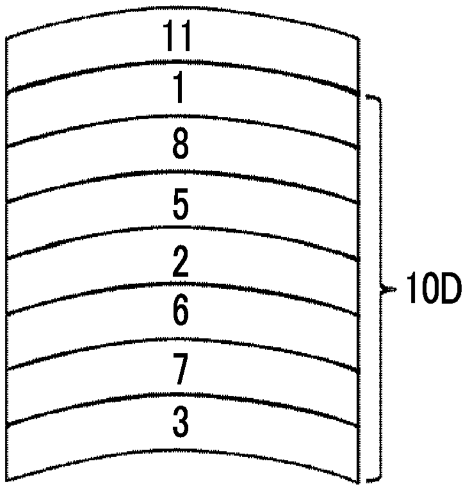


FIG. 6

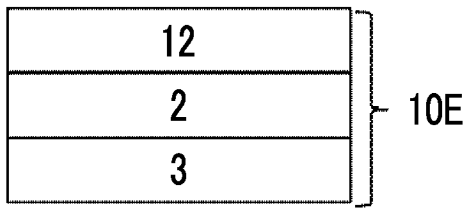

FIG. 7

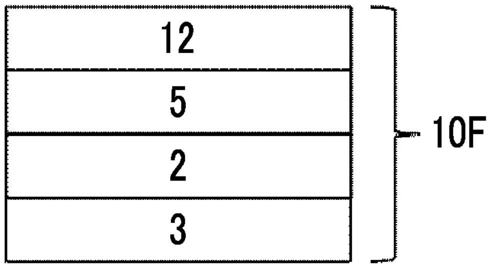


FIG. 8

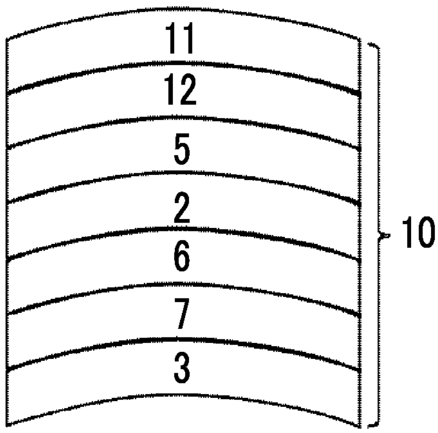

## INTERNATIONAL SEARCH REPORT

International application No.
**PCT/JP2023/015360**

**A. CLASSIFICATION OF SUBJECT MATTER**

***G02B 1/14***(2015.01)i; ***B32B 7/023***(2019.01)i; ***B32B 23/08***(2006.01)i; ***B32B 27/00***(2006.01)i; ***B60J 1/00***(2006.01)i; ***B60J 1/02***(2006.01)i; ***C03C 17/32***(2006.01)i; ***C03C 27/12***(2006.01)i; ***G02B 5/08***(2006.01)i; ***G02B 5/26***(2006.01)i; ***G02B 5/30***(2006.01)i
FI: G02B1/14; B32B7/023; B32B23/08; B32B27/00 M; B32B27/00 N; B60J1/00 H; B60J1/02 M; C03C17/32 C; C03C27/12 Q; G02B5/08 A; G02B5/26; G02B5/30

According to International Patent Classification (IPC) or to both national classification and IPC

**B. FIELDS SEARCHED**

Minimum documentation searched (classification system followed by classification symbols)

G02B1/14; B32B7/023; B32B23/08; B32B27/00; B60J1/00; B60J1/02; C03C17/32; C03C27/12; G02B5/08; G02B5/26; G02B5/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2021-56329 A (FUJIFILM CORP) 08 April 2021 (2021-04-08) paragraphs [0012], [0151]-[0168], example 3 | 1-7, 10-11, 16-19 |
| Y | paragraphs [0012], [0151]-[0168], example 3 | 8-9, 12-13 |
| Y | JP 2015-004937 A (TOPPAN PRINTING CO LTD) 08 January 2015 (2015-01-08) paragraphs [0019]-[0022], [0076], table 1 | 8-9 |
| Y | WO 2020/080355 A1 (FUJIFILM CORP) 23 April 2020 (2020-04-23) paragraphs [0097]-[0113] | 12-13 |
| Y | WO 2021/200433 A1 (FUJIFILM CORP) 07 October 2021 (2021-10-07) paragraphs [0092]-[0110] | 12-13 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 June 2023** | **27 June 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No. **PCT/JP2023/015360**

**Box No. III Observations where unity of invention is lacking (Continuation of item 3 of first sheet)**

This International Searching Authority found multiple inventions in this international application, as follows:

Document 1: JP 2021-56329 A (FUJIFILM CORP) 08 April 2021 (2021-04-08) paragraphs [0012], [0151]-[0168], example 3 (Family: none)
Document 2: JP 2015-004937 A (TOPPAN PRINTING CO LTD) 08 January 2015 (2015-01-08) paragraphs [0019]-[0022], [0076], table 1 (Family: none)
Document 3: WO 2020/080355 A1 (FUJIFILM CORP) 23 April 2020 (2020-04-23) paragraphs [0097]-[0113] & US 2021/0263314 A1 paragraphs [0201]-[0220] & EP 3869245 A1 & CN 112840244 A
Document 4: WO 2021/200433 A1 (FUJIFILM CORP) 07 October 2021 (2021-10-07) paragraphs [0092]-[0110] (Family: none)

On the basis of document 1, it is recognized that the number of inventions in the international application is 3.

(Invention 1) Claims 1-13 and 16-19

Document 1 discloses a "head-up display system having a projector for projecting projection light onto a projection image display member (corresponding to a "reflective film") of windshield glass, wherein the projection image display member includes, in this order, an OCA (manufactured by Nichiei Kakoh Co., Ltd., MHM-UVC15 (thickness 15 μm); adhesive layer)/a cholesteric liquid crystal layer-polarization conversion layer (a selective reflective layer)/a polarization conversion layer/a TAC film (a transparent substrate)/a hard coat layer (thickness: 6.0 μm, containing 22.5 parts by mass of 3,4-epoxycyclohexylmethyl methacrylate and silica particle dispersion with an average secondary particle diameter of 190 nm), and the windshield glass is configured such that the projection image display member is laminated on the glass with the OCA therebetween." Also, a mixture 1 contained in the cholesteric liquid crystal layer-polarization conversion layer disclosed in document 1 is the same as a mixture 1 contained in a reflective layer-forming composition according to the present application. Accordingly, claims 1-7 lack novelty in light of document 1 and thus do not have a special technical feature. However, claim 8 dependent on claim 1 has the special technical feature in which "on the surface of the hard coat layer opposite to the reflective layer, a surface roughness Sa1 of a component having a wavelength of 2.5 μm or less is 0.30 nm or more." Therefore, claims 1-8 are classified as invention 1.

In addition, claims 10-11 and 16-19 lack novelty in light of document 1 and do not have a special technical feature, and are thus classified as invention 1.

Also, claim 9 is technically related to claim 8 classified as invention 1 and is thus classified as invention 1.

Also, claims 12-13 are an invention derived by adding a well-known feature to claim 1 classified as invention 1 and are thus classified as invention 1.

(Invention 2) Claims 14-15

Claim 14 has the special technical feature of "further comprising a matte layer between the adhesive layer and the reflective layer." Also, it cannot be said that claim 14 has a special technical feature identical or corresponding to that of claim 8 classified as invention 1. Also, claim 14 is not dependent on claim 8. Therefore, claim 14 is classified as invention 2.

In addition, claim 15 is dependent on claim 14 and is thus classified as invention 2.

(Invention 3) Claims 20-31

Claim 20 has the special technical feature of "having, in this order, a heat seal layer laminated on one side of the reflective layer, wherein the reflective layer is formed using a composition that contains a polymerizable liquid crystal compound, and the heat seal layer includes a thermoplastic resin or elastomer." Also, it cannot be said that claim 20 has a special technical feature identical or corresponding to that of claim 8 classified as invention 1. Also, claim 20 is not dependent on claim 8. Therefore, claim 20 is classified as invention 3.

In addition, claims 21-31 are dependent on claim 20 and are thus classified as invention 3.

**INTERNATIONAL SEARCH REPORT**

| International application No. |
| --- |
| **PCT/JP2023/015360** |

**Box No. III Observations where unity of invention is lacking (Continuation of item 3 of first sheet)**

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **claims 1-13 and 16-19**

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
**Information on patent family members**

International application No.
**PCT/JP2023/015360**

| Patent document cited in search report | Publication date (day/month/year) | Patent family member(s) | Publication date (day/month/year) |
|---|---|---|---|
| JP 2021-56329 A | 08 April 2021 | (Family: none) | |
| JP 2015-004937 A | 08 January 2015 | (Family: none) | |
| WO 2020/080355 A1 | 23 April 2020 | US 2021/0263314 A1<br>paragraphs [0201]-[0220]<br>EP 3869245 A1<br>CN 112840244 A | |
| WO 2021/200433 A1 | 07 October 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2016052367 A1
- US 4683327 A
- US 5622648 A
- US 5770107 A
- WO 95022586 A
- WO 95024455 A
- WO 9700600 A
- WO 98023580 A
- WO 98052905 A
- JP 1272551 A
- JP H1272551 A
- JP 6016616 A
- JP H6016616 A
- JP 7110469 A
- JP H7110469 A
- JP 11080081 A
- JP H11080081 A
- JP 2001328973 A
- WO 2015115390 A
- WO 2015147243 A
- WO 2016035873 A
- JP 2015163596 A
- JP 2016053149 A
- WO 2016047648 A
- JP 2013112631 A
- JP 2010070543 A
- JP 4725516 B
- JP 2003287623 A
- JP 2002302487 A
- JP 2002080478 A
- JP 2002080851 A
- JP 2010181852 A
- JP 2014034581 A
- JP 2002179668 A
- JP 2002179669 A
- JP 2002179670 A
- JP 2002179681 A
- JP 2002179682 A
- JP 2002338575 A
- JP 2002338668 A
- JP 2003313189 A
- JP 2003313292 A
- US 2367661 A
- US 2367670 A
- US 2448828 A
- US 2722512 A
- US 3046127 A
- US 2951758 A
- US 3549367 A
- JP 60105667 A
- JP S60105667 A
- US 4239850 A
- JP 63040799 B
- JP S63040799 B
- JP 5029234 B
- JP H5029234 B
- JP 10095788 A
- JP H10095788 A
- JP 10029997 A
- JP H10029997 A
- JP 2001233842 A
- JP 2000080068 A
- JP 2006342166 A
- JP 2013114249 A
- JP 2014137466 A
- JP 4223071 B
- JP 2010262028 A
- JP 2014500852 A
- JP 2000066385 A
- JP 4454067 B
- US 4212970 A
- JP 2012208494 A
- JP 2007272185 A
- JP 2012203237 A
- JP 2013113913 A
- JP 2007264221 A
- WO 2003022906 A
- WO 2005113690 A
- JP 6306326 A
- JP H6306326 A
- JP 2007145884 A
- JP 2003112383 A
- JP 2007256844 A
- JP 10017614 A
- JP H10017614 A
- JP 8143806 A
- JP H8143806 A
- JP 8283320 A
- JP H8283320 A
- JP 2000186079 A
- JP 2000327672 A
- JP 2004315778 A
- JP 2005029632 A
- JP 2009204725 A
- JP 2013111835 A
- JP 5175831 B
- JP 2012229412 A
- JP 4962661 B

- US 20130100378 A
- JP 2009269301 A
- JP 2015224267 A
- JP 2007137028 A
- JP 4889335 B
- JP 11123732 A
- JP H11123732 A
- JP 2003276037 A
- WO 2014112575 A
- JP 2006122889 A


**Non-patent literature cited in the description**


- **YOSHIO KODA**. Organic Concept Map - Basic and Application. San-kyo Publishing Co., Ltd., 1984
- **HONMA et al.** *New Edition of Organic Concept Diagram: Basics and Applications*
- *Makromol. Chem.*, 1989, vol. 190, 2255
- *Advanced Materials*, 1993, vol. 5, 107
- Chiral Agents for TN and STN. Liquid Crystal Device Handbooks. 1989, 199